# EUROPEAN PATENT APPLICATION

(11) **EP 3 511 096 A1**
(43) Date of publication of application: **17.07.2019**
(21) Application number: 17848774.0
(22) Date of filing: 05.09.2017
(51) Int. Cl.: B23B 27/00, B23B 29/12, B23B 51/00, B23Q 5/04, B23Q 17/09

(54) **CUTTING HEAD, CUTTING BITE, AND CUTTING SYSTEM**

(30) Priority: 09.09.2016 JP 2016177084; 23.06.2017 JP 2017123508
(71) Applicant: Nejilaw Inc., Bunkyo-ku, Tokyo 1130033 (JP)
(72) Inventor: MICHIWAKI Hiroshi, Tokyo 108-6028 (JP)
(74) Representative: Mozzi, Matteo
(86) International application number: PCT/JP2017/032003
(87) International publication number: WO 2018/047834

(57) **Abstract**

The present invention is a cutting tool for cutting an object, or a holder for retaining the cutting tool, and is configured so that a current-carrying path for measuring a change in a member of the cutting tool or the holder is formed directly or indirectly in all or a portion of the member. This configuration makes it possible to objectively perceive a change occurring in the cutting tool or the holder or a change in the surrounding environment thereof at extremely low cost.

## Description

### Technical Field

Embodiments of the present invention relate to a cutting tool used for cutting an object, and a method of forming a conduction path for patterning in such a member.

### Background Art

Conventionally, a cutting device is used to cut an object. The cutting device includes, diverse devices, for example, a milling machine, a machining center, a drilling machine, a boring machine, a cutting machine, a shaping machine, a flat milling machine, a lathe, a threading machine, a grinding machine, a tapping machine, a gun drill, a contamination, a band saw, a jigsaw, and a chip saw. The cutting device cuts the object by relatively moving the object and a cutting tool such as a drill, an end mill, a tap, a bite, a tip, a saw, or a cutter by means of a driver.

### Disclosure of Invention

### Technical Goals

In cutting, a cutting tool is generally repaired/replaced when the cutting tool is damaged, and it is difficult to prevent an accident or a financial loss resulting therefrom.

Further, when the cutting tool is worn, it is also difficult to determine when or whether to replace the cutting tool.

As a result of keen research performed by the present inventor(s) in view of the above issue, the present invention is directed to implementing cutting tool management, maintenance timing determination, and cutting quality management by objectively measuring a circumstance of a cutting tool or holder.

### Technical solutions

According to an aspect of the present invention, there is provided a cutting head of a conduction path portion, the cutting head being a cutting tool for cutting an object or a holder for retaining the cutting tool, wherein a conduction path for measuring a change in a member of the cutting tool or the holder is formed directly or indirectly in the entirety or a portion of the member.

In relation to the cutting head, the member includes a recess in which the conduction path is formed.

In relation to the cutting head, the recess is configured to define a wiring pattern of the conduction path.

In relation to the cutting head, the entire series of conduction path patterns are provided in a series of groove-shaped recesses corresponding to the series of conduction path patterns.

In relation to the cutting head, the conduction path is formed to reciprocate along a predetermined direction.

In relation to the cutting head, a plurality of conduction paths is formed independently.

In relation to the cutting head, the cutting head includes a first conduction path formed to reciprocate in a first direction, and a second conduction path formed to reciprocate in a second direction perpendicular to the first direction.

In relation to the cutting head, the first conduction path and the second conduction path are arranged in parallel.

In relation to the cutting head, a plurality of conduction paths is formed in a shape of matrices.

In relation to the cutting head, the conduction path is configured to include at least two conductive portions with different electric resistance values and/or electric resistivity values.

In relation to the cutting head, one of the conductive portions of the conduction path is an electrically good conductor, and the other one of the conductive portions is an electrical resistor.

In relation to the cutting head, the conduction path is configured to include a first conductive material portion and a second conductive material portion formed of different materials.

In relation to the cutting head, the conduction path is configured by providing a series of portions of different electric resistivity values and/or conductive material portions.

In relation to the cutting head, a plurality of conduction paths is stacked.

In relation to the cutting head, the conduction path includes a planar resistance wiring formed in a shape of a plane, and at least one pair of electrodes connected to the planar resistance wiring.

In relation to the cutting head, the conduction path may include a plurality of conductive portions disposed with intervals therebetween in a surface direction of the planar resistance wiring.

In relation to the cutting head, the member has a columnar or cylindrical surface, wherein the conduction path is formed on the surface.

In relation to the cutting head, the conduction path is formed in an axial direction and/or a circumferential direction of the surface.

In relation to the cutting head, the cutting tool or the holder is formed of metal, wherein the conduction path is formed through an electrically insulating layer on a surface of the cutting tool or the holder.

In relation to the cutting head, the conduction path is electrically connected to a near field communication (NFC) tag.

In relation to the cutting head, the conduction path is electrically connected to an NFC tag and a feeder.

In relation to the cutting head, the conduction path is deformed together with the cutting tool or the holder to output a change in a stress of the cutting tool or the holder.

In relation to the cutting head, the conduction path is deformed together with the cutting tool or the holder to detect at least one of a vibration, a travel distance, an acceleration, and a temperature of the cutting tool or the holder.

In relation to the cutting head, the conduction path is formed on a surface and/or a rear surface of the cutting tool or the holder.

In relation to the cutting head, the conduction path is formed on a circumferential surface of the cutting tool or the holder.

In relation to the cutting head, a plurality of conduction paths is connected to each other in a shape of matrices.

According to an aspect of the present invention, there is provided a cutting system including the cutting head of the conduction path portion of one described above, and a driver configured to relatively move the object and the cutting tool.

In relation to the cutting system, the cutting system further includes a calculator configured to receive a detected signal of the conduction path.

In relation to the cutting system, the calculator is configured to control the driver based on the detected signal.

In relation to the cutting system, the calculator includes a replacement determiner configured to determine whether a replacement of the cutting tool is necessary or unnecessary based on the detected signal.

In relation to the cutting system, the calculator includes an order instructor configured to generate order information of the cutting tool, when the replacement determiner determines that a replacement is necessary.

In relation to the cutting system, the calculator includes a tool identifier configured to receive identification information of the cutting tool, wherein the order instructor is configured to incorporate the identification information received by the tool identifier into the order information.

In relation to the cutting system, the calculator includes a usage determiner configured to determine whether a usage circumstance of the cutting tool is adequate/inadequate based on the detected signal.

According to an aspect of the present invention, there is provided a cutting system including a cutting tool configured to cut an object, a tool holder configured to retain the cutting tool, a driver configured to relatively move the object and the cutting tool, and a state detector disposed in the cutting tool or the tool holder, the state detector configured to detect at least one of a vibration, a torsion, a movement, an acceleration, and a temperature.

According to an aspect of the present invention, there is provided a cutting system including a cutting tool configured to cut an object, a driver configured to relatively move the object and the cutting tool, and a state detector disposed in the cutting tool, the state detector configured to detect at least one of a vibration, a torsion, a movement, an acceleration, and a temperature.

In relation to the cutting system, the cutting system further includes a calculator configured to receive a detected signal of the state detector.

In relation to the cutting system, the calculator is configured to control the driver based on the detected signal.

In relation to the cutting system, the calculator includes a replacement determiner configured to determine whether a replacement of the cutting tool is necessary or unnecessary based on the detected signal.

In relation to the cutting system, the calculator may include an order instructor configured to generate order information of the cutting tool when the replacement determiner determines that a replacement is necessary.

In relation to the cutting system, the calculator includes a tool identifier configured to receive identification information of the cutting tool, wherein the order instructor is configured to incorporate the identification information received by the tool identifier into the order information.

In relation to the cutting system, the calculator includes a usage determiner configured to determine whether a usage circumstance of the cutting tool is adequate/inadequate based on the detected signal.

According to an aspect of the present invention, there is provided a cutting bite of a conduction path portion, the cutting bite being a cutting bite for cutting an object, the cutting bite in which a conduction path for measuring a change in a nose of the cutting bite and/or a peripheral portion of the nose is formed directly in a range including the nose, wherein the conduction path includes a planar resistance wiring formed in a shape of a plane, and first and second electrodes arranged with intervals therebetween with respect to the planar resistance wiring.

In relation to the cutting bite, the nose is formed at a vertex of a corner provided in a triangular pyramidal shape, and the planar resistance wiring is formed to cover three planes constituting the corner.

In relation to the cutting bite, the planar resistance wiring includes a first planar region configured to cover a first surface forming the triangular pyramidal shape of the corner, a second planar region configured to cover a second surface forming the triangular pyramidal shape of the corner, and a third planar region configured to cover a third surface forming the triangular pyramidal shape of the corner, wherein the first electrode is disposed in the first planar region, and the second electrode is disposed in the second planar region and/or the third planar region.

In relation to the cutting bite, the second electrode is disposed in both of the second planar region and the third planar region.

In relation to the cutting bite, the first electrode disposed in the first planar region has a linear end edge facing the second electrode, and the end edge has an angle with respect to both a boundary of the first surface and the second surface and a boundary of the first surface and the third surface.

In relation to the cutting bite, the second electrode disposed in the second planar region has a linear end edge facing the first electrode, and the end edge of the second electrode disposed in the second planar region has an angle with respect to both a boundary of the second surface and the first surface and a boundary between the second surface and the third surface.

In relation to the cutting bite, the end edge of the second electrode disposed in the second planar region is configured to retreat from the boundary of the second surface and the first surface when retreating from the nose.

In relation to the cutting bite, the second electrode disposed in the third planar region has a linear end edge facing the first electrode, and the end edge of the second electrode disposed in the third planar region has an angle with respect to both a boundary between the third surface and the first surface and a boundary between the third surface and the second surface.

In relation to the cutting bite, the end edge of the second electrode disposed in the second planar region is configured to retreat from the boundary of the third surface and the first surface when retreating from the nose.

In relation to the cutting bite, the first electrode disposed in the first planar region has a linear end edge facing the second electrode, and the end edge is substantially parallel to a boundary of the first surface and the second surface and/or a boundary of the first surface and the third surface.

In relation to the cutting bite, the second electrode disposed in the second planar region has a linear end edge facing the first electrode, and the end edge of the second electrode disposed in the second planar region is substantially parallel to a boundary of the second surface and the first surface.

In relation to the cutting bite, the second electrode disposed in the third planar region has a linear end edge facing the first electrode, and the end edge of the second electrode disposed in the third planar region is substantially parallel to a boundary of the third surface and the first surface.

In relation to the cutting bite, when assuming a planarly unfolded state of a surface of the corner of the triangular pyramidal shape, the first electrode and the second electrode respectively include linear end edges facing each other, and the end edge of the first electrode and the end edge of the second electrode are substantially parallel.

In relation to the cutting bite, the end edge of the first electrode and the end edge of the second electrode have substantially the same length.

In relation to the cutting bite, when assuming a planarly unfolded state of a surface of the corner of the triangular pyramidal shape, the first electrode and the second electrode respectively include linear end edges facing each other, and a width of the planar resistance wiring present between the end edge of the first electrode and the end edge of the second electrode is set to be less than or equal to a length of the end edge of the first electrode and/or a length of the end edge of the second electrode.

### Effects

According to embodiments, a change in a cutting tool or a holder or a change in an environment surrounding the same may be objectively verified with considerably low costs and objectively and remotely monitored.

### Brief Description of Drawings

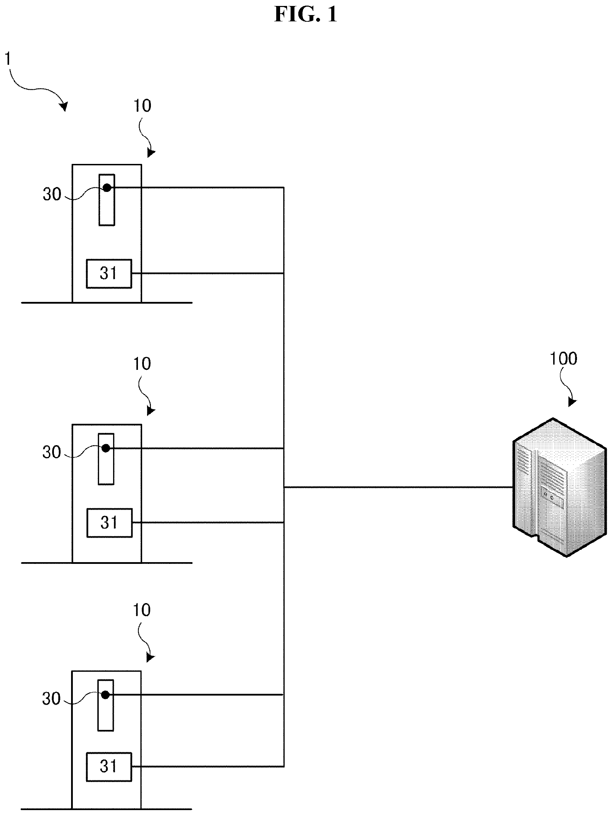

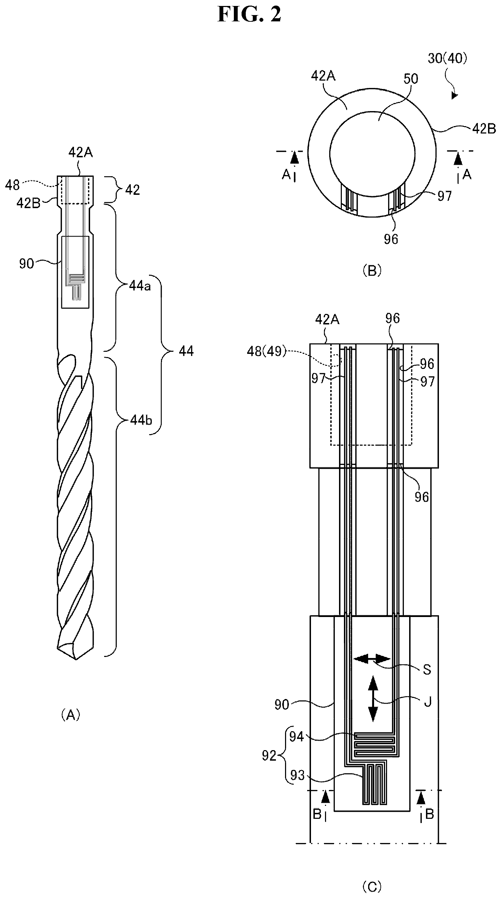

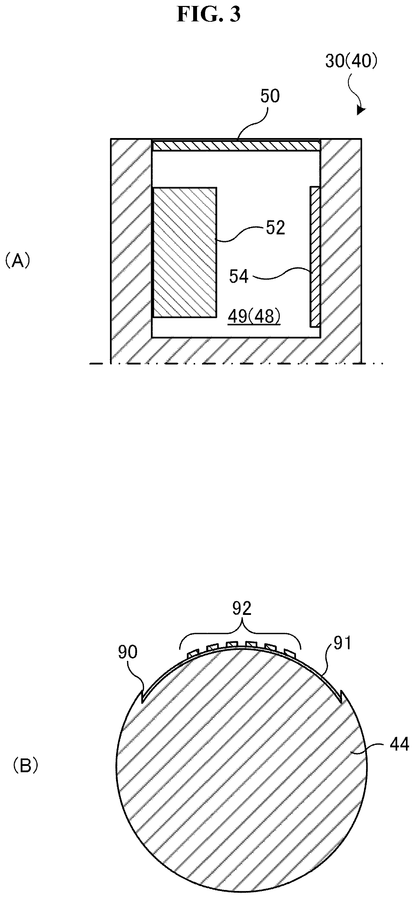

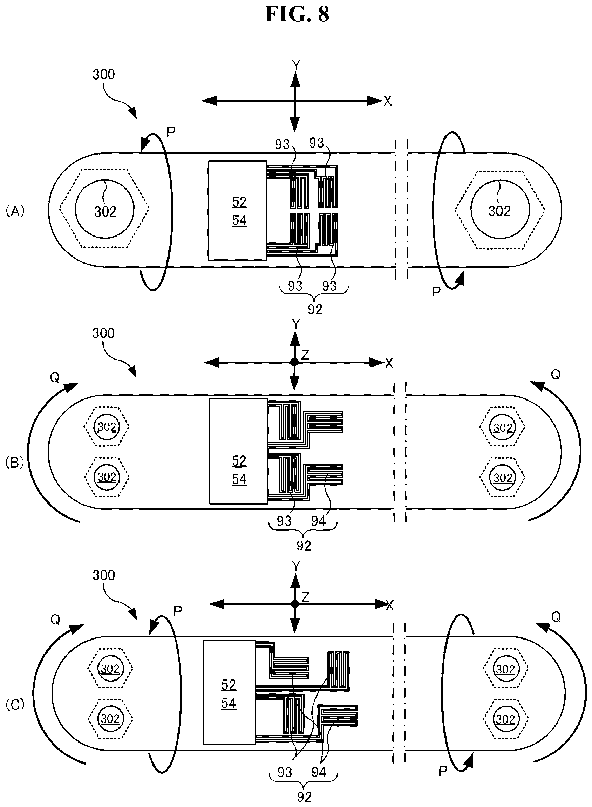

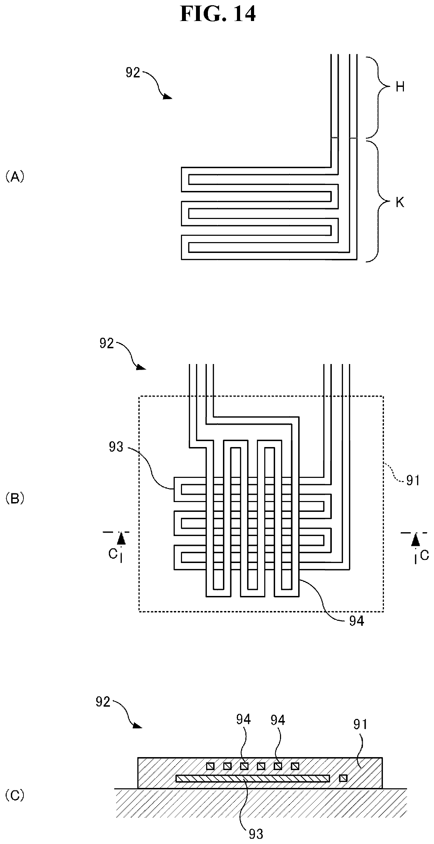

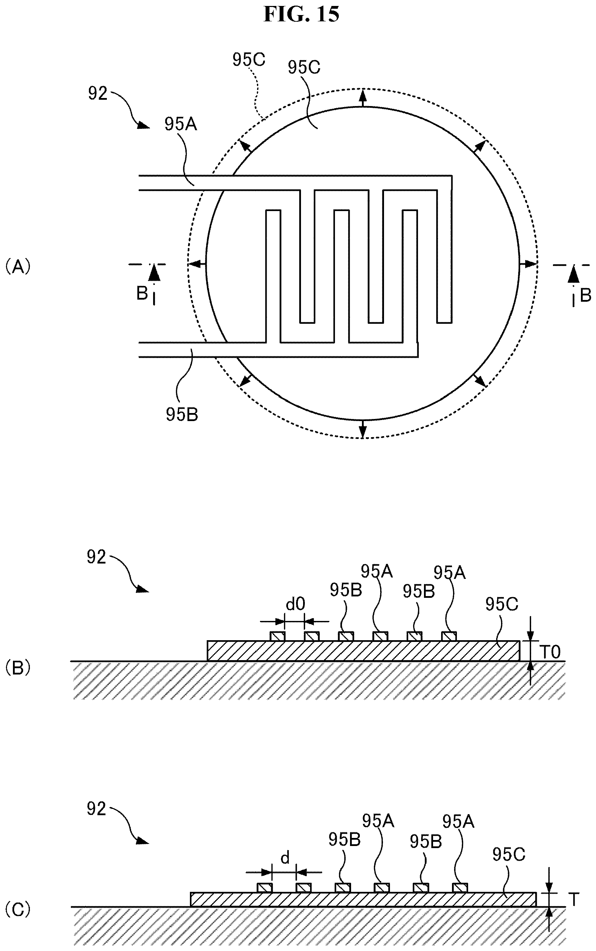

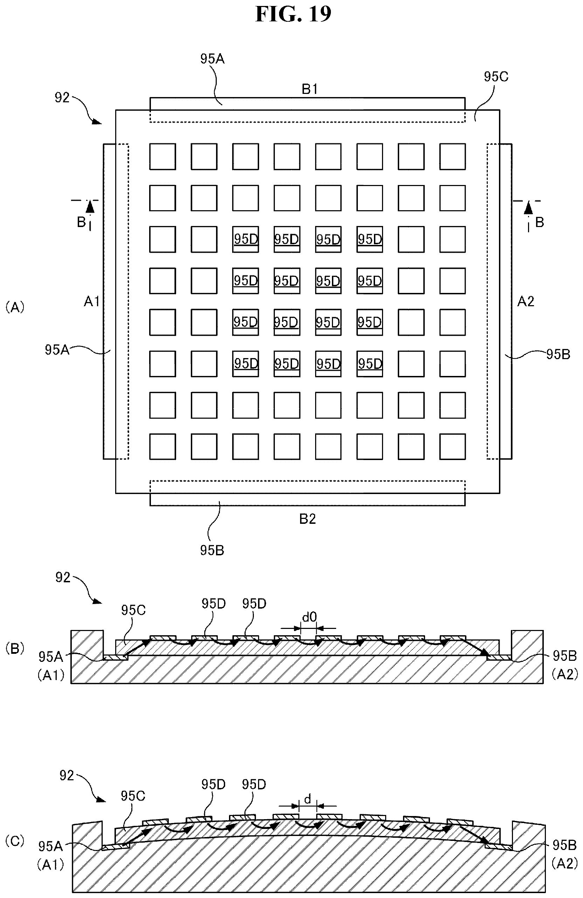

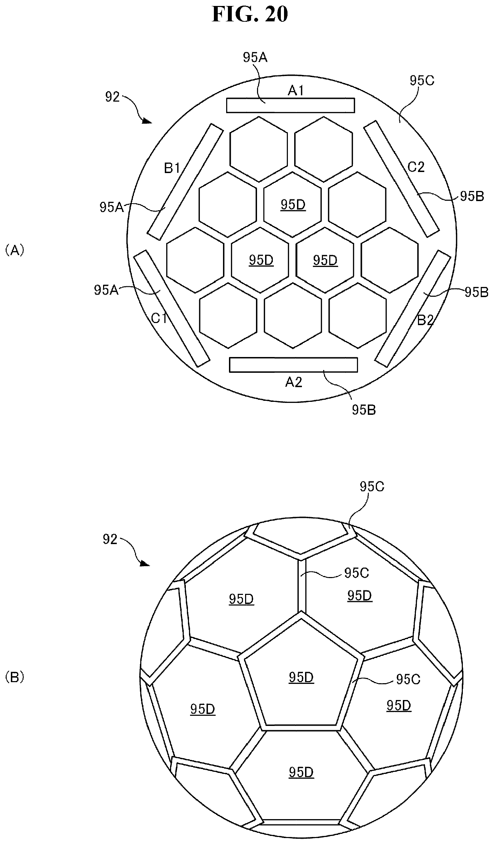

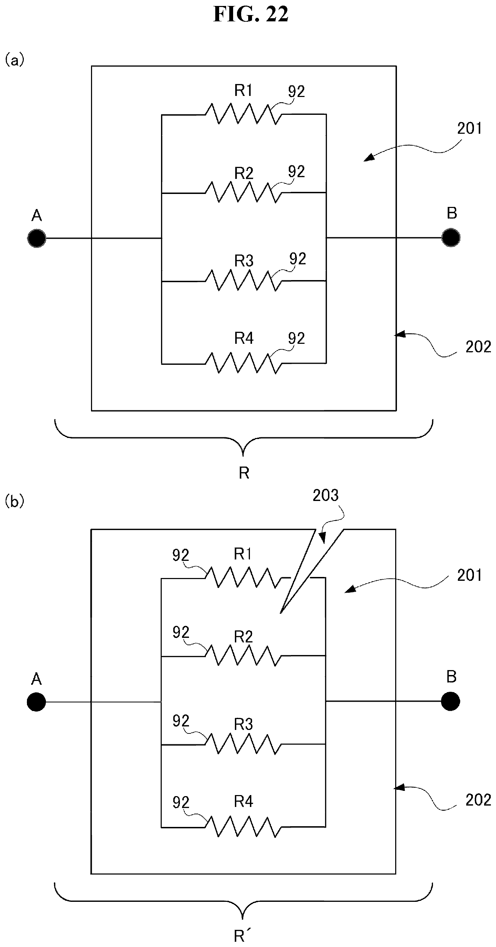

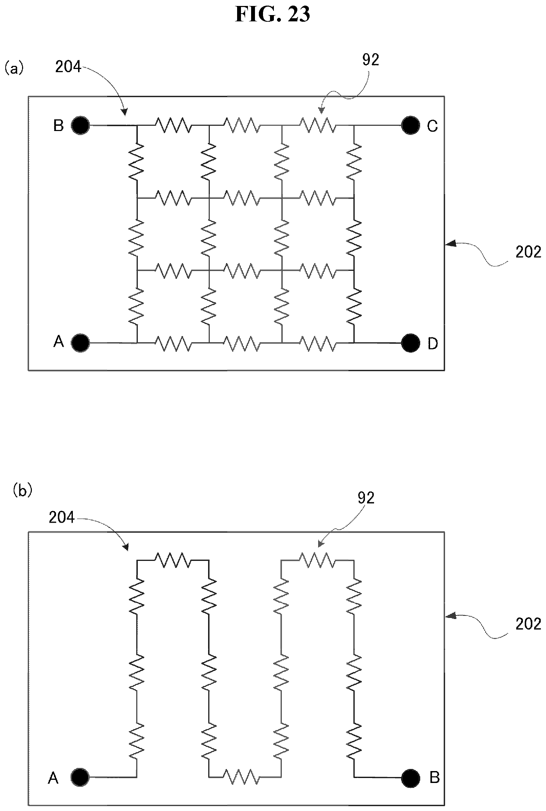

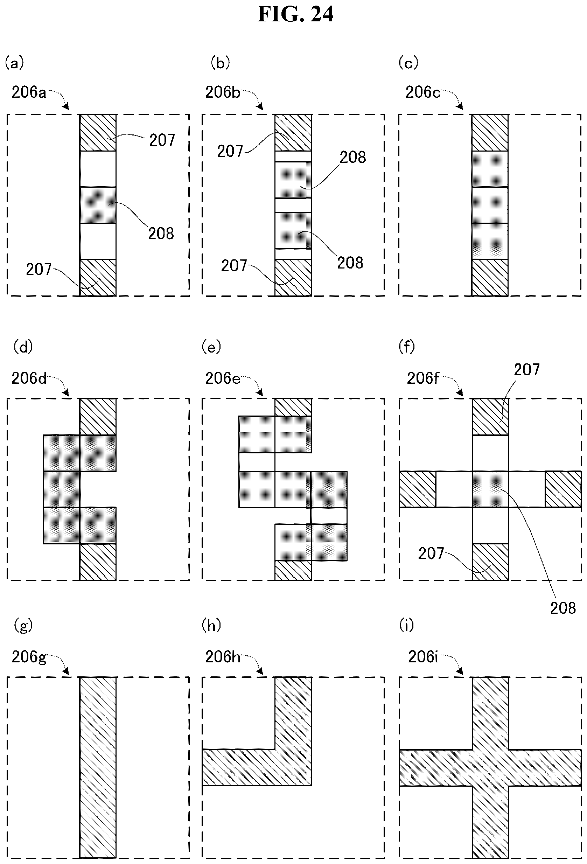

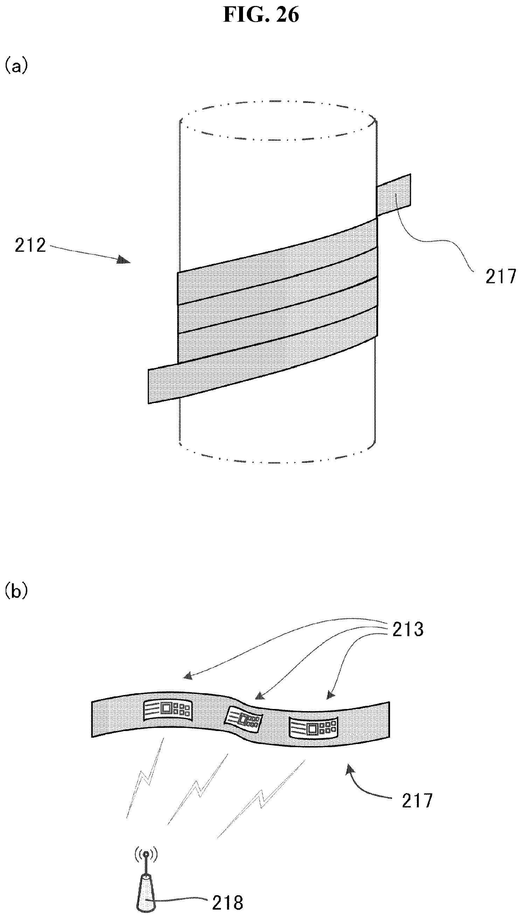

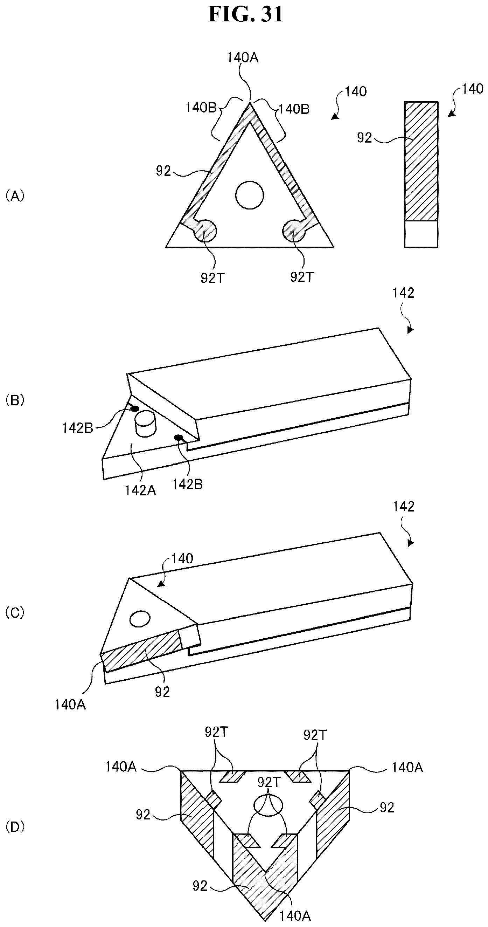

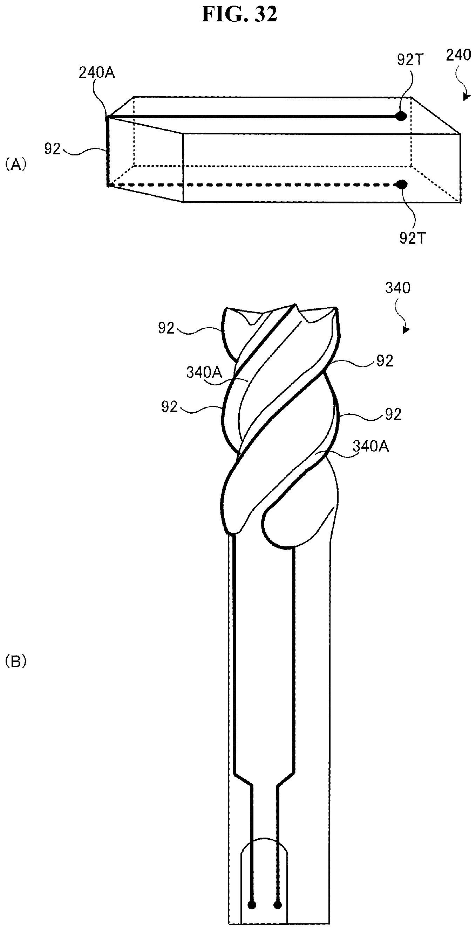

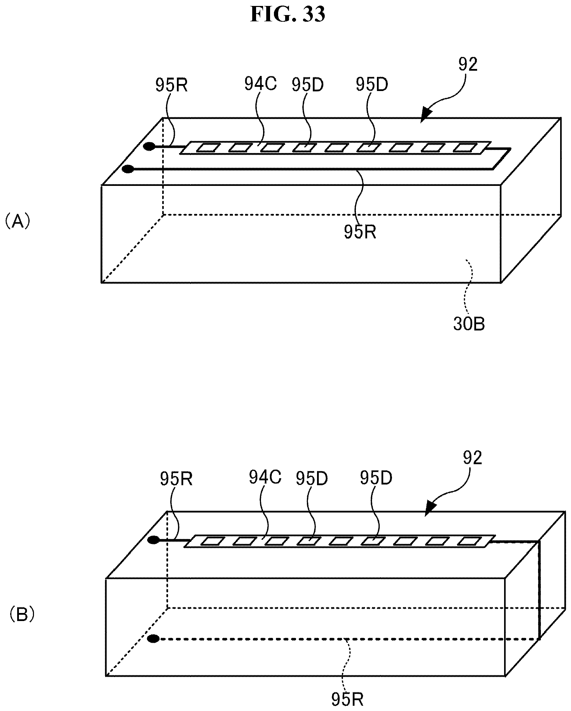

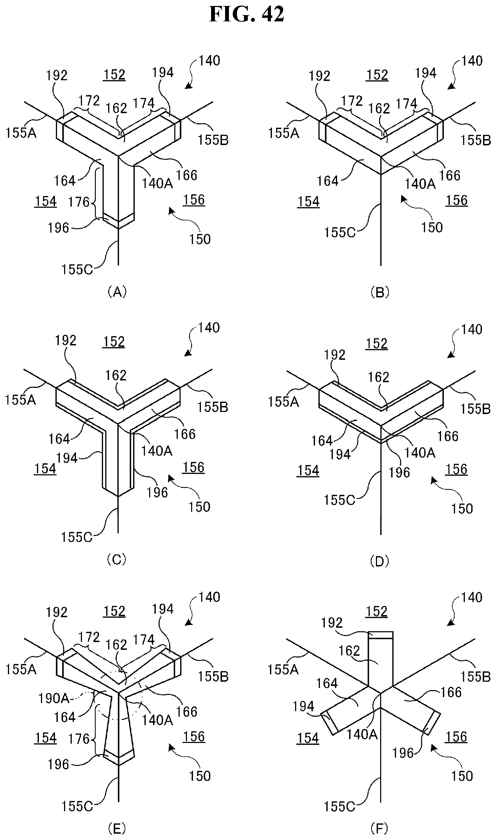

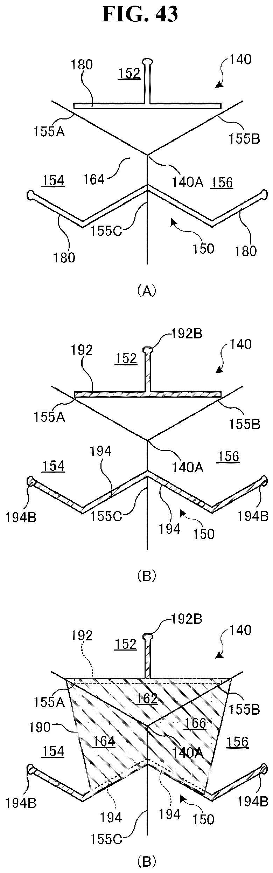

FIG. 1 illustrates an overall configuration of a cutting system using a cutting head of a conduction path portion according to an embodiment of the present invention.
(A) of FIG. 2 is a front view illustrating a drill of a cutting head, (B) of FIG. 2 is a top view of the same drill, and (C) of FIG. 2 is a partially enlarged front view of the same drill.
(A) of FIG. 3 is a cross-sectional view of the same drill cut along an arrow A-A of (B) of FIG. 2, and (B) of FIG. 3 is a cross-sectional view thereof cut along an arrow B-B of (C) of FIG. 2.
FIG. 4 is an enlarged perspective view illustrating a portion of the same drill.
FIG. 5A illustrates a modified example of the same drill, in detail, (A) is a top view thereof, (B) is a front view thereof, and (C) is a cross-sectional view thereof cut along an arrow C-C of (B) of FIG. 5A.
FIG. 5B illustrates a modified example of the same drill, in detail, (A) is an enlarged perspective view of a portion thereof, (B) is a partial cross-sectional view thereof, and (C) through (F) are partial cross-sectional views illustrating a stacking process.
FIG. 5C illustrates a modified example of the same drill, in detail, (A) is a front view thereof, and (B) is a cross-sectional view thereof cut along an arrow B-B of (A) of FIG. 5C.
(A) and (B) of FIG. 5D are partially enlarged front views illustrating modified examples of the same drill.
FIG. 6A is a block diagram illustrating a configuration of a substrate built in the same drill.
(A) through (D) of FIG. 6B are circuit diagrams illustrating configurations of a bridge circuit applied to a conduction path of the same drill.
(A) and (B) of FIG. 6C are circuit diagrams illustrating configurations of a bridge circuit applied to a conduction path of the same drill.
(A) of FIG. 7 is a block diagram illustrating a hardware configuration of an information collection device of a cutting system, and (B) of FIG. 7 is a block diagram illustrating a functional configuration of the information collection device.
(A) through (C) of FIG. 8 are front views illustrating a conduction-path-attached-member for attaching a conduction path to a cutting head.

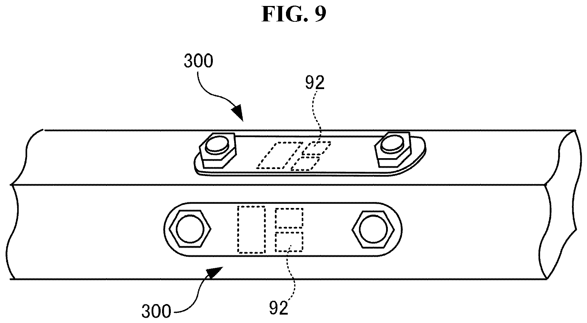

FIG. 9 is an enlarged perspective view illustrating a cutting head to which the same conduction-path-attached-member is applied.

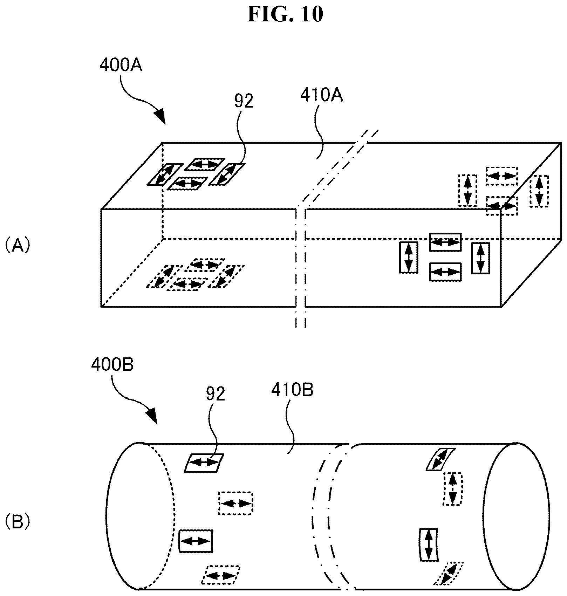

FIG. 10 illustrates a formation example of the same conduction path.

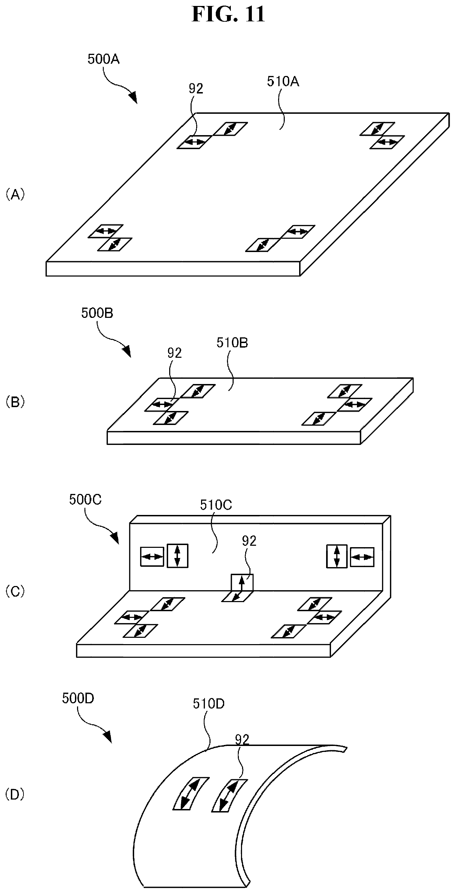

FIG. 11 illustrates a formation example of the same conduction path.

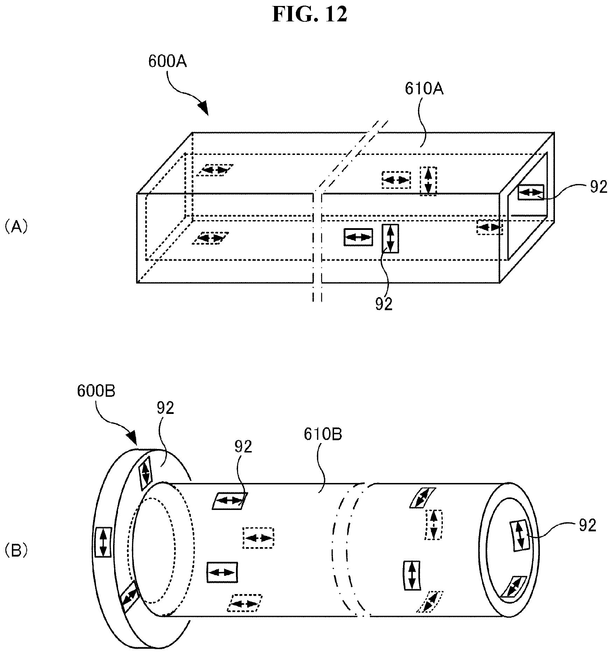

FIG. 12 illustrates a formation example of the same conduction path.

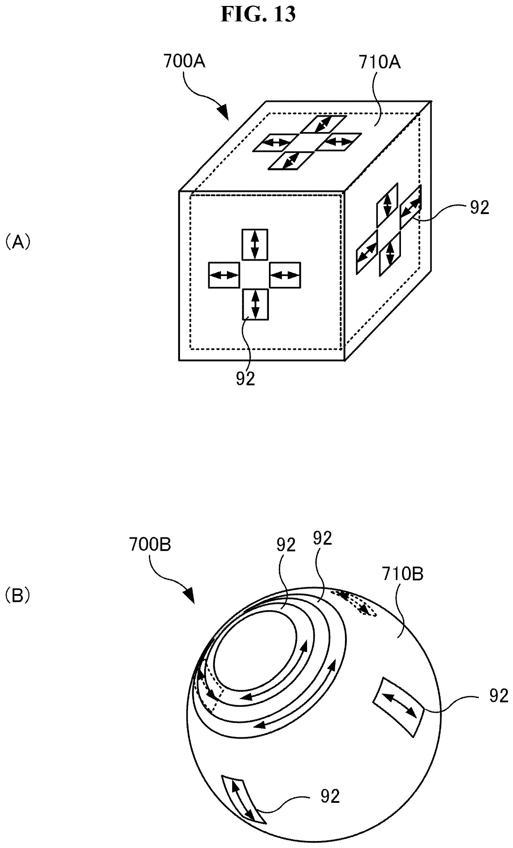

FIG. 13 illustrates a formation example of the same conduction path.
(A) and (B) of FIG. 14 illustrate modified examples of the same conduction path, and (C) of FIG. 14 is a cross-sectional view thereof cut along an arrow C-C of (B) of FIG. 14.
(A) of FIG. 15 illustrates a modified example of the same conduction path, and (B) and (C) of FIG. 15 are cross-sectional views thereof cut along an arrow B-B of (A) of FIG. 15.

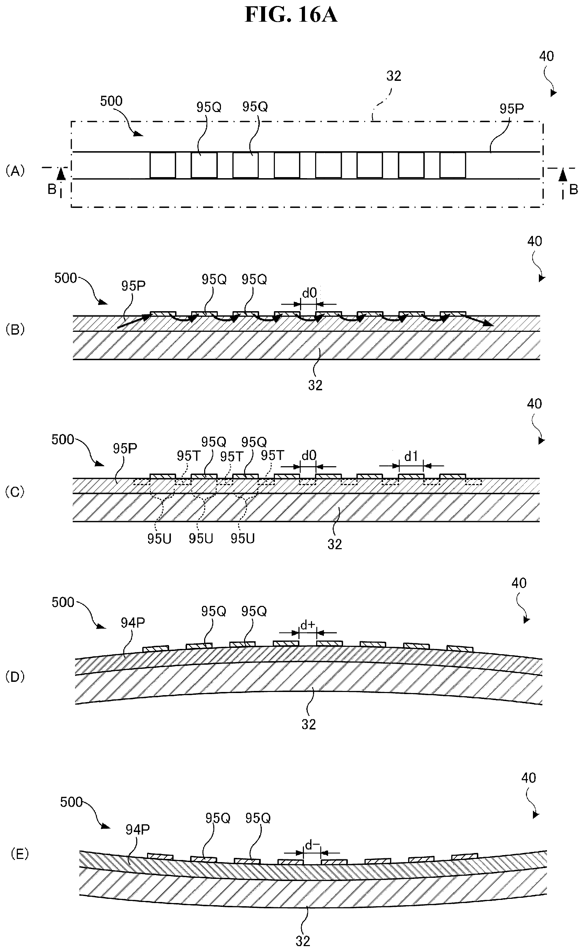

FIG. 16A illustrates a modified example of a sensor structure formed in the same conduction path, in detail, (A) is a plan view thereof, (B) is a cross-sectional view thereof cut along an arrow B-B of the plan view, (C) is a cross-sectional view illustrating an internal structure thereof, and (D) and (E) are cross-sectional views illustrates states thereof when deformed.

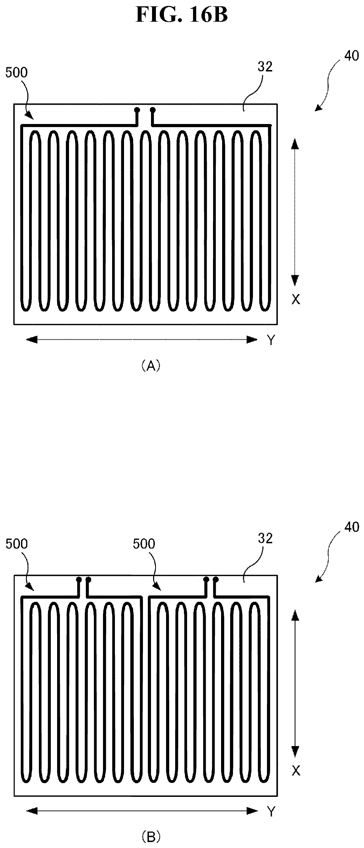

FIG. 16B is a plan view illustrating the same sensor structure applied to a parent material.

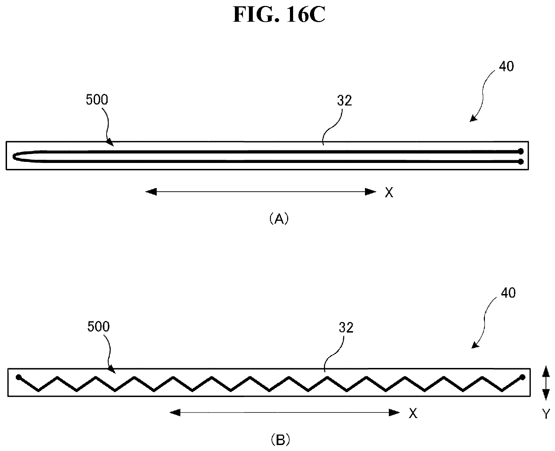

FIG. 16C is a plan view illustrating the same sensor structure applied to a parent material.

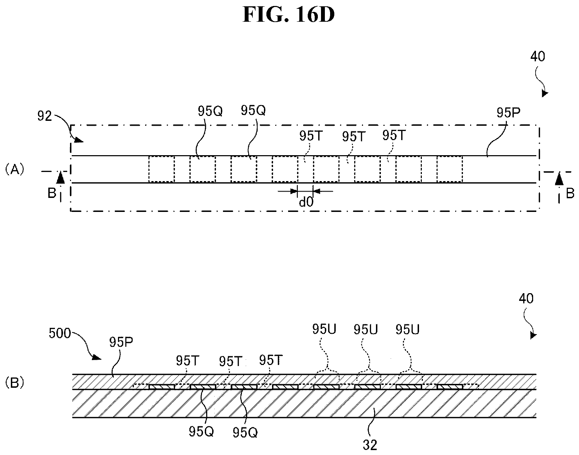

FIG. 16D illustrates another example of the same sensor structure, in detail, (A) is a plan view thereof, and (B) is a cross-sectional view thereof cut along an arrow B-B of the plan view.

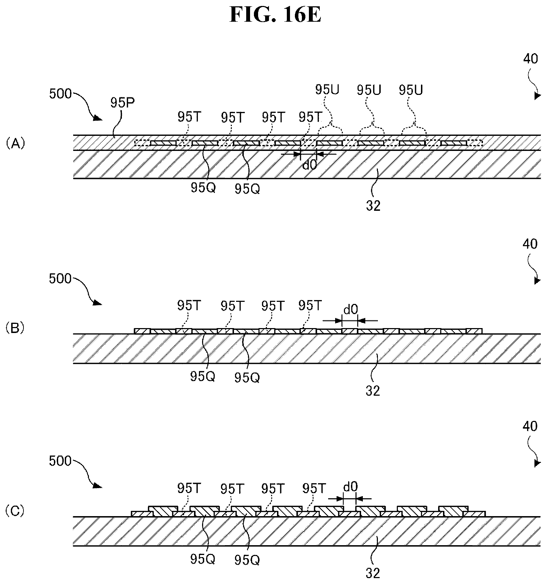

FIG. 16E is a cross-sectional view illustrating another example of the same sensor structure.

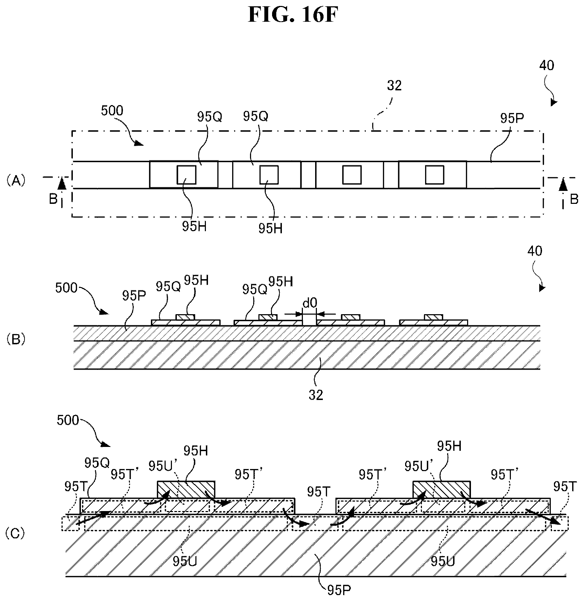

FIG. 16F is a cross-sectional view illustrating another example of the same sensor structure.

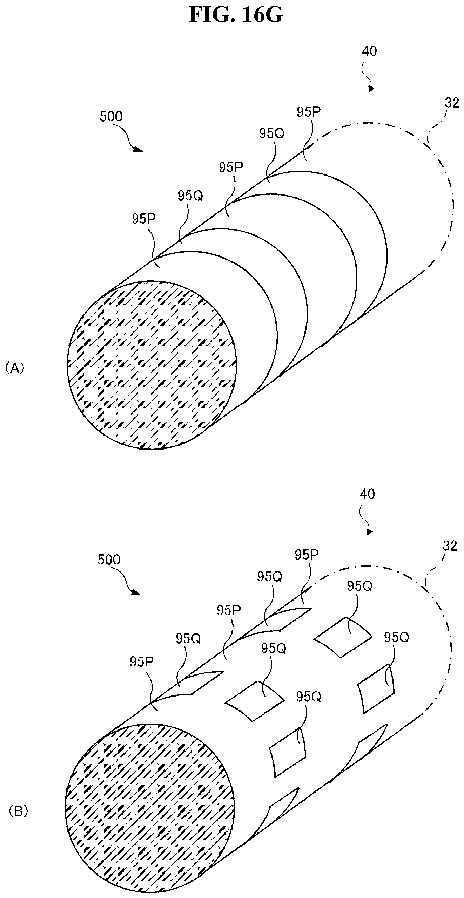

FIG. 16G is a perspective view illustrating the same sensor structure applied to a rod-shaped parent material.

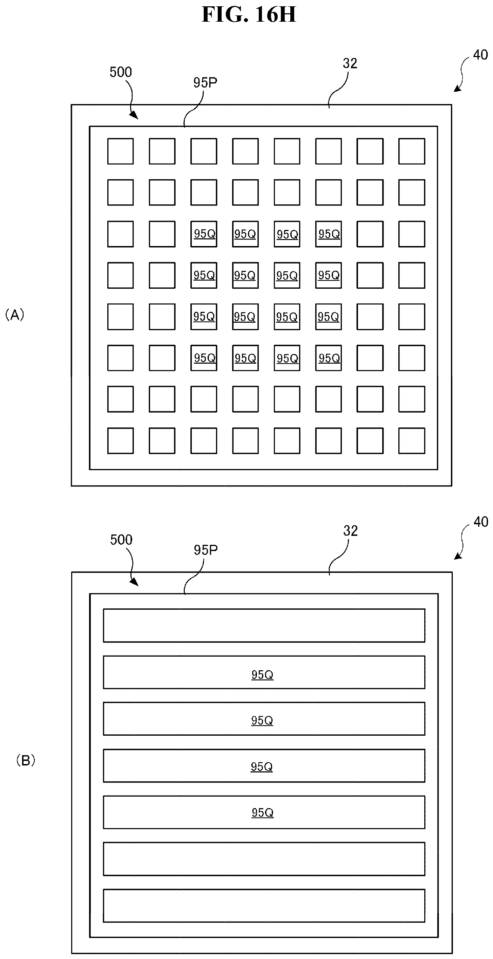

FIG. 16H is a plan view illustrating another example of the same sensor structure.

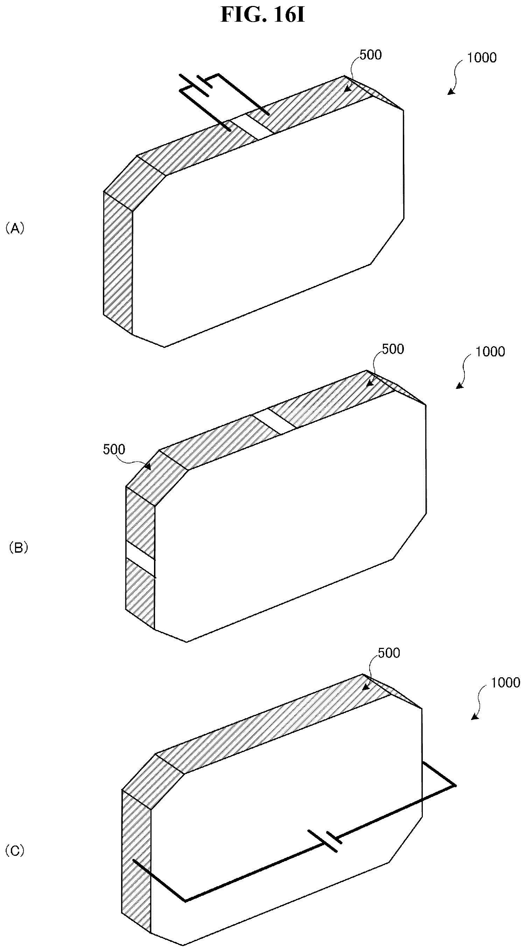

FIG. 16I is a perspective view illustrating an example of applying the same sensor structure to another member.

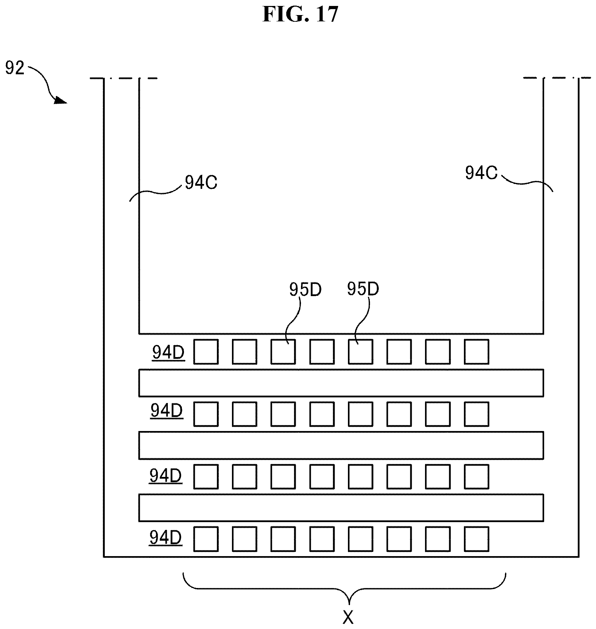

FIG. 17 illustrates a modified example of the same conduction path.

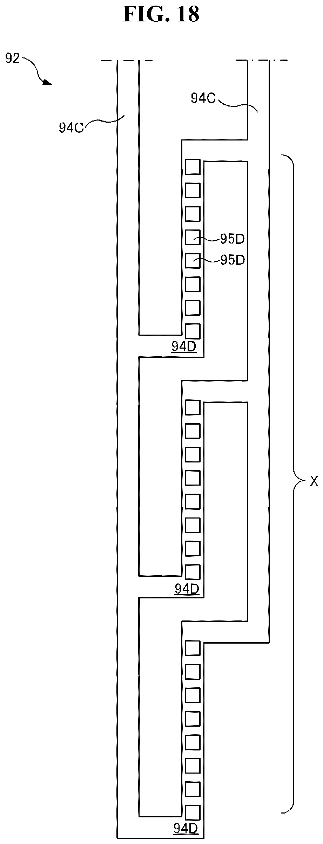

FIG. 18 illustrates a modified example of the same conduction path.
(A) of FIG. 19 illustrates a modified example of the same conduction path, and (B) and (C) of FIG. 19 are cross-sectional views thereof cut along an arrow B-B of (A) of FIG. 19.
(A) and (B) of FIG. 20 illustrate a modified example of the same conduction path.

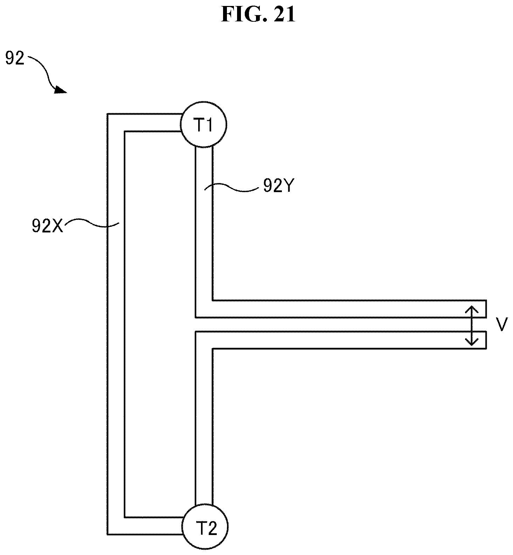

FIG. 21 illustrates a modified example of the same conduction path.
(a) and (b) of FIG. 22 illustrate a conduction circuit including a plurality of conduction paths.
(a) and (b) of FIG. 23 illustrate conduction circuits provided in a shape of two-dimensional (2D) matrices.
(a) through (i) of FIG. 24 illustrate pattern information to be used to form the same conduction circuit.

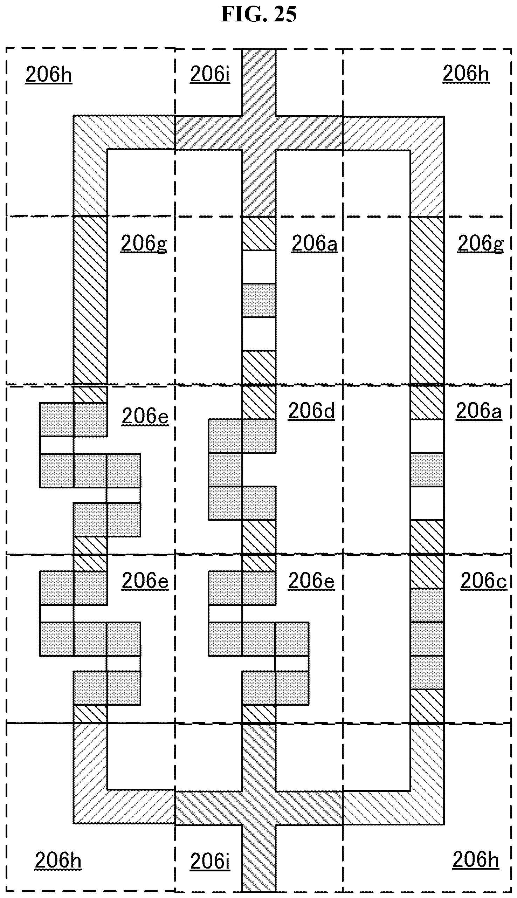

FIG. 25 illustrates a conduction circuit pattern obtained by combining the same pattern information.
(a) and (b) of FIG. 26 are perspective views illustrating a belt-shaped sensor-structure-attached-member being used, and (b) of FIG. 26 further illustrates an example of detection of the same sensor-structure-attached-member.

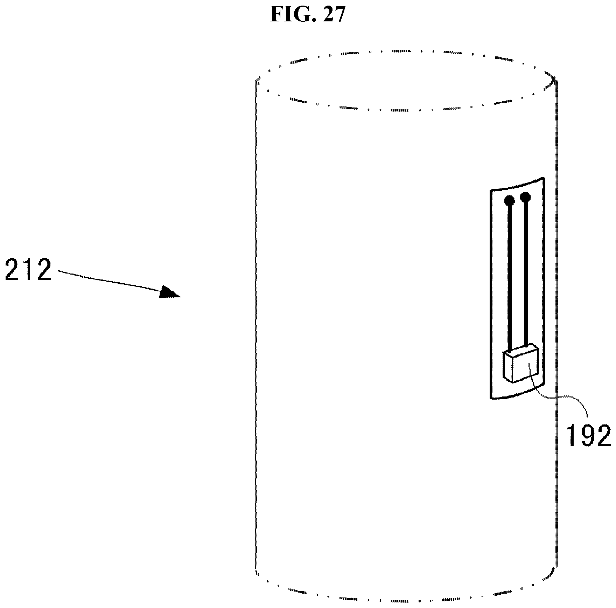

FIG. 27 is a perspective view illustrating an example of separately providing a sensor with respect to a cutting head.

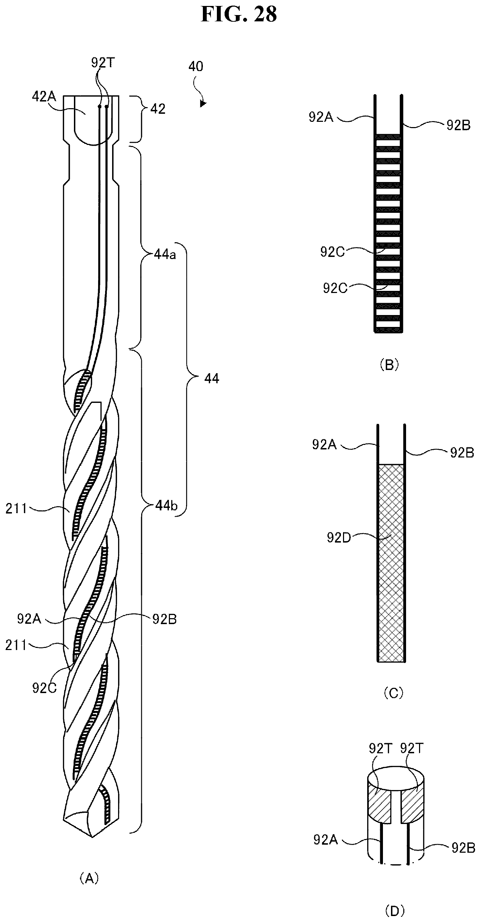

FIG. 28 illustrates a modified example of the same drill, in detail, (A) is a front view thereof, (B) is an enlarged view illustrating only a conduction path, (C) is a view illustrating another configuration example of a conduction path, and (D) is an enlarged view illustrating another configuration example of an external connection terminal.

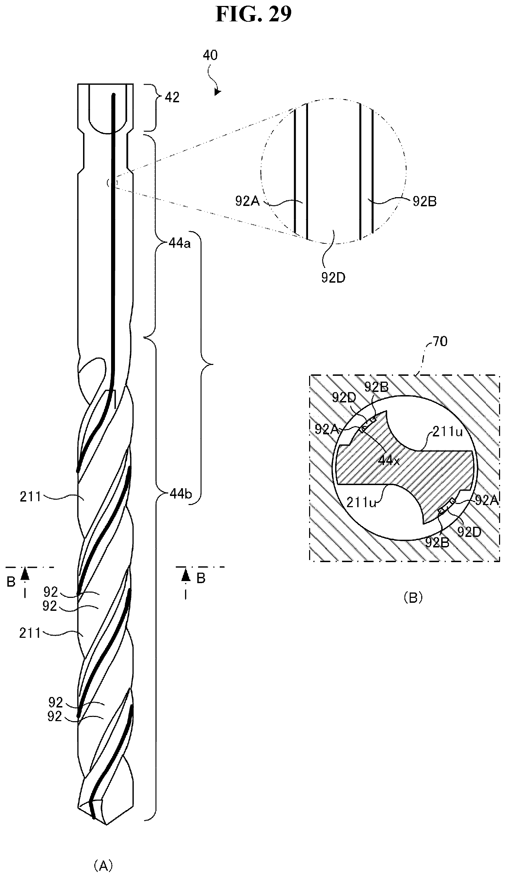

FIG. 29 illustrates a modified example of the same drill, in detail, (A) is a front view thereof, and (B) is a cross-sectional view thereof cut along an arrow B-B of (A) of FIG. 29.

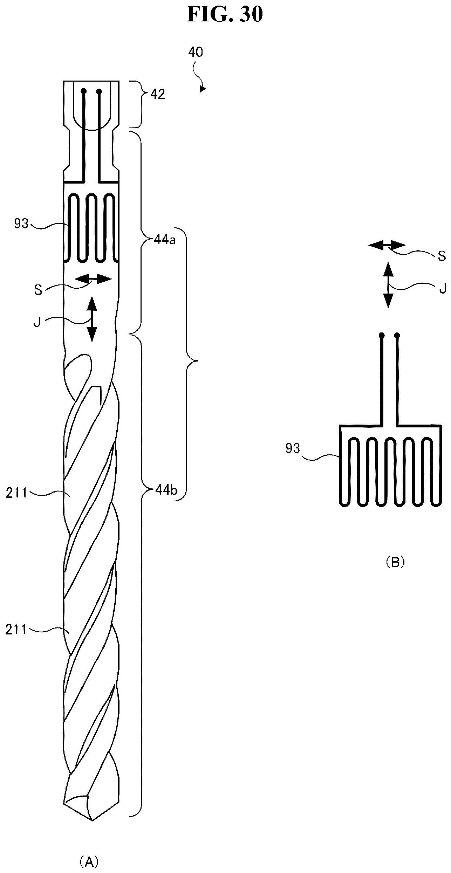

FIG. 30 illustrates a modified example of the same drill, in detail, (A) is a front view thereof, and (B) is a development view illustrating only a conduction path unfolded in a circumferential direction.
(A) of FIG. 31 is a perspective view illustrating an application example to a tip, (B) of FIG. 31 is a perspective view illustrating a tip holder, (C) of FIG. 31 is a perspective view illustrating the tip and the tip holder, and (D) of FIG. 31 is a perspective view illustrating a modified example of the tip.
(A) of FIG. 32 is a perspective view illustrating an application example of a tool bit, and (B) of FIG. 32 is a front view illustrating an application example to an end mill.
(A) of FIG. 33 is a perspective view illustrating an example of forming a supply wiring using a low resistivity material or with a low resistance value on the same surface, and (B) of FIG. 33 is a perspective view illustrating an example of forming a supplying wiring using a low resistivity material or with a low resistance value on a plurality of surfaces.

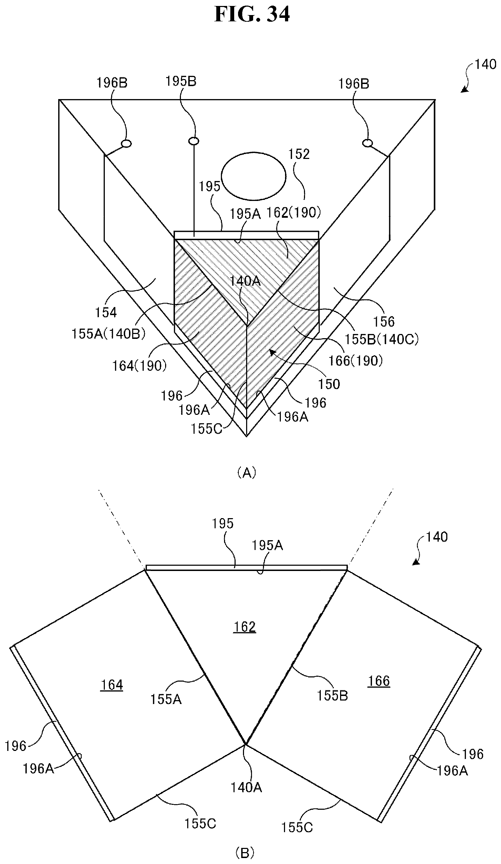

FIG. 34 illustrates a tip of a conduction path portion according to an embodiment of the present invention, in detail, (A) is a perspective view thereof, and (B) is a view of a corner unfolded into a plane.

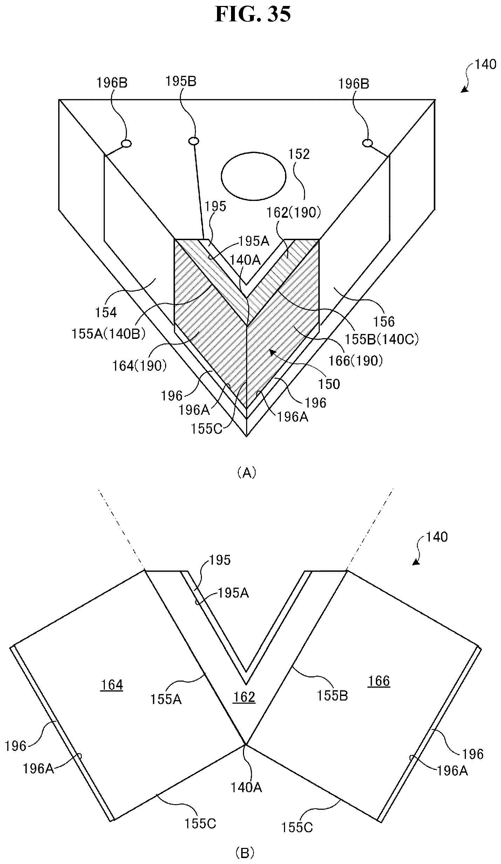

FIG. 35 illustrates a tip of a conduction path portion according to an embodiment of the present invention, in detail, (A) is a perspective view thereof, and (B) is a view of a corner unfolded into a plane.

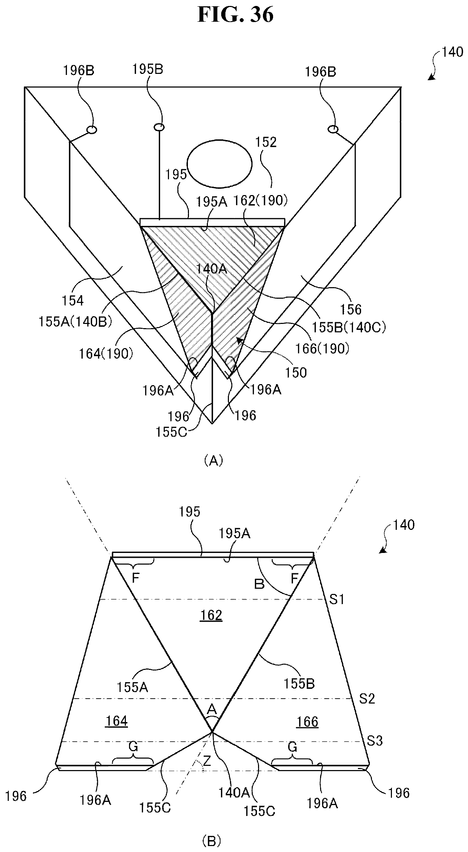

FIG. 36 illustrates a tip of a conduction path portion according to an embodiment of the present invention, in detail, (A) is a perspective view thereof, and (B) is a view of a corner unfolded into a plane.

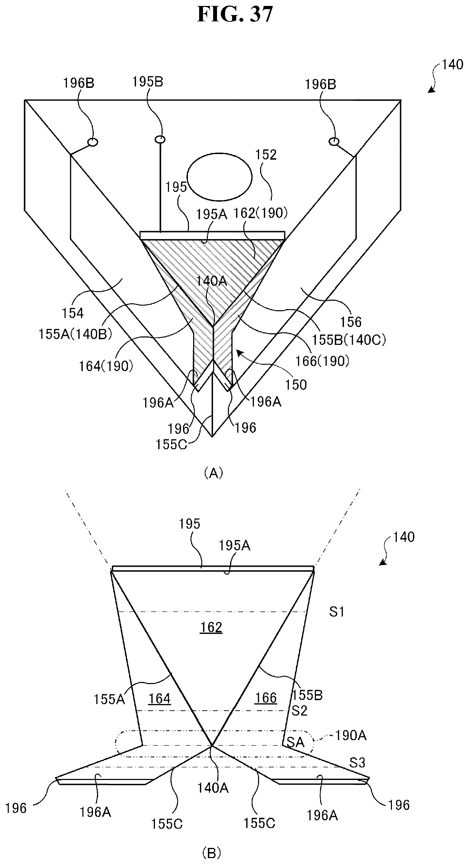

FIG. 37 illustrates a tip of a conduction path portion according to an embodiment of the present invention, in detail, (A) is a perspective view thereof, and (B) is a view of a corner unfolded into a plane.

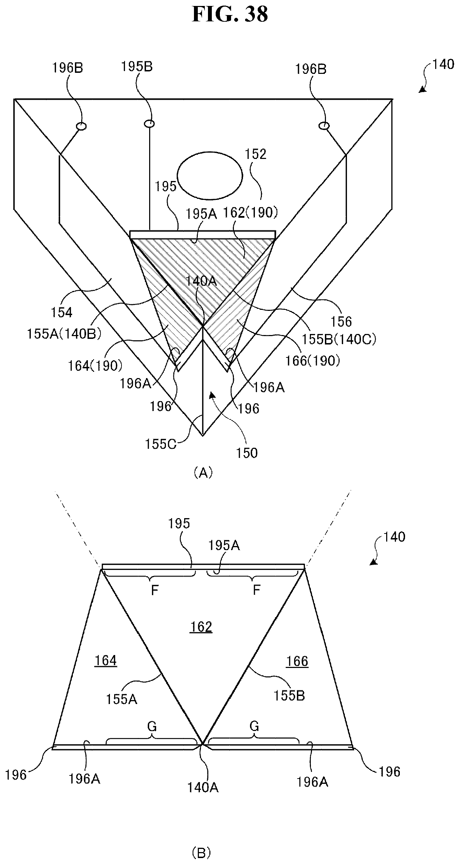

FIG. 38 illustrates a tip of a conduction path portion according to an embodiment of the present invention, in detail, (A) is a perspective view thereof, and (B) is a view of a corner unfolded into a plane.

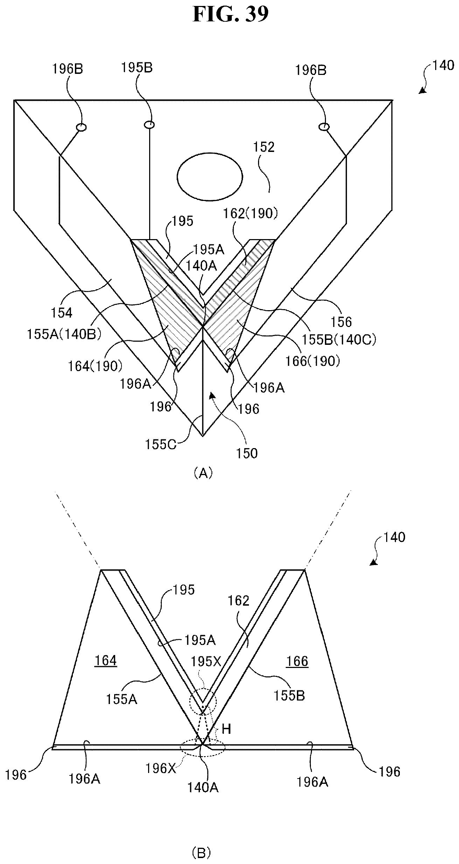

FIG. 39 illustrates a tip of a conduction path portion according to an embodiment of the present invention, in detail, (A) is a perspective view thereof, and (B) is a view of a corner unfolded into a plane.

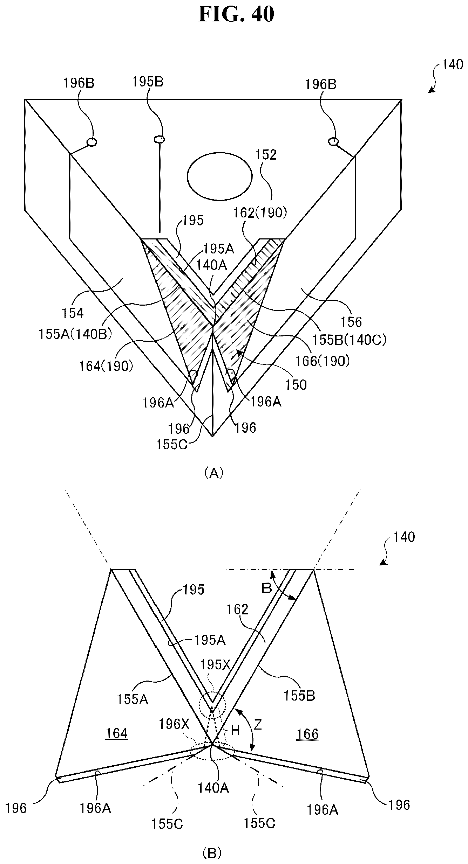

FIG. 40 illustrates a tip of a conduction path portion according to an embodiment of the present invention, in detail, (A) is a perspective view thereof, and (B) is a view of a corner unfolded into a plane.

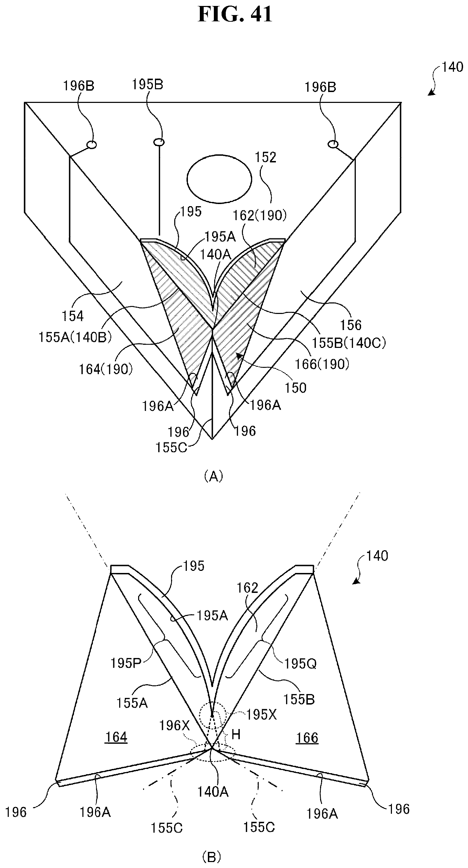

FIG. 41 illustrates a tip of a conduction path portion according to an embodiment of the present invention, in detail, (A) is a perspective view thereof, and (B) is a view of a corner unfolded into a plane.
(A) through (F) of FIG. 42 are perspective views illustrating only a corner of a tip of a conduction path portion according to an embodiment of the present invention.
(A) through (C) of FIG. 43 are perspective views illustrating a process of manufacturing a tip of a conduction path portion according to an embodiment of the present invention.

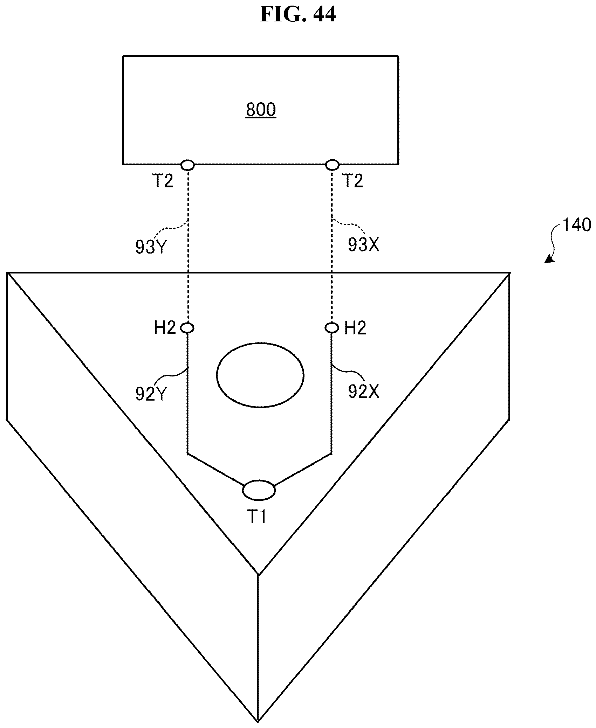

FIG. 44 is a perspective view illustrating a tip of a conduction path portion according to an embodiment of the present invention.

### Best Mode for Carrying Out the Invention

Hereinafter, embodiments will be described in detail with reference to the accompanying drawings.

FIG. 1 illustrates a cutting system 1 according to an embodiment of the present invention. The cutting system 1 includes a cutting device 10, a sensor (conduction path)-attached cutting head 30 provided in the cutting device 10, a driver 31 provided in the same cutting device 10, and an information collection device 100 to be connected to the cutting head 30 through wired or wireless communication.

The cutting head 30 of a conduction path portion is one of a cutting tool and a holder which retains the same. As shown in FIGS. 2 and 3, the cutting head 30 corresponds to a drill 40 as the cutting tool. Further, although the present embodiment illustrates an example of forming the conduction path on a side of the cutting tool, the sensor (conduction path) may be formed on a side of the holder (not shown) which remains the cutting tool.

The drill 40 includes a shank portion 42 and a body portion 44. A neck portion 44a and a blade portion 44b are formed in the body portion 44. Of course, the neck portion 44a is not essential.

A receiving space 48 is formed in the shank portion 42. Further, although a receiving space is not formed in the body portion 44, a receiving space may be formed therein. Here, spaces formed in the drill 40, such as the receiving space 48 in the shank portion, may be collectively referred to as an internal space 49.

As enlarged in (B) of FIG. 3, the neck portion 44a includes a recess 90 formed on an outer circumferential surface thereof, and a series of conduction paths 92 for measuring a torsion formed on a cylindrical bottom surface of the recess 90, which is not essential though. The conduction paths 92 are formed of a material having a conductivity, such as a metallic material or a conductive resin material, and are deformed as the cutting head 30 (the drill 40) is deformed. When the conduction paths 92 are deformed, an electrical characteristic such as a resistance thereof changes, and thus the conduction paths 92 output a torsion state generated in the drill 40 or a stress state based on the same. An electrically insulating layer 91 is formed directly on the bottom surface of the recess 90, and the conduction paths 92 are formed directly on the electrically insulating layer 91. Of course, the electrical characteristic of the cutting head 30 also changes based on a temperature state of the cutting head 30, in addition to a deformation of the cutting head 30. Therefore, a pure torsion or deformation may be measured by referring to a known temperature dependency of an electrical resistance (rate) of the conduction paths or a temperature range for taking the cutting head 30.

The electrically insulating layer 91 may employ, for example, staking printing, pad printing, coating, plating, and inkjet printing. Of course, when a parent material is an electrically insulating material, the formation of the electrically insulating layer 91 is not necessarily required and may be either present or absent. However, a coat layer may be provided to assign any property other than electrical insulation. Further, for example, the electrically insulating layer 91 employs various schemes, for example, film forming by sputtering an insulating material while disposing a predetermined mask, applying a silica material and heating, or applying an organic insulating material such as a polyimide-based material, an epoxy-based material, a urethane-based material, or a silicon-based material. Further, in a case in which a parent material forming the conduction paths 92 has an electrical conductivity, the electrically insulating layer 91 is formed through oxide coating by oxidizing a surface of the parent material. In a case in which the parent material is an aluminium-based material, the electrically insulating layer 91 may also be installed by alumite processing. However, the electrically insulating layer 91 is not limited thereto.

The conduction paths 92 include a first conduction path 93 and a second conduction path 94 that are independently established in parallel. The first conduction path 93 extends to reciprocate in an axial direction J which is a first direction, and detects a deformation of a surface of the drill 40 in the first direction. The second conduction path 94 extends to reciprocate in a circumferential direction S which is a second direction perpendicular to the first direction, and detects a deformation of the surface of the drill 40 in the second direction. Although a case of disposing a single first conduction path 93 is illustrated herein, a plurality of first conduction paths 93 may be disposed at positions having a predetermined phase difference (for example, 90° or 180°) in the circumferential direction, or may be disposed with intervals therebetween in the axial direction. The same is applicable to the second conduction path 94. The conduction paths 92 are formed directly in the recess 90 or on the electrically insulating layer 91 by stacking printing using a conductive paste, pad printing, coating, plating, inkjet printing, or sputtering. A shape of a wiring may be set through etching by performing masking corresponding to a shape of the conduction paths 92. By directly forming the conduction paths 92 as described above, the conduction paths 92 are not peeled for a long time. In addition, the conduction paths 92 may be provided using an adhesive layer formed of an adhesive. However, since it is impossible to measure an accurate torsion due to a deterioration of the adhesive over time, the conduction paths 92 may be formed directly. Meanwhile, when a sensor structure is detachably (rotatably) mounted by the form of seal, a peelable sheet layer with an adhesiveness may be provided on a lower layer.

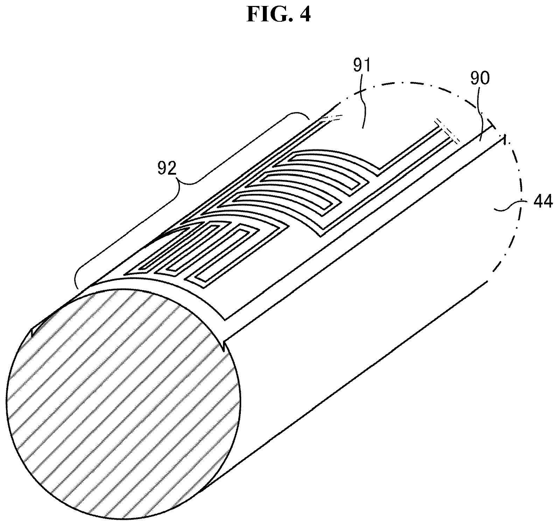

As shown in FIG. 4, outer surfaces of the first conduction path 93 and the second conduction path 94 are set to not protrude from the recess 90. That is, a depth of the recess 90 is set to be greater than or equal to a thickness of a wiring of the first conduction path 93 and the second conduction path 94. In doing so, the first conduction path 93 and the second conduction path 94 may not be damaged as being in contact with another member (for example, a chip or a member to be machined). Further, the first conduction path 93 and the second conduction path 94 may also be protected by forming cover layers on the outer surfaces of the first conduction path 93 and the second conduction path 94. The cover layers also include an insulating material. Of course, in addition, robust barrier layers with high damage resistance, oil resistance, water resistance, heat resistance, steam resistance, osmotic permeability, UV resistance, and weather resistances may also be installed.

Referring back to (B) and (C) of FIG. 2, a recess 96 is also formed on a seat surface 42A and a peripheral surface 42B of the shank portion 42. A wiring 97 is formed in the recess 46 to supply electricity from a battery 52 to the conduction paths 92. Even when the shank portion 42 is held by a jig such as a holder, a contact between the holder and the wiring 97 may be prevented. Further, by disposing a terminal for conduction on a side of the holder and electrically connecting the terminal and the wiring 97 of the shank portion 42, electricity may be supplied from the terminal to the wiring 97, or an electric resistance value of the wiring 97 may be measured on the side of the holder.

As shown in (A) of FIG. 3, the conduction paths 92 of this drill 40 forms an independent closed circuit only on the drill 40 side. A substrate 54 to which the wiring 97 is connected and the battery 52 configured to supply power to the substrate 54 are received in the internal space 49. However, a short-range wireless communication tag does not necessarily need a type of battery or condenser. Further, although a case of building the battery 52 therein is illustrated herein, a battery box may be disposed outside and power may be supplied from the battery box to the cutting head 30 in a wired and/or wireless manner. In addition, a case of operating a sensor (conduction paths) of the drill 40 using the battery 52 is illustrated herein. However, for example, in a case in which power is supplied from an outside by a power wiring using wires, the battery may be omitted. Further, in a case of an RFID of a passive structure in which radio waves are received as energy from an external reader and the energy is used as power for operation, the battery 52 may also be omitted. Further, power generation equipment which generates electricity by rotation or vibration using relative motions of a permanent magnet and an electromagnetic coil, power generation equipment which obtains an electromotive force by vibration or a change in a pressure of a piezoelectric element, power generation equipment by a Seebeck element which obtains an electromotive force by a temperature difference, or power generation equipment (power generation circuit) which obtains an electromotive force by a photoelectric element may be provided in the internal space 49 or on the outer circumferential surface of the drill 40.

Further, to prevent an inflow of a foreign substance or moisture into the internal space 49, a cap 50 is installed at an opening portion of the internal space 49. By removing the cap 50 from the receiving space 48, the battery 52 may be replaced or the substrate 54 may be maintained. Rather than blocking using the cap 50, embedding using resin, rubber, or an adhesive may also be possible.

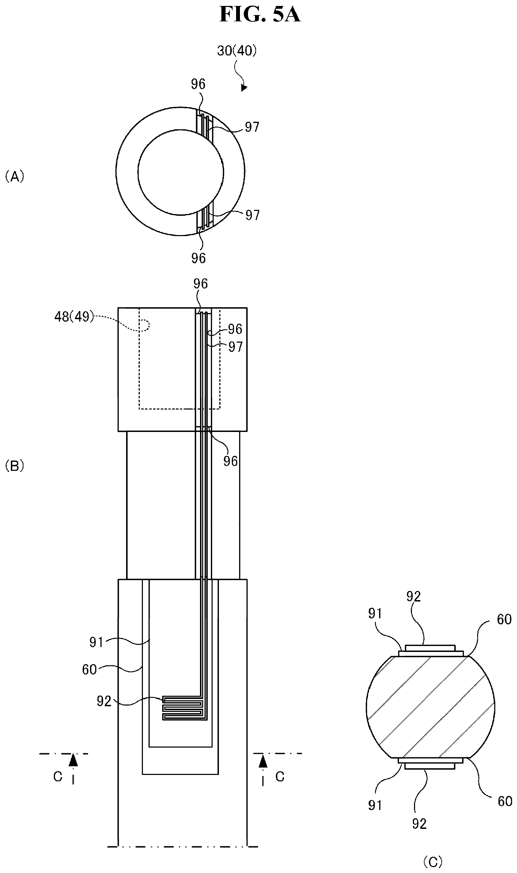

FIG. 5A illustrates another configuration of the drill 40. A recess (plane) 60 having a non-circular cross section is formed on the outer circumferential surface of the body portion 44 of the drill 40. The recess (plane) 60 extends in an axial direction, and the conduction paths 92 are formed directly therein. The recess 60 is disposed on both sides of a center axis line in a diameter direction. In doing so, for example, when a flexion moment is applied to the body portion 44 of the drill 40, a compressive force is applied to the conduction paths 92 of one axial direction and a tensile force is applied to the conduction paths 92 of the other direction, and thus there may be a difference between resistances. Based on the difference, a change in the flexion moment or a torsion applied to the drill 40 may be detected. Further, although an example of forming the recess (plane) 60 in a region of the neck portion 44a of the body portion 44 is illustrated, the recess (plane) 60 may also be formed on the shank portion 42 side.

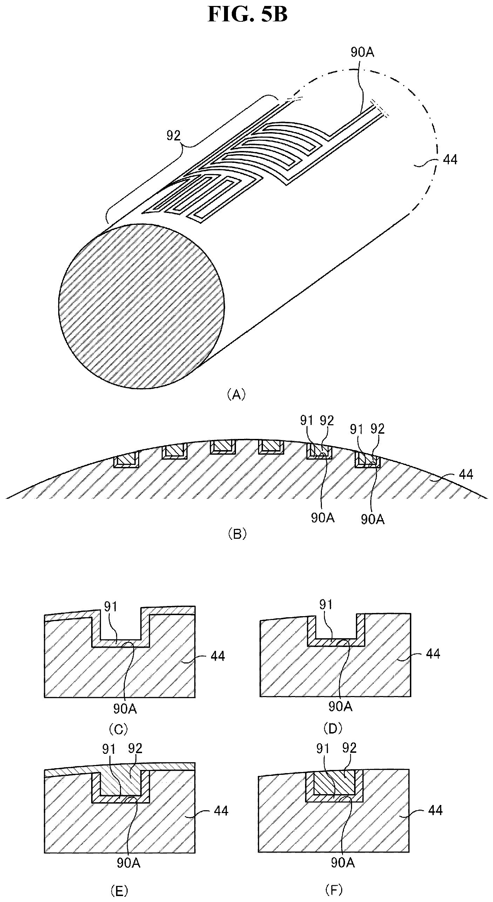

FIG. 5B illustrates still another configuration of the drill 40. A dent (recess) 90A configured to define the conduction paths 92 is formed on the outer circumferential surface of the neck portion 44a of the body portion 44 of the drill 40. As shown in (B) of FIG. 5B, the electrically insulating layer 91 being a ground layer is formed on an inner circumferential surface of the dent 90A, and the conduction paths 92 are formed directly on the electrically insulating layer 91. Thus, the conduction paths 92 do not need to be in contact with an external member, whereby a disconnection or peeling of the conduction paths 92 may be restrained, and a deformation of the drill 40 being a target member may be directly measured.

The conduction paths 92 are formed in the following order. First, as shown in (C) of FIG. 5B, the electrically insulating layer 91 is formed on the whole of the outer circumferential surface of the body portion 44 by coating. As shown in (D) of FIG. 5B, a portion of the electrically insulating layer 91 out of the dent 90A is removed. As shown in (E) of FIG. 5B, the conduction paths 92 are formed on the whole of the outer circumferential surface of the body portion 44 by coating. After that, a portion of the conduction paths 92 out of the dent 90A is removed. As a result, as shown in (F) of FIG. 5B, the electrically insulating layer 91 and the conduction paths 92 are formed in the dent 90A.

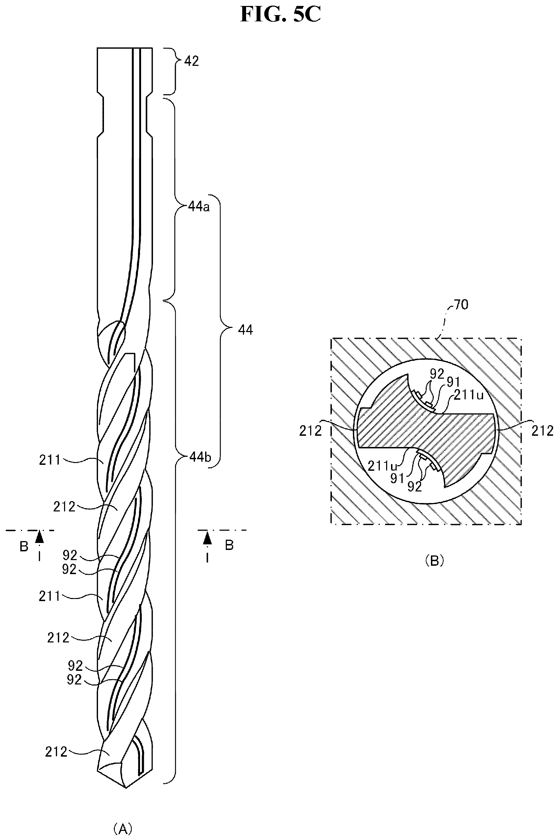

FIG. 5C illustrates a further configuration of the conduction paths 92 of the drill 40. The drill 40 includes the conduction paths 92 formed in the blade portion 44b of the body portion 44. In detail, as shown in a partially enlarged view (B) of FIG. 5C, the electrically insulating layer 91 and the conduction paths 92 are spirally formed along a bottom portion (valley bottom) 211u of a chip space formed on a blade of adjacent 2 lines 211. The bottom portion 211u has a gap with respect to a machining hole of a machining target 70. Thus, when the electrically insulating layer 91 and the conduction paths 92 are formed using the gap efficiently, the drill 40 does not interfere with the machining target 70. To form the conduction paths 92, the bottom portion 211u of the chip space may also be set deeper, an exclusive dent may be formed therein, and the conduction paths 92 may be buried therein. Of course, by providing the conduction paths 92 in a portion on the drill 40 which hardly contacts between a work material and the drill 40, it is possible to suppress wear of the conduction paths. Of course, the conduction paths 92 may also be formed on a flank side on the way to the bottom portion 211u of the chip space. Further, when an overcoat with a high durability is performed on the surface of the conduction paths 92, the durability may improve. Further, the chip space includes a dent through which a cutting chip passes. Thus, to prevent a contact between the cutting chip and the conduction paths 92 first, the conduction paths 92 may be formed on an outer circumferential surface 212 (see (B) of FIG. 5C) of the drill 40. In this example, an exclusive dent may be formed on the outer circumferential surface 212, and the conduction paths may be embedded therein.

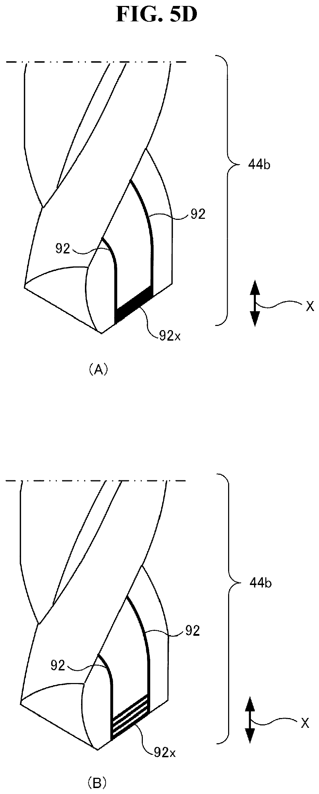

As shown in (A) of FIG. 5C, the conduction paths 92 are reciprocating paths which extend from the shank portion 42 side to an end side of the body portion 44, turn back at the end side, and return to the shank portion 42 side. That is, the conduction paths 92 are formed to reciprocate in the chip space. In this example, as shown in (A) of FIG. 5D, by forming the conduction paths 92 as an integral body at cutting edges of protruding edges, a wear detector 92x with a resistance value changing in conjunction with an amount of wear of the cutting edges may be embedded. For example, when the cutting edges are worn, the wear detector 92x of the conduction paths 92 may be worn together, and the width of the paths may decrease such that the resistance value may change, or a disconnection may occur aggressively. Through this, a wear state of the cutting edges may be detected. As shown in (B) of FIG. 5D, the wear detector 92x may be a parallel circuit which is parallel in a wear direction X of the cutting edges, and portions of the circuit may be sequentially disconnected in conjunction with an amount of wear such that the resistance value may change. Further, although the parallel circuit at the end of (B) of FIG. 5D includes the paths with great width for ease of description, the width may be less than or equal to an amount of wear of cutting edges to be detected, in practice, particularly, less than or equal to 1 mm, preferably less than or equal to 0.1 mm.

### <Suggestion of schemes of forming electrically insulating layer or conduction paths>

There exist various schemes of forming the electrically insulating layer 91 or the conduction paths 92. The schemes broadly include film forming (of course, forming conduction paths by masking other portions except for the conduction paths, coating, film forming of a conductive layer, and removing the masking, or conversely forming an electrically insulating layer in conduction paths by film forming of an insulating layer in the conduction paths may also be referred to as pattern forming.) and pattern forming. Representative examples of the film forming are gas phase film forming and liquid phase film forming. Further, representative examples of the pattern forming are printing (for example, screen printing, transferring, or ink spraying), writing with a pen, and foil stamping.

The gas phase film forming includes vacuum deposition (for example, resistor heating vacuum deposition, electron beam evaporation/cluster beam deposition, or flash evaporation), ion plating (for example, high frequency exciting ion plating or activation reactive deposition), sputtering (for example, direct current (DC) sputtering, radio frequency (RF) sputtering, flat magnetron sputtering, or dual ion beam sputtering), molecular beam epitaxy (MBE), physical vapor deposition (PVD) such as pulse laser deposition, thermal chemical vapor deposition (CVD), plasma-enhanced CVD (PECVD), metalorganic chemical vapor deposition (MOCVD), chloride CVD, photo-induced (chemical reaction) CVD, laser CVD, and CVD such as atomic layer epitaxy (ALE).

The liquid phase film forming includes plating, coating, a sol-gel process, and spin coating.

Further, in a case in which it is impossible to form a pattern using such film forming, patterning using a resist may also be possible. For example, when patterning is performed by a photoresist (photo lithography) or screen printing, a high precision, high density pattern may be formed. The resist may be selected appropriately based on a type of film forming. For example, the resist includes an etching resist, a solder resist, and a plating resist. When removing the resist, electrolysis is used.

In addition, although not shown particularly herein, the outer surface of the conduction paths 92 may further be covered with a cover layer. The cover layer may be formed using the same scheme as the electrically insulating layer.

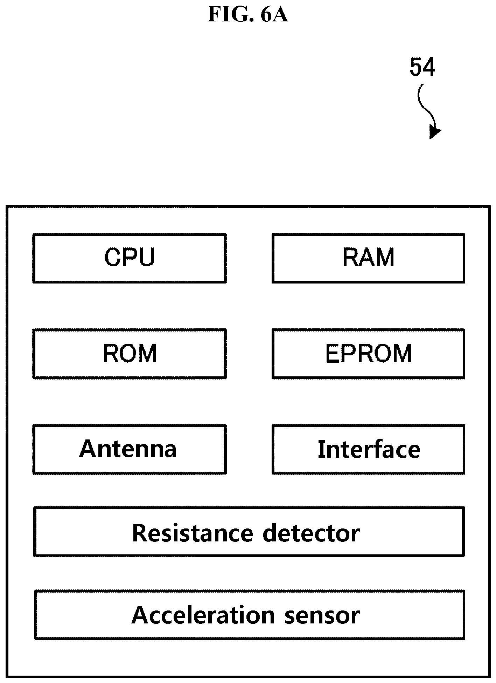

FIG. 6A illustrates a configuration of the substrate 54. The substrate 54 is a so-called radio frequency identification (RFID), and is configured as an analog circuit and/or an integrated circuit (IC) chip. The substrate 54 appropriately and selectively includes a central processing unit (CPU) configured to control all processes, a random-access memory (RAM) configured to read and write temporary data, a read-only memory (ROM) used to store a program, an erasable programmable read-only memory (EPROM) configured to store data, an interface configured to control communication between the substrate and an external device, an antenna configured to wirelessly communicate with an external device or to supply power using an external radio wave, and a resistance detector. In addition, an acceleration sensor is also installed in the substrate 54.

The resistance detector is connected to the wiring 97. The resistance detector simultaneously detects a resistance of the conduction paths 92 by measuring a voltage value or a current value, converts the resistance into digital information (may also process the resistance into an analog signal), and provides the digital information to the CPU. Hence, resistance data is stored in the EPROM.

The acceleration sensor detects a vibration or a displacement and/or deformation of the substrate 54, and calculates displacement data of the drill 40. By this, an operation circumstance (deflection width, flexion, or so-called chattering) of the drill 40 may be verified. The displacement data is stored in the EPROM. Further, the acceleration sensor includes various types of acceleration sensors, such as generally known vibration-type sensors, optical sensors, and semiconductor-type sensors such as capacitive sensors, piezoresistive sensors, and gas temperature distribution-type sensors.

The resistance data or the displacement data stored in the EPROM is transmitted to an external device (information collection device 100) through the antenna at an occasional timing at which a manager collects information, or at a regular timing or an irregular timing. Of course, a variety of obtained data is transmitted irrespective of a wired manner or a wireless manner, and may be transmitted using analog signaling or digital signaling.

Information to identify an entity of the drill 40 (entity identification information) is stored in the ROM or the EPROM, and a type or an installation location (installation company) of the cutting device 10 corresponding to the entity identification information is registered in the information collection device 100. By this, each male screw body 40 may be separately managed. Further, although a portion of the substrate 54 employs so-called RFID technology using an IC chip, the embodiment is not limited thereto, and other technologies may also be used.

### <Configuration of bridge circuit>

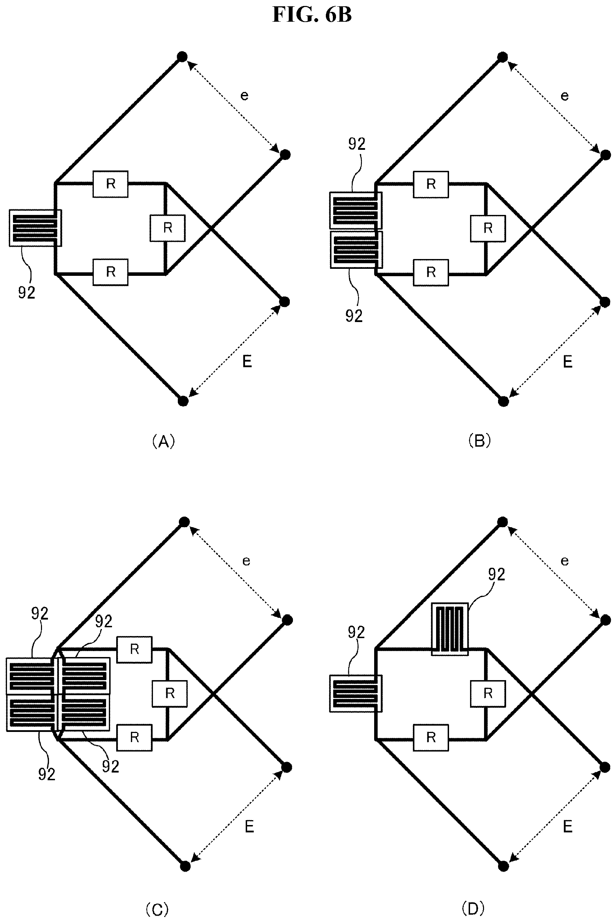

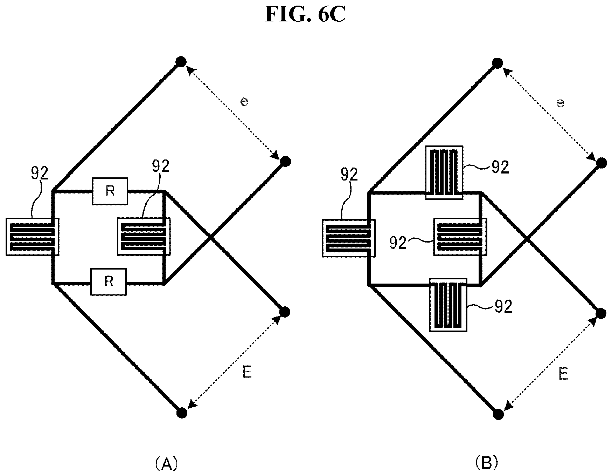

As shown in FIGS. 6B and 6C, a bridge circuit may be used for a connection of the conduction paths 92, which is not essential though. A wiring or a resistor R of the bridge circuit may be provided in the middle of the wiring 97 and/or the substrate 54. E denotes an input voltage, and e denotes an output voltage. A strain may be calculated from a variation in the output voltage. The bridge circuit may also be patterned directly with respect to the cutting head being a measurement target.

(A) of FIG. 6B illustrates a bridge circuit of a 1-gauge scheme using a single conduction path 92. (B) of FIG. 6B illustrates a bridge circuit of a 2-series 1-gauge scheme using two conduction paths 92 disposed in series as a single gauge. The two conduction paths 92 may be disposed inside and outside a member in the same direction, and used to measure a tensile/compressive component while removing a bending component. (C) of FIG. 6B illustrates a bridge circuit of a 4-gauge scheme using two sets, each including two conduction paths 92 disposed in series, disposed in parallel. For example, four conduction paths 92 may be disposed at four positions with equal intervals in a circumferential direction of a columnar member in an axial direction to detect a tensile/compressive component. (D) of FIG. 6B illustrates a bridge circuit of a 2-gauge scheme using two conduction paths 92. The 2-gauge scheme may include a 2-gauge 2-active scheme of setting different measurement directions (extension and contraction directions) of the two conduction paths 92 and measuring respective stresses, or a 2-gauge 1-active 1-dummy scheme of setting the same measurement directions (extension and contraction directions) of the two conduction paths 92 and using one as a dummy.

(A) of FIG. 6C illustrates a bridge circuit of an opposite 2-gauge scheme of connecting two conduction paths 92 on opposite sides of a bridge. For example, the two conduction paths 92 may be disposed inside and outside of the drill 40 in the same direction, and used to measure a tensile/compressive component while removing a bending component. (B) of FIG. 6C illustrates a bridge circuit of a 4-gauge scheme of connecting four conduction paths 92 on respective edges of a bridge. Two of the four conduction paths 92 may be disposed in a circumferential direction of a cylindrical member of the drill 40, and the other two thereof may be disposed in an axial direction, whereby the four conduction paths 92 may be used to measure an axial force. The 4-gauge scheme may also be used to measure a torque or a bending.

Further, although a Wheatstone bridge circuit is illustrated herein, other bridge circuits may also be used, for example, a Wien bridge oscillation circuit, a Maxwell bridge alternating current (AC) circuit, a Heaviside bridge AC circuit, a Sobel network bridge high frequency circuit, a Schering bridge circuit, a Kale Foster bridge AC circuit, and an Anderson bridge circuit. However, the Wheatstone bridge circuit may be selected to be used as a DC circuit.

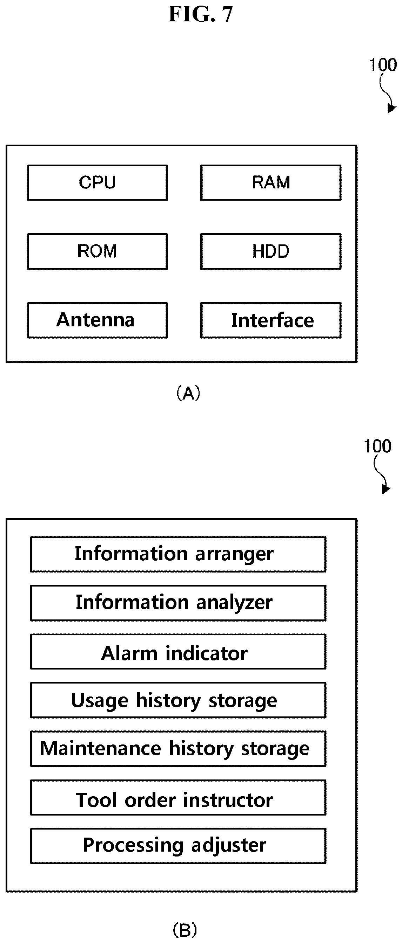

(A) of FIG. 7 illustrates a hardware configuration of the information collection device 100. The information collection device 100 is a so-called server, and includes a CPU, a RAM configured to read and write temporary data, a ROM used to store a mainboard program, an erasable hard disk drive (HDD) configured to store data, an interface configured to control communication with an external device, and an antenna configured to wirelessly communicate with the drill 40. Further, the antenna is not limited to one disposed in a server constituting hardware of the information collection device 100. The antenna may also be a relay antenna or an antenna disposed in a vicinity of the drill 40 of each cutting device 10, and the information collection device 100 may be provided integrally in each cutting device 10.

(B) of FIG. 7 illustrates a program configuration of the information collection device 100. The information collection device 100 includes an information arranger, an information analyzer, an alarm indicator, a usage history storage, a maintenance history storage, a tool order instructor, and a processing adjuster. The information arranger accumulates resistance data (voltage value data and current value data) and displacement data collected from each dril 40 in a time series, in addition to a name of the cutting device 10, a location thereof, an installation location thereof, an installation direction thereof, a variety of information of the cutting head 30 of the conduction path portion, and a manager (contact) corresponding to the entity identification information of the drill 40 described above. That is, depending on a purpose of sensing of a sensor provided in each drill 40, a variety of data such as a flexion, a decrease, a vibration, and a temperature of the cutting tool may be accumulated.

The information analyzer serves as a replacement determiner, a usage determiner, and a tool identifier herein, and interprets the collected entity identification information, (electric) resistance value data, and movement data of the drill 40, and determines a machining quality, a replacement timing, and an abnormality with respect to each drill 40. The machining quality may be determined by determining a so-called chattering during machining by a vibration level of the drill 40. The replacement timing is determined by determining an amount of wear of cutting edges, a damage state such as bending or breakage of the drill 40, an operation time, and a chattering state. The abnormality may be determined by determining, for example, whether an abnormal value appears with a lapse of time. Further, the abnormality may be determined by interpreting/determining whether a trouble arises in the cutting device 10 side (for example, an abnormal decrease in a rotation count of the drill 40, an abnormal power consumption, or an abnormal machining load) based on the data collected from the cutting head 30 of the conduction path portion. The alarm indicator may be configured to perform processing for outputting (reporting using a screen, a character, an illumination, or a sound) a maintenance alarm or an alert to an operator when the information analyzer determines that abnormal data is included in an analysis result. When the machining quality degrades, an alarm may be generated. The usage history storing member may be configured to store a variety of data obtained in a use time or progress corresponding to an entity identification of each blade as usage history information. The maintenance history storage may be configured to store a maintenance history of the cutting head 30.

The tool order instructor may be configured to set a mode to automatically generate order information for ordering a cutting head 30 (a drill 40) through a mode selection performed in advance by a user, when the information analyzer determines it is a replacement timing. The order information is transmitted by the tool ordering portion to a server of an external supplier via the Internet, and as a result, a new drill 40 is automatically delivered by the supplier.

The processing adjuster generates instruction information to adjust (change) a machining method based on the machining quality analyzed by the information analyzer, and transmits the instruction information to a controller of the cutting device 10. For example, when a degree of curve or a deflection width (including a chattering) detected from the drill 40 is great, the processing adjuster generates instruction information to decrease (or increase) the rotation count of the drill 40, or to decrease (or increase) a relative displacement rate with respect to a work material. Similarly, when a temperature detected from the drill 40 is high, the processing adjuster generates instruction information to increase an amount of coolant, or to decrease the rotation count of the drill 40.

Further, the information analyzer may periodically measure output values of a plurality of conduction paths 92 included in the drill 40, thereby verifying, for example, a disablement of a portion of the conduction paths 92.

As described above, by arranging a plurality of cutting heads 30 in the cutting device 10, a torsion and/or a displacement (a variety of information or data to be converted from torsion information) occurring in the cutting heads 30 may be detected. A result of the detection may be accessed in a wired and/or wireless manner and collected by the information collection device 100, and thus utilized as objective data. In addition, for example, the data collection may be automated, and simultaneously observation/collection may be performed approximately in real time. A change in an internal stress may be verified from an amount of deformation or torsion of the cutting device 10. Based on this circumstance, a machining quality, a replacement timing, an occurrence timing of a machining trouble, and a location of a machining quality abnormality may also be determined. Further, unlike information obtained from various sensors such as an acceleration sensor or a vibration gauge, acquisition of stress data connected to an electric resistance of the conduction paths may enable a current state of a measuring target object to be verified more accurately from current value information of torsion (including a residual torsion) or torsion history information even in a stop state after an accelerative displacement or a vibration of the measuring target object is controlled.

In particular, since the conduction paths 92 are formed directly by printing, the cutting head 30 may not be peeled easily, and an internal stress thereof may be verified stably for a long time (for example, for decades). In addition, since a plurality of conduction paths 92 is formed with respect to a single sensor-structure-attached-member 30, it may be determined that a corresponding position of the cutting head 30 is damaged or broken, one of the conduction paths 92 is disconnected, or a portion of the conduction paths 92 are damaged or disabled in a case in which it is impossible to obtain outputs of a plurality of conduction paths 92 disposed in the same direction (which will be described further later). Hence, a position to be checked may be specified easily, and a matter to be checked may be clarified or a preparatory measure may be reviewed, and thus the maintenance may be performed quickly. Further, while one of the conduction paths 92 is disabled, a stress may be detected through another one of the conduction paths 92, and thus a measurement may be continued stably for a long time by this multi-structure.

Further, the electrically insulating layer 91 is also formed directly on a surface of a member by printing or sputtering, and thus may not be peeled or exfoliated easily for a long time (for example, for decades). Hence, a torsion or an internal stress thereof may be verified stably by the conduction paths 92 formed directly on the outer surface of the electrically insulating layer 91.

Further, since the cutting head 30 includes the first conduction path 93 and the second conduction path 94, stresses applied in multiple directions may be measured simultaneously. Thus, external forces applied to the cutting head 30 may be verified and analyzed more precisely.

In this example, the drill 40 is adopted as the cutting head 30, but may be applied to other machining tools or holders.

Further, in the above embodiment, a case of forming the conduction paths 92 directly in the drill 40 being a machining tool is illustrated. However, the embodiment is not limited thereto. For example, the conduction paths 92 may also be formed on a plate material 300 including metal, ceramics, or reinforced resin as shown in (A) of FIG. 11, and the plate material 300 may be attached to a machining tool or holder using screws or an adhesive. Engaging parts 302 to be fastened to the machining tool or holder are formed at two or more positions on the plate material 300 using bolts or rivets or by welding. Thus, the plate material 300 extends, contracts, or is distorted in response to a deformation of the machining tool or holder. A plurality of (here, four) first conduction paths 93 that reciprocate in a first direction X are disposed on the plate material 300 in a shape of matrices. In detail, the first conduction paths 93 are disposed in a shape of grids configured by a plurality of positions spaced apart in the first direction and a plurality of positions spaced apart in a second direction Y which is perpendicular to the first direction X. When the first conduction paths 93 are disposed in the shape of matrices as described above, detection may also be performed with respect to a torsion (see an arrow P) with an axis corresponding to the first direction X of the plate material 300 from a difference of an output of each first conduction path 93. In addition, a stress in the first direction X may be detected using another first conduction path 93 although a portion of the first conduction paths 93 are disabled.

For example, as shown in the plate material 300 of (B) of FIG. 11, a plurality of (here, two) first conduction paths 93 that reciprocate in the first direction X, and a plurality of (here, two) second conduction paths 94 that reciprocate in the second direction Y may be disposed in a shape of matrices. One pair of the first conduction paths 93 is disposed at positions spaced apart from each other in the second direction Y. One pair of the second conduction paths 94 is disposed at positions spaced apart from each other in the second direction Y, further at positions spaced apart from the first conduction paths 93 in the first direction X. One pair of engaging parts (engaging holes) 302 is formed in a vicinity of both ends of the plate material 300 at positions spaced apart from each other in the second direction Y. In doing so, in addition to the extension and contraction in the first direction X, extension and contraction in the second direction Y may also be detected. Further, a flexion moment (see an arrow Q) of a rotation in a third direction Z which is perpendicular to both the first direction X and the second direction Y may also be detected.

In another example, as shown in the plate material 300 of (C) of FIG. 11, a plurality of (here, two) first conduction paths 93 that reciprocate in the first direction X, and a plurality of (here, two) second conduction paths 94 that reciprocate in the second direction Y may be disposed in a shape of zigzag matrices. In detail, one pair of the first conduction paths 93 is disposed at positions spaced apart from each other in the first direction X and the second direction Y. One pair of the second conduction paths 94 is also disposed at positions spaced apart from each other in the first direction X and the second direction Y. In doing so, various torsions such as the extension and contraction in the first direction X, the extension and contraction in the second direction Y, a torsion (see an arrow P) with an axis corresponding to the first direction X, a torsion (not shown) with an axis corresponding to the second direction Y, and a flexion moment (see an arrow Q) of a rotation in the third direction Z which is perpendicular to both the first direction X and the second direction Y may be detected.

For example, as shown in FIG. 12, the conduction-path-attached-member (the plate material 300) may be provided in the machining tool or holder by bolts. Thus, more various stresses may be measured by disposing a plurality of such plate materials 300 in various directions.

Further, the machining tool or holder of the conduction path portion is not limited to the above embodiment.

Hereinafter, a conduction path will be described in detail. Further, the applications of the present invention are not limited to the examples suggested herein.

### <Positions at which conduction path is formed>

Positions at which the conduction path is formed in the machining tool or holder are a surface, a back surface, both an outer surface and an inner surface, a side, and a circumferential surface of the member. The member including an inner space is provided on one or both of an inner circumferential surface and an outer circumferential surface of the member. Further, in a case in which a recess or a hole is present in a body of the member, the conduction path may also be formed in the body of the member by stacking a conductive material in the recess or the hole or filling the recess or the hole with the conductive material.

### <Layer state of conduction path>

A layer state of the conduction path is not limited to the single layer of FIG. 3 and the like, and a multilayer structure including at least two layers may be employed. When the conduction path is provided in a stacked structure including a plurality of layers, an electric insulation material is interposed therebetween as an intermediate layer. A protection layer may be formed on an outermost conduction path.

### <Shape of conduction path>

The shape of the conduction path includes a linear shape such as a straight line or a curved line, a planer shape such as a plane or a curved surface, and a cubic shape (including both a hollow shape or a solid shape) formed by combining a plurality of planes or curved surfaces, or other surfaces. The planar conduction path includes, in addition to a conduction path provided in a planar shape, a conduction path provided in a substantially planar shape by disposing a linear wiring to disperse in a planar/curved region or stacking the linear wiring, like a zigzag shape, a matrix shape, a grid shape, or a spiral shape. The planar conduction path may also be provided in a shape of curved surface by the whole or a portion of a surface of a round column, the whole or a portion of a surface of a circular cone, or the whole or a portion of a surface of a sphere. The shape of the planar conduction path may include a ring shape (annular shape), a cylindrical shape (inner circumferential surface, outer circumferential surface), a square shape, a polygonal shape, a circular or elliptical shape, a heteromorphic shape, and a combination thereof.

### <Number of conduction paths>

A single conduction path or a plurality of conduction paths is disposed. Further, as a pattern to dispose a plurality of planar conduction paths, the plurality of conduction paths may be arranged along a straight line, the plurality of conduction paths may be arranged along a curved line (including a circle), the plurality of conduction paths may be arranged along a spiral line, the plurality of conduction paths may be disposed in a shape of matrices/grids, the plurality of conduction paths may be disposed in multiple layers, or the plurality of conduction paths may be disposed three-dimensionally. Further, in a case in which the conduction path is provided in a ring shape (annular shape), the plurality of conduction paths may be disposed, for example, in the shape of concentric circles or in approximately similar shapes. Of course, needless to say, the embodiments are not limited to the concentric shape. Similarly, by disposing a plurality of strands in a parallel state or a stacking state, the plurality of conduction paths may be disposed adjacent thereto.

### <Material of conduction path>

The material of the conduction path includes a material mainly containing aluminium, copper, silver, gold, platinum, iron, and carbon and/or a composite material thereof, or a material not containing the same as a main component. In addition, the conduction path or an insulating layer may be formed by film forming such as PVC or CVD, and includes, for example, an oxide thin film, a fluoride thin film, a nitride film, and a carbonized film. The oxide thin film includes aluminium oxide or alumina (Al2O3), cerium oxide (CeO2), chromium oxide (Cr2O3), gallium oxide (Ga2O3), hafnium oxide or hafnia (HfO2), nickel oxide (NiO), magnesium oxide or magnesia (MgO), indium tin oxide (ITO) (In2O3+SnO2), niobium pentoxide (Nb2O5), tantalum pentoxide (Ta2O5), yttrium oxide or yttria (Y2O3), tungsten oxide (WO3), titanium monoxide (TiO), titanium pentoxide (Ti3O5), titanium dioxide or titania (TiO2), zinc oxide (ZnO), compound oxide (ZrO2+TiO2), and zirconium dioxide or zirconia (ZrO2).

The fluoride thin film includes aluminium fluoride (AlF3), calcium fluoride (CaF2), cerium fluoride (CeF3), lanthanum fluoride (LaF3), lithium fluoride (LiF), sodium fluoride (NaF), magnesium fluoride (MgF2), neodym fluoride (NdF3), samarium fluoride (SmF3), ytterbium fluoride (YbF3), yttrium fluoride (YF3), and gadolinium fluoride (GdF3).

The nitride film includes titanium nitride (TiN), chromium nitride (CrN), titanium carbo-nitride (TiCN), titanium aluminium nitride (TiAIN), boron nitride (BN), aluminium nitride (A1N), carbon nitride (CN), and boron carbon nitride (BCN).

The carbonized film includes diamond-like carbon (DLC), titanium carbide (TiC), silicon carbide (SiC), boron carbide (BC), and tungsten carbide (WC).

In addition, indium zinc oxide (iZO), graphene, polyacetylene, and tin dioxide (SnO2) are also used.

A color of the conduction path includes diverse colors such as transparent color, opaque color, translucent color, white color, gray color, silver color, black color, red color, and brown color. In a case in which the member includes transparent or translucent glass, the conduction path may also be transparent or translucent.

### <Function of conduction path>

Sensing functions implemented by the conduction path include machine quantity measurement, thermal/temperature measurement, light/radiation measurement, electrical measurement, magnetic measurement, and chemical measurement. The machine quantity measurement includes an acceleration measured by an acceleration sensor, a force measured by a strain gauge (tension gauge), a load cell or a semiconductor pressure sensor, and a vibration measured by a sound wave (microphone) or an ultrasonic wave. The thermal/temperature measurement includes contact-type sensing performed by a thermistor, a resistance thermometer or a thermocouple (in this example, it may be implemented by forming junctions on both ends of the conduction path having different electrical conductivities, one as a hot junction and the other as a cold junction), and non-contact type sensing performed by a radiation thermometer. The light/radiation measurement includes light detection performed by a light sensor, a photoelectric device or a photodiode, infrared detection, and radiation detection. The electrical measurement includes an electrical field, a current, a voltage, and an electric power. The magnetic measurement includes a magnetic sensor. The chemical measurement includes smell detection, ion concentration detection, and gas concentration detection.

Further, sensors implemented by the conduction path alone or by an association with another circuit or device include a clock sensor for measuring time, a position sensor such as a position sensitive device (PSD) or a limit switch, a distance sensor such as an ultrasonic distance meter, a capacitive displacement sensor, optical distance measurement or electromagnetic wave distance measurement, a displacement sensor such as a differential trans or a linear encoder, a speed sensor such as a laser Doppler velocity measuring transducer or a laser Doppler hydrometer, a rotating angle sensor such as a potentiometer or a rotating angle sensor, a rotational speed sensor such as a tachogenerator or a rotary encoder, an angular velocity sensor such as a gyro sensor, a one-dimensional (1D) image linear image sensor, a two-dimensional (2D) image sensor such as a charge-coupled device (CCD) image sensor or a complementary metal-oxide-semiconductor (CMOS) image sensor, a stereo image sensor, a liquid sensor such as a liquid leakage sensor (leak sensor) or a liquid detection sensor (level sensor), a hardness sensor, a humidity sensor, a flow sensor, an inclination sensor, and an earthquake sensor.

Further, a strain sensor implemented by the conduction path may be used for load measurement (load cell), displacement measurement, vibration measurement, acceleration measurement, torque measurement, torque measurement (transducer), pressure measurement, and Coriolis force measurement. In addition, environmental temperature may be measured from a change in an electric resistance of the conduction path. In this example, the conduction path may be used as a so-called resistance thermometer, a position that is hardly affected by thermal extension and contraction or deformation may be selected as a placement position of the parent material to which the corresponding conduction path is disposed.

For example, a material having a substantially zero thermal expansion coefficient in a predetermined limited temperature range, in detail, a perovskite-based material or a bismuth/lanthan/nickel oxide-based material, may also be used. Further, a combination of a material having a negative thermal expansion coefficient and a material having a positive thermal expansion coefficient of which an absolute value approximately equals to that of the negative thermal expansion coefficient, or a combination of materials configured to have zero thermal extension coefficients through nano-composition by combining a positive thermal expansion material and a negative thermal expansion material in a fine structure may also be used. In doing so, it is possible to distinguish between a change in an electric resistance of the conduction path due to a deformation of the parent material by an external force and a change in the electric resistance of the conduction path due to a change in the environmental temperature.

Further, a piezoelectric element may be disposed in the conduction path or on the parent material which is a different position from the conduction path, or a conduction path having a piezoelectric element structure may be installed. When the piezoelectric element or the conduction path having the piezoelectric element structure is installed in the conduction path, an external force applied to the piezoelectric element or the conduction path having the piezoelectric element structure may be sensed, or a piezoelectric current (electromotive force) generated in response to a change in pressure may be provided to operate the conduction path or a circuit. For example, the piezoelectric element or the conduction path having the piezoelectric element structure may be installed at a position held by the parent material and an external member, an electromotive force may be generated in the piezoelectric element in response to a change in a holding force thereof (for example, vibration), and the electromotive force may be utilized as power to sense the conduction path.

Similarly, a Peltier device or a conduction path having a Peltier device structure may also be installed in the conduction path or on the parent material which is a different position from the conduction path. When the Peltier device or the conduction path having the Peltier device structure is installed in the conduction path, a temperature difference may be generated in the parent material or between the parent material and an external member. For example, the Peltier device or the conduction path having the Peltier device structure may be installed and displaced at a position at which temperature may change easily, and a temperature difference generated at the position may be forcibly eliminated by conduction with respect to the Peltier device or the conduction path having the Peltier device structure. That is, at the position at which the temperature difference is generated, a heat absorbing part of the Peltier device or the conduction path having the Peltier device structure may be installed at a high temperature side of the position, and a heat emitting part may be installed on a low temperature side thereof. By supplying electricity to the Peltier device or the conduction path having the Peltier device structure, the original high temperature side may be cooled and simultaneously the low temperature side may be heated, whereby the temperature difference may be eliminated. However, when the high temperature side and the low temperature side are reversed, by reversing a conduction direction, the heat absorbing part and the heat emitting part may be alternated. Thus, by controlling the alternation, the temperature may be controlled to a desired temperature by heating or cooling an appropriate part. It may also be possible to heat the original high temperature side and cool the low temperature side. In addition, by installing a heat sink structure in the heat emitting part of the Peltier device or the conduction path having the Peltier device structure, heat dissipation may be improved. The conduction path having the Peltier device structure may be configured by connecting a PN junction formed by a P-type semiconductor and an N-type semiconductor in series, and installing a region by a set of junction parts with a conduction direction of N→P and a region by a set of junction parts with a conduction direction of P→N. For example, while forming or stacking various types of existing known semiconductor materials of the P-type semiconductor and the N-type semiconductor in an appropriate region, semiconductor materials, or conductive materials such as metal of the N→P junction parts and the P→N junction parts may also be installed during the stacking process.

Next, a portion of machining tools or holders to which the present invention is applicable will be described in an aspect of morphology or from disposition of the conduction path. Further, a detection direction of a stress is indicated using an arrow with respect to the conduction path, and thus illustration of a detailed wiring structure will be omitted herein.

A machining tool or holder 400A as shown in (A) of FIG. 10 includes a plurality of conduction paths 92 disposed in a circumferential direction and an axial direction with respect to a shaft member 410A having a rectangular, rhomboidal, or trapezoidal cross section. Detailed examples thereof include a cutting bite.

A machining tool or holder 400A as shown in (B) of FIG. 10 includes a plurality of conduction paths 92 disposed in a circumferential direction and an axial direction of a shaft member 410A having a circular or elliptical cross section. Detailed examples thereof include a drill or a cutting bite.

A machining tool or holder 500A as shown in (A) of FIG. 11 includes a plurality of conduction paths 92 disposed in a surface direction with respect to a flat plate material 510A which widens in the surface direction. Detailed examples thereof include a cutter or a milling cutter. In addition, the shape of the plate material 510A is not limited particularly, and may include various shapes such as a square, a circle, an oval, an ellipse, and a trapezoid. Further, multiple conduction paths 92 may also be formed to be uniform or dispersed over the entire surface.

A machining tool or holder 500B as shown in (B) of FIG. 11 includes a plurality of conduction paths 92 disposed in a surface direction with respect to a belt-shaped plate material 510B which widens in the surface direction. Detailed examples thereof include a cutter or a tip.

A machining tool or holder 500C as shown in (C) of FIG. 11 includes a plurality of conduction paths 92 disposed with respect to an L-shaped plate material 510C obtained by bending a flat plate to have an L-shaped cross section. In this example, the conduction paths 92 may also be disposed to extend across a bending line of the L-shaped plate material 510C.

A machining tool or holder 500D as shown in (D) of FIG. 11 includes a plurality of conduction paths 92 disposed with respect to a plate material 510D obtained by curving a flat plate.

A machining tool or holder 600A as shown in (A) of FIG. 12 includes a plurality of conduction paths 92 disposed on an inner circumferential side and/or an outer circumferential side of a rectangular prismatic member 610A.

A machining tool or holder 600B as shown in (B) of FIG. 12 includes a plurality of conduction paths 92 disposed on an inner circumferential side and/or an outer circumferential side of a cylindrical member 610B. Herein, in particular, a flange or a rim is formed, and conduction paths are also formed in the flange.

A machining tool or holder 700A as shown in (A) of FIG. 13 includes a plurality of conduction paths 92 disposed on an inner circumferential side and/or an outer circumferential side of a hollow or solid substantially cubic, substantially cylindrical, or substantially spherical member 710A.

A machining tool or holder 700B as shown in (B) of FIG. 13 includes a plurality of conduction paths 92 disposed on an inner circumferential side and/or an outer circumferential side of a hollow or solid, partially spherical member 710B. The spherical member 710B may be disposed to measure a stress in a latitude direction and a longitude direction. Detailed examples thereof include a holder (chuck) for a drill.

Although a case of measuring a stress of a machining tool or holder using the conduction paths 92 is illustrated herein, the embodiment is not limited thereto. If the conduction paths 92 changes together in response to a change in the machining tool or holder, and the change in the member is detected based on an electrical change in the conduction paths 92, it may be used for other measurements. Detailed examples thereof may include a displacement (acceleration or rotation), a change in temperature, and a change in pressure of a surface.

Further, various materials may be selected for the machining tool or holder, in addition to metal. For example, plastic or a composite material (carbon fiber reinforced plastic or silica fiber reinforced plastic) may also be selected.

### <Detailed examples of conduction path>

Hereinafter, configurations of a conduction path formed on a surface of a member of a machining tool or holder will be described further. The conduction paths may be formed of a single material. However, the embodiment is not limited thereto. For example, the conduction paths 92 of (A) of FIG. 14 may use different materials in a detection region K extending to reciprocate in one direction, and a wiring region H. For example, the wiring region H is formed of a good conductor material, and the detection region K is formed of a resistor material. In doing so, when the conduction paths 92 in the wiring region H are deformed, the resistance value changes slightly. When the conduction paths 92 of the detection region K are deformed, the resistance value changes greatly. As a result, only a change in a member of the detection region K may be detected efficiently.

Further, to detect stresses in a plurality of directions, the first conduction path 93 extending to reciprocate in a first direction and the second conduction path 94 extending to reciprocate in a second direction may be formed to be independent (separate). However, the embodiment is not limited thereto. For example, the conduction paths 92 of (B) and (C) of FIG. 14 is formed such that the first conduction path 93 and the second conduction path 94 overlap. Further, the electrically insulating layer 91 is disposed between the first conduction path 93 and the second conduction path 94. In doing so, even in a narrow space, a plurality of multidirectional conduction paths or sensor structures may be formed to overlap.

Further, the embodiment is not limited to the conduction paths 92 configured in a linear shape or a belt shape. For example, the conduction paths 92 of (A) and (B) of FIG. 15 are provided in a structure including one electrode 95A, another electrode 95B, and a planar resistance wiring 95C having a circular planar shape. In detail, one pair of toothcomb-shaped electrodes 95A and 95B are stacked on (or under) the planar resistance wiring 95C. Teeth of the pair of toothcomb-shaped electrodes 95A and 95B are alternately provided in between each other with predetermined intervals. The one pair of electrodes 95A and 95B is formed of a good conductor, and the planar resistance wiring 95C is formed of a conductor (resistor) with a resistance, rather than a good conductor. Thus, when a voltage is applied between the pair of electrodes 95A and 95B, charged particles (in this example, electrons; however, in a case of a semiconductor, a vacancy corresponding to positive charges) move and currents flow in the planar resistance wiring 95C present therebetween.

When an external force is applied in the surface direction to press the planar resistance wiring 95C with respect to the conduction paths 92, the planar resistance wiring 95C may extend as shown in a dotted line of (A) of FIG. 15 such that an area thereof may increase, and at the same time, a thickness of the planar resistance wiring 95C decreases (changes from T0 to T) as shown in (C) of FIG. 15. Simultaneously, as shown in (B) and (C) of FIG. 15, a distance between the one electrode 95A and the other electrode 95B increases from d0 to d. Thus, the distance of the planar resistance wiring 95C positioned between the one electrode 95A and the other electrode 95B increases, and at the same time, the thickness thereof decreases such that the resistance value thereof increases. By detecting such an increase in the resistance value, an external force applied to the machining tool or holder may be detected. Further, an electric resistivity or an electric resistance value of the planar resistance wiring 95C may be set to be high, and an electric resistivity or an electric resistance value of the electrodes 95A and 95B may be set to be low. By forming the same as a series of conduction paths, the overall resistance value changes only lightly even when the electrodes 95A and 95B are deformed, and only the external force applied to the planar resistance wiring 95C is detected as a great change in the resistance value.

Hereinafter, a sensor structure 500 corresponding to a modification or an application of the conduction paths 92 of FIGS. 14 and 15 will be described with reference to FIG. 16 and the subsequent figures.

(A) of FIG. 16A illustrates a sensor structure 500 applied to a parent material 32 of a machining tool or holder (in this example, the drill 40). The sensor structure 500 includes a plurality of low resistance partial conducting sections (conducting pieces) 95Q disposed on a surface of a belt-shaped base path 95P formed of a conductive material. Herein, a plurality of square (of course, not necessarily limited to the square shape, and to be provided intermittently as conduction portions with a relatively good conductivity) low resistance partial conducting sections 95Q is disposed with intervals therebetween to widen in a belt length direction on one surface of the base path 95P. Further, the base path 95P is formed of a conductive material with a relatively high resistance value (high resistivity). Meanwhile, the low resistance partial conducting sections 95Q correspond to a conductor (good conductor) with a low resistance value (low resistivity) when compared with the material of the base path 95P. Further, although not shown, an insulating layer is formed on a lower layer of the base path 95P. Here, a layer thickness of the base path 95P is set to be great, but not particularly limited, whereby a deformation of the base path 95P with respect to a torsion of the parent material 32 may increase, and a detection sensitivity may improve. However, when a layer thickness of the base path 95P is overly great, the base path 95P is easy to be greatly affected by a thermal expansion or thermal contraction. Thus, the base path 95P may be set not to be overly thick, for example, may be set to be thick, when compared with the thickness of the low resistance partial conducting sections 95Q. Further, the layer thickness of the low resistance partial conducting sections 95Q may be set to be less than or equal to 1 mm, and may be less than or equal to hundreds of µm, preferably 0.1 µm to tens of µm, when a productivity, an amount of material used, a thermal contraction, a thermal expansion, or a conformability to the deformation of the parent material 32 is added. Of course, if the base path 95P is overly thin, the base path 95P may be set by increasing a thermal insulation or a resistance value thereof.

When a voltage is applied to both ends of the base path 95P, it is assumed electrons flow while selecting a position of as low resistance as possible, as indicated by an arrow of (B) of FIG. 16A. In detail, at positions at which the low resistance partial conducting sections 95Q are absent (that is, regions of intervals d0 of the low resistance partial conducting sections 95Q), electric charges (electrons and the like) move in the base path 95P. Further, at positions at which the low resistance partial conducting sections 95Q are present, electrons move in the low resistance partial conducting sections 95Q or in a vicinity of a boundary between the base path 95P and the low resistance partial conducting sections 95Q.

Describing the sensor structure 500 in another aspect, in the base path 95P, a plurality of high resistance partial conducting sections 95T formed of a conductive material with a high resistivity is disposed with intervals of d1 therebetween, as shown in (C) of FIG. 16A. The intervals d1 correspond to a range in which the low resistance partial conducting sections 95Q are present. Further, the low resistance partial conducting sections 95Q formed of a conductive material with a low resistivity are disposed to connect adjacent high resistance partial conducting sections being paired. At the same time, the plurality of low resistance partial conducting sections 95Q is disposed with intervals of d0 therebetween on the high resistance partial conducting sections 95T. The intervals d0 correspond to a range in which the high resistance partial conducting sections 95T are present. Through the configuration as described above, the high resistance partial conducting sections 95T and the low resistance partial conducting sections 95Q are alternately connected such that it is assumed, when a voltage is applied to both ends, electrons move while alternately selecting the high resistance partial conducting sections 95T and the low resistance partial conducting sections 95Q.

In the base path 95P, the regions in which the high resistance partial conducting sections 95T are absent are defined as auxiliary conducting sections 95U. The auxiliary conducting sections 95U are arranged in parallel with the low resistance partial conducting sections 95Q, and also formed of a material with a high resistivity (here, a conductive material the same as that of the low resistance partial conducting sections 95Q), when compared with the conductive material of the low resistance partial conducting sections 95Q. The auxiliary conducting sections 95U or, virtually, adjacent high resistance partial conducting sections 95T being paired are electrically connected. However, since the low resistance partial conducting sections 95Q are parallel therewith, electrons move on the low resistance partial conducting sections 95Q side. That is, it is assumed that the auxiliary conducting sections 95U function as a wiring which does not bring a dominant electrical conduction, although there is a possibility of some currents flowing therein.

Consequently, the regions corresponding to the intervals d0 of the plurality of low resistance partial conducting sections 95Q in the base path 95P correspond to the high resistance partial conducting sections 95T, and at least a portion of the regions contacting the low resistance partial conducting sections 95Q in the base path 95P correspond to the auxiliary conducting sections 95U.

When the sensor structure 500 configured as described above is curved in one direction such that the surface of the parent material 32 is convex and the base path 95P extends in a longitudinal direction, as shown in (D) of FIG. 16A, the distance between adjacent low resistance partial conducting sections 95Q increases from d0 to d+. As a result of verification performed by the inventor(s) of the present invention, when the base path 95P extends, a resistance value between both ends thereof increases, and a convexly curved state of the parent material 32 may be detected.

When the sensor structure 500 is curved in the other direction such that the surface of the parent material 32 is concave and the base path 95P contracts in the longitudinal direction, as shown in (E) of FIG. 1B, the distance between adjacent low resistance partial conducting sections 95Q decreases from d0 to d-. As a result of verification performed by the inventor(s) of the present invention, in this example, the resistance value between both ends of the base path 95P decreases, and a concavely curved state of the parent material 32 may be detected. That is, by the sensor structure 500 of the present structure, physical phenomena such as a flexion and an extension and contraction in the longitudinal direction may be detected with a good sensitivity due to a change in resistance value. Further, in this example, by setting the thickness of the base path 95P with a high resistance value to be great, when compared with that of the low resistance partial conducting sections 95Q, the base path 95P may be configured to be greatly deformed with respect to the torsion of the parent material 32, when compared with an example of setting the thickness to be small.

The sensor structure 500 may be formed relatively simply and easily, and thus may be formed extensively with respect to a number of parent materials 32 to detect physical phenomena of the parent material 32. For example, as shown in (A) of FIG. 16B, in a case of the parent material 32 having extensive planes such as a wall surface, a floor, a ceiling, and a pillar, the sensor structure 500 being a single circuit is formed to extend over the entire region from a vicinity of one end to a vicinity of the other end in one direction X on a plane. In this example, the single circuit reciprocates a number of times and widens in the shape of bellows over the entire region from the vicinity of one end to the vicinity of the other end in the other direction Y perpendicular to the predetermined direction X. That is, the single circuit is structured to be disposed on the entire region from the vicinity of one end to the vicinity of the other end in both of the direction X and the direction Y. In addition, as shown in (B) of FIG. 16B, a plurality of sensor structures 500 widening over the entire region from from the vicinity of one end to the vicinity of the other end in one direction X may be disposed in the direction Y to detect physical phenomena of the entire plane.

For example, as shown in (A) of FIG. 16C, in a case of the parent material 32 having a belt-shaped surface elongated in one direction, such as a rail of a railroad or a frame such as a roof beam, the sensor structure 500 being a single circuit is formed to extend over the entire region from the vicinity of one end to the vicinity of the other end in the longitudinal direction X thereof. In addition, in the present example, the single circuit reciprocates one time in a longitudinal direction Z. Further, as shown in (B) of FIG. 16C, the sensor structure 500 widening over the entire region from the vicinity of one end to the vicinity of the other end in one direction X may meander in a direction Y to detect physical phenomena of the entire plane.

Next, an example of another configuration of the sensor structure will be described. In the sensor structure 500 of (A) and (B) of FIG. 16D, the low resistance partial conducting sections 95Q may be a lower layer side (the parent material 32 side), and the base path 95P may be an upper layer. That is, the low resistance partial conducting sections 95Q are formed on a rear surface of the base path 95P. In this example, it is also possible to obtain substantially the same output as that of the sensor structure 500 of FIG. 16A. Further, in the case of the present structure, the low resistance partial conducting sections 95Q may be formed first, and then the base path 95P may be formed to cover the entirety of the low resistance partial conducting sections 95Q. As a result, spaces of the intervals of dO of the plurality of low resistance partial conducting sections 95Q are charged with the conductive material of the base path 95P, and thus the spaces correspond to the high resistance partial conducting sections 95T.

Further, the sensor structure 500 of (A) of FIG. 16E is provided in a structure in which the low resistance partial conducting sections 95Q are buried in the base path 95P (in the present embodiment, in an inner portion of a depthwise direction). In this structure, portions corresponding to the intervals d0 of the plurality of low resistance partial conducting sections 95Q correspond to the high resistance partial conducting sections 95T.

Further, the sensor structure 500 of (B) of FIG. 16E does not include a series of base paths 95P, and is formed as if the high resistance partial conducting sections 95T and the low resistance partial conducting sections 95Q are alternately arranged. In this example, edges of the high resistance partial conducting sections 95T and the low resistance partial conducting sections 95Q are electrically connected, and electrons alternately flow in the high resistance partial conducting sections 95T and the low resistance partial conducting sections 95Q. As this application, as shown in (C) of FIG. 16E, the high resistance partial conducting sections 95T and the low resistance partial conducting sections 95Q may have planar shapes, and the high resistance partial conducting sections 95T and the low resistance partial conducting sections 95Q may overlap such that (not end portions thereof) planes thereof may be in surface contact with each other. Here, a layer thickness of the high resistance partial conducting sections 95T may be set to be great, but not particularly limited, whereby a deformation of the high resistance partial conducting sections 95T with respect to a torsion of the parent material 32 may increase, and a detection sensitivity may improve. However, when the layer thickness of the high resistance partial conducting sections 95T is overly great, the high resistance partial conducting sections 95T are easy to be greatly affected by a thermal expansion or thermal contraction. Thus, the high resistance partial conducting sections 95T may be set not to be overly thick, for example, may be set to be thick, when compared with the thickness of the low resistance partial conducting sections 95Q. Further, the layer thickness of the low resistance partial conducting sections 95Q may be set to be less than or equal to 1 mm, and may be less than or equal to hundreds of µm, preferably, 0.1 µm to tens of µm, when a productivity, an amount of material used, a thermal contraction, a thermal expansion, or a conformability to the deformation of the parent material 32 is added. Of course, if the low resistance partial conducting sections 95Q are overly thin, the base path 95P may be set by increasing a thermal insulation or a resistance value thereof.

As shown in (A) through (C) of FIG. 16F, the sensor structure 500 may be multi-layered. In detail, in the base path 95P, the plurality of high resistance partial conducting sections 95T formed of a conductive material with a high resistivity are disposed with intervals therebetween. By the low resistance partial conducting sections 95Q stacked on the surface of the base path 95P, the corresponding high resistance partial conducting sections 95T may be electrically connected. Further, regions in which the high resistance partial conducting sections 95T are absent in the base path 95P correspond to the auxiliary conducting sections 95U. On the surface of the low resistance partial conducting sections 95Q, second low resistance partial conducting sections 95H are formed as a part thereof. The second low resistance partial conducting sections 95H are formed of a conductive material with a one-layer lower resistivity, when compared with the low resistance partial conducting sections 95Q. Thus, as shown in (C) of FIG. 16F, electrons moving in the low resistance partial conducting sections 95Q move further toward the second low resistance partial conducting sections 95H in the meantime and return to the low resistance partial conducting sections 95Q.

That is, focusing only on the low resistance partial conducting sections 95Q and the second low resistance partial conducting sections 95H, the low resistance partial conducting sections 95Q correspond to a so-called base path and include at least one pair of high resistance partial conducting sections 95T' and an auxiliary conducting section 95U' disposed therebetween. The second low resistance partial conducting sections 95H are provided to electrically connect high resistance partial conducting sections 95T' being paired. As a result, in the sensor structure 500 of the present example, high resistance partial conducting sections with a relatively high resistance and low resistance partial conducting sections with a relatively low resistance are formed in a multi-layered state, and thus the sensitivity may further improve.

Of course, in the sensor structure 500, when the low resistance partial conducting sections 95Q and the second low resistance partial conducting sections 95H are taken as an integral body and defined as low resistance partial conducting sections as a whole, the sensor structure 500 may be considered substantially the same as the sensor structure 500 of FIG. 16A.

Further, as shown in (A) of FIG. 16G, when the parent material 32 is a rod-shaped member (of which a cross-sectional shape is not limited to a circle, and may be a rectangular column), annular high resistance partial conducting sections 95T extending in a circumferential direction and annular low resistance partial conducting sections Q extending in the circumferential direction may be disposed alternately in an axial direction. When a voltage is applied to both ends of the axial direction, it is possible to detect movements such as a flexion, a torsion, and a tension of a parent material being a rod-shaped member with high precision. Further, as shown in (B) of FIG. 16G, a plurality of high resistance partial conducting sections 95T may be disposed with predetermined intervals therebetween in a circumferential direction.

Further, as shown in (A) of FIG. 16H, in the parent material 32 having a surface (a flat surface or a curved surface), a planar base path 95P may be formed to widen to the entire surface, and the plurality of low resistance partial conducting sections 95Q may be disposed on a surface of the base path 95C. In the present example, a plurality of square (not necessarily limited to the square shape, and conducting sections with a relatively good resistance value may be provided intermittently) low resistance partial conducting sections 95Q may be disposed with intervals therebetween to widen in a surface direction (for example, in a shape of matrices, a shape of a honeycomb, or a random shape). In the sensor structure 500, when a voltage is applied from two separate positions, it is possible to detect a deformation of the parent material 32. When a planar wiring is built, concern about disconnection is alleviated, and long-term stable sensing is achieved. Further, examples are not limited to the low resistance partial conducting sections 95Q disposed in the shape of matrices. As shown in (B) of FIG. 16G, a plurality of belt-shaped low resistance partial conducting sections 95Q may be disposed with intervals therebetween in a belt width direction, whereby sensing on the entire surface may be achieved.

In any case, if the sensor structure 500 with a predetermined area, as shown in FIGS. 16C through 16H, is adopted, the sensor structure 50 may be cracked or damaged, worn, or defaced in response to the parent material 32 being cracked or damaged, worn, or defaced. While there is no damage to the function of the sensor structure 500, a change in the resistance value may be output due to a change in the conduction area (volume). That is, by forming the planar sensor structure 500 on the entire surface of the machining tool or the holder 400A of FIGS. 10 through 13, various physical changes may be detected stably. In addition, the structure of the planar sensor structure 500 is not limited to the above example, and may be applied to a single electrically resistive layer.

For example, as an application thereof, a sensor structure 500 may be formed on an annular side surface (circumferential surface) of a brake pad 1000. When a thickness of the brake pad 1000 decreases in response to a defacement of a pad surface 1002, a belt width of the sensor structure 500 decreases in conjunction with the decrease in the thickness, and thus a change in the resistance value may be detected. In this example, as shown in (B) of FIG. 16I, a plurality of sensor structures 500 may be formed on the circumferential surface. As shown in (C) of FIG. 16I, sensor structures 500 may be formed consecutively on the entire circumferential surface, and one pair of conduction terminals may be formed at separate positions (opposite phases).

Further, in an application example as shown in FIG. 17, a belt-shaped resistance wiring 94C may be a parallel circuit, and a plurality of conductive portions (conductive pieces) 95D may be disposed in a parallel region X including parallel wiring portions disposed adjacent in a belt width direction. In doing so, a detection sensitivity in a belt length direction of the parallel wiring portion 94D of the parallel region X may increase. Further, when a location (range) in which the parallel region X is formed is limited, the parallel wiring portion 94D may be disposed in the belt length direction, for example, as shown in FIG. 18. In addition, the conductive portions 95D may be formed on the rear surface of the belt-shaped resistance wiring 94C (the surface of the drill side).

Further, in an application example, as shown in the conduction paths 92 of (A) and (B) of FIG. 19, the electrodes 95A and 95B may be disposed on both outer edges of the planar resistance wiring 95C, and the plurality of conductive portions (conductive pieces) 95D may be disposed on a surface of the planar resistance wiring 95C. Herein, the plurality of squire conductive portions 95D (not necessarily limited to the square shape, and to be configured by providing conduction portions 95D with a relatively good conductivity intermittently) may be disposed with intervals therebetween on one surface of the planar resistance wiring 95C to widen in a surface direction (for example, in a shape of matrices or a honeycomb). The electrodes 95A and 95B are disposed at a total of four positions such that one pair (A1, A2) is provided in one direction, and one pair (B1, B2) is provided in another direction.

When a voltage is applied to each of two pairs of electrodes 95A and 95B, electrons move and currents flow in the conductive portions 95D, and one surface layer of the planar resistance wiring 95C between adjacent conductive portions 95D that are a distance d0 apart from each other, as indicated by arrows of (B) of FIG. 19. Thus, the currents may flow dominantly on the one surface layer of the planar resistance wiring 95C.

Thus, when the conduction paths 92 are curved in one direction such that one surface of the base path 95P extends as shown in (C) of FIG. 19, a distance between adjacent conductive portions 95D increases from d0 to d. Thus, a resistance value between the pair (A1, A2) of electrodes 95A and 95B in one direction may increase, and a state of being curved may be detected. Although not shown particularly herein, when the planar resistance wiring 95C is curved in another direction, a resistance value between the pair (B1, B2) of electrodes 95A and 95B in another surface direction increases.

Further, although an example of the square conductive portions 95D is illustrated, a polygon such as a triangle, a rectangle, a pentagon, a hexagon or an octagon, a circle such as an ellipse or a regular circle, and other various shapes may be employed. For example, in a case of hexagonal conductive portions 95D, the conductive portions 95D may be disposed in a shape of a so-called honeycomb as shown in (A) of FIG. 20. In this example, at least three pairs (A1, A2), (B1, B2), and (C1, C2) of electrodes may be disposed in a vicinity thereof to face each other. In addition, as shown in (B) of FIG. 20, like a so-called soccer ball, a combination of pentagonal and hexagonal conductive portions 95D may be disposed on a surface of a spherical planar resistance wiring 95C. Further, when the planar resistance wiring 95C is used as a semiconductor or an insulator, a change in a capacitance between electrodes may also be detected.

Further, the embodiment is not limited to an example in which a torsion or a deformation is detected by the conduction paths 92. For example, as shown in FIG. 21, a first partial conduction path 92X having a first resistivity value (or, a work function value) may be connected to both ends of a second partial conduction path 92Y having a second resistivity value (or, a work function value), one junction may be set as a hot junction T1, and the other junction may be set as a cold junction T2. In this example, it is possible to obtain an electromotive force. This may be simply implemented through different resistivity values, that is, through different materials of the first partial conduction path 92X having the first resistivity and the second partial conduction path 92Y having the second resistivity value. When a temperature difference occurs between the hot junction T1 and the cold junction T2, a voltage V is generated between the hot junction T1 and the cold junction T2 and currents flow according to the so-called Seebeck effect. Thus, a change in the temperature occurring in the conduction-path-attached-member may be sensed, or an electromotive force may be obtained by the conduction paths 92. Thus, by combining a conduction path which obtains an electromotive force and a conduction path which detects a stress based on a change in the resistivity value as described above, a stress may be sensed while generating power by itself, or detected data may be transmitted to an outside.

Hereinafter, configurations of conduction circuits when forming a plurality of conduction paths 92 will be described with reference to FIGS. 22 through 27.

FIG. 23 illustrates a conduction circuit 201 formed in a machining tool or holder 202. The conduction circuit 201 is configured by connecting a plurality of conduction paths 92 being electric resistors in parallel (see (a) of FIG. 22). In doing so, for example, when the machining tool or holder 202 has a desired wide area, the plurality of conduction paths 92 may be disposed to be distributed, and thus a torsion around each conduction path 92 may be detected. Further, with respect to all the conduction paths 92, a voltage is applied from a pair (or a plurality of pairs) of good conductors being a common terminal A and a common terminal B, and thus a circuit configuration of the conduction circuit 201 may be simplified.

In this example, the conduction paths 92 are set to have resistances R1, R2, R3, and R4, respectively, and both ends of each of the four conduction paths 92 are connected to the terminal A and the terminal B via a good conductor. Further, the number of conduction paths 92 is not limited to "4", and may be any value. In addition, the number of terminals to measure resistances is also not limited to "2". The resistances R1, R2, R3, and R4 are set to different resistances, and differences between the resistances R1, R2, R3, and R4 are set to be greater than maximum resistance variations δR1, δR2, δR3, and δR4 that are generated and obtained when the conduction paths 92 sense torsions within standards.

The conduction circuit 201 is formed directly in the machining tool or holder 202. Methods of forming the conduction paths 92 may include coating, transferring, lithography, cutting, vapor deposition, sputtering, printing, a semiconductor process, or any one or combination of at least two thereof. A portion being an electric resistor may be formed using a paste or a conductive paint with a high resistivity, or by forming a thin film of metal with a high resistivity, such as nichrome, as the conduction paths 92. The portion being the electric resistor may be formed by forming a thin film of metal with a low resistivity, such as copper or aluminium, as a good conductor. Further, in a case in which the machining tool or holder 202 is an electric conductor, the conduction circuit 201 may be formed after applying an insulator as a base. The base may include, for example, polymethyl methacrylate (PMMA) resin.

In the example of (a) of FIG. 22, a combined resistance R between the terminal A and the terminal B is in a normal state without interfering in the machining tool or holder 202. In a case in which all circuit patterns are connected, a relationship of 1/R=1/R1+1/R2+1/R3+1/R4 may be established, and the combined resistance R may be obtained by calculation.

Further, when a deformation or a change in the temperature occurs in the machining tool or holder 202, the change may be sensed based on a change in the resistance of the conduction paths 92. For example, when the conduction paths 92 having the resistance R1 is deformed by a torsion and the resistance increases by δR1, a relationship of 1/R=1/(R1+δR1)+1/R2+1/R3+1/R4 is established. Various phenomena or changes in a physical state may be sensed based on a change in the combined resistance R.

In this regard, when assuming that the machining tool or holder 202 is damaged due to a vibration or degradation over time, and a cut part 203 is generated as shown in (b) of FIG. 22, a combined resistance R' between the terminal A and the terminal B may satisfy a relationship of 1/R'=1/R2+1/R3+1/R4. Thus, by referring to the resistance between the terminal A and the terminal B, occurrence of a problem or a wear in the machining tool or holder 202 may be detected. Since R1 to R4 are set as different resistances, a conduction path 92 connected to a path in which a problem occurs may be detected by measuring an electric resistance between the terminal A and the terminal B. Although an example of electric resistors being arranged simply in parallel is illustrated herein, the conduction circuit 201 may also be provided in a structure in which electric resistors are connected in series, or in a structure in which series connection and parallel connection are mixed.

FIG. 23 illustrates an example of a conduction circuit 204 having a shape of 2D matrices, which is a modified example of the conduction circuit 201 of FIG. 22. The 2D matrices-shaped conduction circuit 204 as shown in (a) of FIG. 23 is configured by connecting a plurality of conduction paths 92 being electric resistors to each other in a shape of a mesh (shape of grids). A conduction path 92 and another conduction path 92 are connected in a circuit pattern formed by good conductors. The conduction circuit 204 includes a terminal A, a terminal B, a terminal C, and a terminal D to measure electric resistances. For example, by measuring a resistance between the terminal A and the terminal C, a change in the machining tool or holder 202 may be sensed.

Further, when one of the plurality of conduction paths 92 is disconnected or disabled, a rough change regarding whether the disconnection occurred at a single position or at least two positions may be obtained simply although the conduction paths 92 have the same electric resistances. Further, when the respective conduction paths 92 have different resistance values, for example, different prime resistance values, in unit of ohms, for example, 2 kiloohms, 3 kiloohms, and 5 kiloohms, a disabled, for example, broken or worn, portion of the machining tool or holder 202 in which the conduction paths 92 are formed may be estimated by measuring resistances between terminals. For example, when all resistance values are set to prime numbers, a resistance value of a disconnected conduction path may be estimated from a factorization of a prime product included in a combined resistance at a parallel circuit, and thus a position of the disconnected conduction path 205 may be specified.

(b) of FIG. 23 illustrates another modified example of the conduction circuit 204 having the shape of 2D matrices. In this conduction circuit 204, conduction paths 92 disposed in a shape of matrices are connected to each other in series. In a case of this series circuit, the whole of the conduction circuit 204 may not be sensed when a portion is disconnected, and thus an abnormality may be detected based on the disconnection. Meanwhile, a conduction circuit including parallel connection as shown in (a) of FIG. 22 or (a) of FIG. 23 may be suitable for measurement for a long time since sensing may be performed using a remaining portion although a portion is disconnected.

Further, although (b) of FIG. 23 illustrates only the terminal A and the terminal B, a portion of the structure being damaged may be specified later by installing terminals to measure the respective conduction paths 92 (or a predetermined group of a plurality of conduction paths 92). Thus, in regular sensing, by measuring a resistance between the terminal A and the terminal B, a safety of the whole of the machining tool or holder 202 may be checked easily. At the same time, when performing a detailed inspection after an abnormality is detected or an unexpected event occurs, by measuring each resistance between conduction paths 92, a portion of the machining tool or holder 202 being damaged may be specified.

As shown in FIGS. 22 and 23, the conduction circuit including the conduction paths 92 widening in a 2D plane has an electric resistance that changes as a length, a thinness, or a thickness thereof changes. Thus, by attaching a conduction-path-formed member having a shape of a sheet or a mesh in which this conduction circuit is formed to a machining tool or holder, a torsion thereof may be sensed in real time. In addition, by disposing memories in a portion of each conduction circuit to preserve sensing history data, a history of vibrations occurring during a cutting process may be accumulated accurately, and posterior data falsification may be prevented.

Further, in the examples of FIGS. 22 and 23, a torsion of the machining tool or holder is generally sensed. In addition, when a cut part is generated in the conduction circuit, a position thereof may be specified easily. Furthermore, the wear of the machining tool or holder may also be utilized to restrictively detect a defect (that is, a disconnection of the conduction circuit).

Further, although FIG. 23 illustrates a case of connecting the plurality of conduction paths 92 in a shape of 2D matrices, the plurality of conduction paths 92 may also be connected to each other in a shape of 3D matrices (3D shape).

Further, to install the plurality of conduction paths 92 having different resistances directly in the machining tool or holder as shown in FIG. 22 or 23, a circuit pattern thereof needs to be designed in advance. In this example, a plurality of pieces of basic pattern information having predetermined resistances may be prepared in a memory of such as a computer. Circuit data may be generated by combining such pattern information using a circuit generation program executed by the computer. The circuit data may be transmitted to a printer or a semiconductor film forming device. By applying/printing a metal paste or a conductive paint, or depicting a resist film of a semiconductor process, an actual conduction circuit may be formed. An example of this type of designing process is illustrated in FIG. 24.

(a) of FIG. 24 illustrates, in a reference range having a predetermined area, such as a square (not limited to the square, for example, a regular triangle, a rectangle, a rhombus, a regular hexagon, or other suitable geometric shapes), pattern information 206a including a pair of terminals 207 disposed at centers of opposite sides, and a unit resistor 208 disposed between the pair of terminals 207. The unit resistor 208 is set to have a reference resistance, for example, 1 kiloohm, and thus the print pattern information 206a is a 1-kiloohm pattern.

Pattern information 206b as shown in (b) of FIG. 24 includes two unit resistors 208 directly between the pair of terminals 207, and thus is a 2-kiloohm pattern. Pattern information 206c as shown in (c) of FIG. 24 is a 3-kiloohm pattern, pattern information 206d as shown in (d) of FIG. 24 is a 5-kiloohm pattern, and pattern information 206e as shown in (e) of FIG. 24 is a 7-kiloohm pattern.

Further, pattern information 206f as shown in (f) of FIG. 24 includes a total of four terminals 207 disposed at centers of 4 edges in a square reference range. A unit resistor 208 is disposed at a junction of all the terminals 207. In doing so, when predetermined two terminals 207 among the total of four terminals 207 are used, a resistance of 1 kiloohm may be obtained. In addition, as shown in pattern information 206g, 206h, and 206i of (g), (h), and (i) of FIG. 24, patterns for connecting good conductors only may be prepared. By accumulating the pattern information 206a through the pattern information 206i in the memory of the computer, and combining the information on a program, pattern information (circuit information) having a desired resistance may be generated easily. Further, although a case of disposing a terminal linked to an adjacent pattern at a center of each side of the square reference range is illustrated herein, the terminal linked to the adjacent pattern may also be disposed at each corner of the square reference range.

FIG. 25 illustrates circuit information generated by combining fifteen pieces of pattern information. Here, a 4-kiloohm conduction circuit, a 13-kiloohm conduction circuit, and a 14-kiloohm conduction circuit, each in which a plurality of pieces of pattern information is disposed in series, are connected to each other in parallel. For example, the circuit information may be input into an applying device, and the applying device may apply a good conductor paste or a resistor paste on a machining tool or holder, whereby a conduction circuit may be formed. Further, the same pattern may be depicted and masked with respect to the machining tool or holder by photoresist, and a desired conduction circuit may be formed by a film forming process such as semiconductor or vapor deposition.

FIG. 26 illustrates another example of a machining tool or holder. In this example, a conduction-path-attached-member 217 is provided separately with respect to a machining tool or holder 212. The conduction-path-attached-member 217 is a belt-shaped material including a plurality of conduction circuits. The conduction-path-attached-member 217 is a so-called smart band, and may be spirally wound over the machining tool or holder 212 as shown in (a) of FIG. 26 to detect a physical phenomenon based on a deformation thereof. Methods of printing the conduction circuit on the conduction-path-attached-member 217 may include transferring, etching, coating, and a semiconductor process. A material of the conduction-path-attached-member 217 includes fabric, nonwoven fabric, resin, fiber-reinforced synthetic resin including various reinforced fibers such as a carbon fiber, a metal fiber, a silicon fiber and a glass fiber, paper, rubber, or silicone. A material of the conduction path may include aluminium, copper, an organic conductor, or other electric conductors. As shown in (b) of FIG. 26, an ID signal sending circuit may be formed in the conduction circuit 213 to send an independent individual ID. The ID signal sensing circuit may be disposed by attaching an IC chip later. Thus, a position of the conduction-path-attached-member 217 at which each conduction circuit 213 is to be positioned may be verified (identified) in advance. For example, after the smart band 217 is provided, individual IDs are received from all conduction circuits 213 through a wireless access device 218, as shown in (b) of FIG. 26, and a position of the machining tool or holder 212 at which each individual ID (conduction circuit 213) is disposed may be verified and preserved as data. After that, when a deformation occurs in the machining tool or holder 212, a resonance frequency of a predetermined antenna may change. By collecting a corresponding individual ID from the conduction circuit 213 together with information related to the change in the frequency, a deformation of the machining tool or holder 212 may be detected. Further, although a case of assigning an individual ID to each conduction circuit 213 is illustrated herein, a partial ID may be assigned in a unit of the conduction-path-attached-member 217 being a smart band, or an ID may be assigned based on other rules.

FIG. 27 illustrates another example of a machining tool or holder. In this example, a structure in which an electronic component package type sensor 192 is provided separately in the machining tool or holder 212 is provided. The sensor 192 may include various sensors, for example, a thermistor, or an acceleration sensor or a gyro sensor manufactured using MEMS technology, depending on purposes. In a case of the acceleration sensor, a 1-axis sensor, a 2-axis sensor, and a 3-axis sensor may be appropriately selected. The sensor 192 may be mounted, for example, on a flexible substrate, and the flexible substrate may be attached to the machining tool or holder using an adhesive. Further, a wiring to supply power to the sensor 192, or a wiring to acquire a detected signal of the sensor 192 may be formed on the flexible substrate.

Further, although FIG. 5C illustrates an example of forming the conduction paths 92 to reciprocate in a longitudinal direction or a spiral direction of the drill 40 being a machining tool, and detecting a change in the resistance value caused by an extension and contraction or a defect of the conduction paths 92, the embodiment is not limited thereto. For example, as shown in (A) and (B) of FIG. 28, an outward path 92A formed of a good conductor and extending in a longitudinal direction, a return path 92B of a good conductor formed to be parallel to the outward path 92A with an interval therebetween, and a plurality of suspension paths 92C of a resistive material to be suspended between the outward path 92A and the return path 92B may be formed in a shape of a ladder. Further, the multiple suspension paths 92C are suspended between the outward path 92A and the return path 92B so as to extend in a gap direction (width direction). In doing so, the overall resistance value changes in response to a defect of the suspension paths 92C caused by wear of the end side of the drill 40, and thus an amount of wear of cutting edges may be detected. Further, even when a portion of the outward path 92A, the return path 92B, or the suspension paths 92C is disconnected in response to the drill 40 being bent or cracked in the middle of the longitudinal direction, a change in the resistance value may be detected by a remaining portion of the outward path 92A, the return path 92B, and the suspension paths 92C. That is, it is possible to reduce an undetectable situation resulting from the disconnection. In the present example, a structure in which a series of portions with different electric resistivity values and/or conductive material portions are provided is obtained.

Here, base end sides of the outward path 92A and the return path 92B are external connection terminals 92T, are connected to external wirings provided in the holder or another member not shown particularly, and are supplied with power from the external wirings. As in the present example, when a machining tool is provided in a columnar shape, the plane 42A may be formed with respect to the shank portion 42, for example, using D cut, two chamfering, or multiple chamfering, and the external connection terminals 92T may be arranged on the plane 42A, whereby positioning with the external wirings may be performed definitely.

Further, as shown in (C) of FIG. 28, instead of the plurality of suspension paths 92C, a planar (belt-shaped) resistance path 92D may be disposed between the outward path 92A and the return path 92B. In doing so, the overall resistance value changes in response to a deflect of the planar (belt-shaped) resistance path 92D caused by wear of the end side of the drill 40, and thus an amount of wear of cutting edges may be detected. Further, even when a portion of the outward path 92A, the return path 92B, or the planar (belt-shaped) resistance path 92D is disconnected due to in response to the drill 40 being bent or cracked in the middle of the longitudinal direction, a change in the resistance value may be detected by a remaining portion of the outward path 92A, the return path 92B, and the planar (belt-shaped) resistance path 92D. That is, the resistance value changes when the length of the planar (belt-shaped) resistance path 92D increases or decreases in response to a torsion or a vibration of the drill 40, and thus it is possible to detect a movement of the drill 40.

Further, although an example of forming the external connection terminals 92T by forming the plane 42A in the shank portion 42D is illustrated, planar external connection terminals 92T may be formed along an outer circumferential surface of a columnar member, for example, as shown in (D) of FIG. 28. A large area of a junction may be secured, and thus conduction with external wirings may be performed definitely.

Further, although FIG. 5C illustrates an example of forming the conduction paths 92 on the bottom surface 211u of the chip space of the drill 40, the embodiment is not limited thereto. As shown in FIG. 29, the conduction paths 92 may be formed on an outer circumferential surface of the blade portion 44b in the body portion 44. In detail, as shown in (B) of FIG. 29, a groove 44x for conduction paths may be formed separately on the outer circumferential surface of the blade portion 44b, and the outward path 92A, the return path 92B, and the planar (belt-shaped) resistance path 92D may be formed in the groove 44x, through insulating coating not shown particularly.

Further, although FIG. 2 illustrates an example of forming the first conduction path 93 to extend in the axial direction J being the first direction and reciprocate to widen in a portion of range of the circumferential direction S, the embodiment is not limited thereto. For example, as shown in FIG. 30, the first conduction path 93 may be formed to extend in the axial direction J being the first direction and reciprocate on substantially the entire circumference in the circumferential direction. In doing so, even when the drill 40 is bent in many directions or vibrates (is axially misaligned), such a movement may be detected using the single conduction path 93.

Hereinafter, an example of forming the conduction paths 92 being a sensor, with respect to a tip 140 for cutting will be described with reference to FIG. 31. As shown in (A) of FIG. 31, the tip 140 includes a nose 140A being triangular when viewed from a plane and being a vertex of a corner, and blade portions 140B formed at both side edges of the nose 140A. The conduction paths 92 may be formed on the plane and the sides so as to include the nose 140A and the blade portions 140B. Further, in the conduction paths 92, one pair of external connection terminals 92T is formed at both ends at which the nose 140A is inserted in the middle. In addition, although not shown particularly, a female screw hole for fastening a clamp terminal, for example, in a shape of a washer, may be formed in the external connection terminals 92T.

As shown in (B) of FIG. 31, a receiving terminal 142B to contact the external connection terminals 92T is formed on a receiving surface 142A for a tip in a tip holder (shank) 142. Electricity is supplied from a main body side of a cutting device not shown particularly to the receiving terminal 142B.

As shown in (C) of FIG. 31, when the tip 140 is provided on the receiving surface 142A of the tip holder 142, the external connection terminals 92T and the receiving terminal 142B naturally contact, and thus electricity is supplied to the conduction paths 92 through the receiving terminal 142B, whereby a state of the tip 140 may be detected. In detail, when a portion of the nose 140A or the blade portions 140B is worn, the conduction paths 92 is worn together, and the resistance value of the conduction paths 92 changes. Thus, by sensing the resistance value, a replacement timing of the tip 140 may be determined. Further, when a parent material of the tip 140 or the tip holder 142 is a conductive material, an insulating layer is formed as a ground layer of the conduction paths 92. When the tip 140 or the tip holder 142 is formed of a non-conductive (or high-resistance) material (for example, ceramics), the ground layer may be omitted.

Further, as shown in (D) of FIG. 31, when the tip 140 is polygonal and a plurality of vertices can each be used as the nose 140A for cutting, the conduction paths 92 independent of each other and the external connection terminals 92T may be formed with respect to each nose 140A and blade portions 140B on both sides thereof. When a predetermined nose 140A is selected from the plurality of noses 140A and arranged in the tip holder 142, an external connection terminal 92T of a conduction path 92 corresponding to the selected nose 140A may contact the receiving terminal 142B of the tip holder 142.

Further, as in a tool bite 240 of (A) of FIG. 32, the conduction paths 92 may be formed restrictively in a nose 240A (cutting edge) and not in blade portions on both sides thereof. In doing so, only wear of a portion of the nose 240A may be detected.

(B) of FIG. 32 illustrates an example of forming the conduction paths 92 in an end mill 340. Here, the conduction paths 92 are formed along ridges of spiral peripheral cutting edges 340A of the end mill 340. In doing so, a degree of wear of the peripheral cutting edges 340A may be detected by the conduction paths 92. In this example, each conduction path 92 may be formed to include the outward path 92A and the return path 92B, as shown in (B) or (C) of FIG. 28.

Further, in the conduction paths 92 of FIG. 16, in a case of a structure in which a plurality of conductive portions (conductive pieces) 95D of a low-resistivity material is disposed on a surface of the belt-shaped resistance wiring 94C formed of a high-resistivity material, a range of formation of the belt-shaped resistance wiring 94C may be limited to a region in which a physical phenomenon is to be detected. When the range of the belt-shaped resistance wiring 94C extends to another region, noise is likely to occur. In detail, as shown in (A) and (B) of FIG. 33, a supply wiring 95R which supplies power to the belt-shaped resistance wiring 94C may be formed of a low-resistivity material.

Further, the supply wiring 95R may be formed on a plane on which the conduction paths 92 are disposed or a plane (for example, the rear surface as in (B) of FIG. 33) parallel thereto. Although the supply wiring 95R is formed of a low-resistance material, the resistance value thereof may change somewhat when a machining tool is deformed or displaced. There, in the above configuration, behavior characteristics of a great change in the resistance value of the conduction paths 92 of the machining tool and a minute change in the resistance value of the supply wiring 95R are similar. Thus, the minute change in the resistance value of the supply wiring 95R is difficult to be a noise component with respect to a detected signal of the conduction paths 92.

Further, in the present embodiment, a drilling machine using a drill is provided as an example of the cutting device. However, the embodiment is not limited thereto. For example, the cutting device includes a lathe such as a general-purpose or NC turret lathe, a milling machine using a milling cutter or an end mill, a shaping machine using a bite, a flat milling machine using a bite, a drilling machine using a reamer or a tap, a boring machine using a bite, a broaching machine using a broach, a hobbing machine (hob), a gear cutting machine such as a gear shaper (rack cutter or pinion cutter), a grinding using whetstone, a contour machine, a band-sawing machine, a machining center, a horning processing machine, a deburring machine/chamfering machine, and a cutting machine.

Hereinafter, an example of directly forming the conduction paths 92 being a sensor, with respect to the tip (cutting bite) 140 for cutting will be described with reference to FIG. 34. As shown in (A) of FIG. 34, the tip 140 is substantially triangular when viewed from a plane and has a desired thickness. Thus, when focusing on a single corner 150 to be the nose 140A of the tip 140, the corner 150 is in a shape of a triangular pyramid. A vertex of the corner 150 is the nose 140A. In detail, the corner 150 includes a first surface 152, a second surface 154, and a third surface 156 as surfaces constituting the triangular pyramid. Further, the first surface 152 is a flat surface in the tip 140, and the second surface 154 and the third surface 156 are side surfaces. Based on the nose 140A, a boundary (ridge) 155A of the first surface 152 and the second surface 154 is a first blade portion 140B, and a boundary (ridge) 155B of the first surface 152 and the third surface 156 is a second blade portion 140C. Further, a blade portion is not formed on a boundary (ridge) 155C of the second surface 154 and the third surface 156.

The conduction paths 92 formed at the corner 150 includes a planar resistance wiring 190, and a first electrode 195 and second electrodes 196 arranged with an interval therebetween while contacting the planar resistance wiring 190.

The planar resistance wiring 190 includes a first planar region 162 to cover the first surface 152, a second planar region 164 to cover the second surface 154, and a third planar region 166 to cover the third surface 156. The first planar region 162, the second planar region 164, and the third planar region 166 are continuous with each other so as to cross the boundaries 155A, 155B, and 155C, and extend to a range including the nose 140A. Thus, the planar resistance wiring 190 covers the nose 140A and the three boundaries 155A, 155B, and 155C extending from the nose 140A.

The first electrode 195 is disposed in the first planar region 162, and the second electrodes 196 are disposed in the second planar region 164 and the third planar region 166. The first electrode 195 is formed in a belt or linear shape along a vicinity of an end edge of the first planar region 162 so as to enclose the nose 140A, with an interval from the nose 140A. Further, the first electrode 195 includes a linear end edge 195A facing the second electrodes 196 side. When a voltage is applied between the first electrode 195 and the second electrodes 196 side, the end edge 195A principally transmits and receives electrons to and from the first planar region 162. A direction in which the end edge 195A extends has an angle with respect to both of the boundary 155A of the first surface 152 and the second surface 154 and the boundary 155B of the first surface 152 and the third surface 156 (is non-parallel to both thereof). In detail, the end edge 195A, the boundary 155A, and the boundary 155B form a triangle.

The second electrode 196 formed in the second planar region 164 is formed in a belt or linear shape along a vicinity of an end edge of the second planar region 164, with an interval from the nose 140A. The second electrode 196 includes a linear end edge 196A facing the first electrode 195 side. When a voltage is applied between the first electrode 195 and the second electrodes 196 side, the end edge 196A principally transmits and receives electrons to and from the second planar region 164. A direction in which the end edge 196A extends may be parallel to the boundary 155A. Further, the direction in which the end edge 196A extends may be substantially perpendicular to the boundary 155C. Of course, the angle is not necessarily limited to the right angle.

The second electrode 196 formed in the third planar region 166 is formed in a belt or linear shape along a vicinity of an end edge of the third planar region 166, with an interval from the nose 140A. The second electrode 196 includes a linear end edge 196A facing the first electrode 195 side. When a voltage is applied between the first electrode 195 and the second electrodes 196 side, the end edge 196A principally transmits and receives electrons to and from the third planar region 166. A direction in which the end edge 196A extends may be parallel to the boundary 155B. Further, the direction in which the end edge 196A extends may be substantially perpendicular to the boundary 155C. Of course, the angle is not necessarily limited to the right angle.

Further, the tip 140 includes, as the conduction paths 92, an external junction 195B to supply power to the first electrode 195. The tip 140 further includes external junctions 196B to supply power to the second electrodes 196. The external junctions 196B are provided independently in the second electrode 196 of the second planar region 164 side and the second electrode 196 of the third planar region 166 side. Although the second electrode 196 of the second planar region 164 side and the second electrode 196 of the third planar region 166 side are electrically connected to each other across the boundary 155C, they may be disconnected in response to a workpiece contacting the boundary 155C. Thus, the above configuration is performed to apply power to each of the second electrodes 196 being disconnected, even in that case.

(B) of FIG. 34 illustrates the first through third surfaces 152, 154, and 156 unfolded into a plane while focusing on the corner 150 in the shape of the triangular pyramid. As shown in the planar development view, the first electrode 195 and the second electrodes 196 are formed in a belt shape. Thus, when a voltage is applied therebetween, currents flow in the entire planar resistance wiring 190 (the first planar region 162, the second planar region 164, and the third planar region 166). As a result, in response to a defacement or a defect of a portion of the planar resistance wiring 190, a flow of currents is likely to change. Thus, an abnormality thereof may be detected with high sensitivity. Meanwhile, as shown in the planar development view, the end edge 195A of the first electrode 195 and the end edges 196A of the second electrodes 196 are non-parallel to each other. In this example, distances between both outer ends of the end edge 195A and both outer ends of the end edges 196A decrease and a central side retreats in (B) of FIG. 34. Thus, the resistance value of the planar resistance wiring 190 between the end edge 195A of the first electrode 195 and the end edges 196A of the second electrodes 196 decreases at the outer sides and increases at the central side. Thus, currents are difficult to flow in a vicinity of the nose 140A, when compared to a periphery thereof, and a detection sensitivity is likely to decrease somewhat in the vicinity of the nose 140A. An example of a tip to alleviate such a sensitivity drop is shown in FIG. 35.

In a tip 140 of (A) of FIG. 35, the first electrode 195 is formed in a shape of V with an interval from the nose 140A. As a result, a direction in which the end edge 195A of the first electrode 195 extends is substantially parallel to both the boundary 155A of the first surface 152 and the second surface 154 and the boundary 155B of the first surface 152 and the third surface 156. Except for the above configuration, the tip 140 of (A) of FIG. 35 is provided in the same structure as the tip of FIG. 34.

As shown in a planar development view of (B) of FIG. 35, the end edge 195A of the first electrode 195 and the end edges 196A of the second electrodes 196 face each other to be parallel to each other. Thus, the resistance value of the planar resistance wiring 190 between the end edge 195A of the first electrode 195 and the end edges 196A of the second electrodes 196 becomes uniform overall, and currents are likely to flow in the vicinity of the nose 140A. Aa a result, a detection sensitivity with respect to an abnormality occurring in the vicinity of the nose 140A (a defacement or a defect of the planar resistance wiring 190) is stabled.

Hereinafter, another example of the tip (cutting bite) 140 for cutting in which the conduction paths 92 being a sensor are formed directly will be described with reference to FIG. 36. Further, the description of the structure the same as or similar to that of the tip 140 of FIG. 34 will be omitted, and differences therebetween will be described principally.

As shown in (A) of FIG. 36, in the present example, an end edge 196A of a second electrode 196 arranged in the second planar region 164 has an angle with respect to both the boundary 155A of the second surface 154 and the first surface 152 and the boundary 155C of the second surface 154 and the third surface 156. In further detail, when the end edge 196A extends from the vicinity of the boundary 155C in a direction away from the nose 140A, the end edge 196A is arranged in an inclined state to retreat from the boundary 155A when retreating from the nose 140A.

Likewise, an end edge 196A of a second electrode 196 disposed in the third planar region 166 has an angle with respect to both the boundary 155B of the third surface 156 and the first surface 152 and the boundary 155C of the second surface 154 and the third surface 156. In further detail, when the end edge 196A extends from the vicinity of the boundary 155C in a direction away from the nose 140A, the end edge 196A is arranged in an inclined state to retreat from the boundary 155B when retreating from the nose 140A.

Further, a total length of the end edges 196A of the second electrodes 196 (that is, a sum of a length of the end edge 196A of the second electrode 196 disposed in the second planar region 164 and a length of the end edge 196A of the second electrode 196 disposed in the third planar region 166) is substantially equal to a length of the end edge 195A of the first electrode 195.

As a result, as shown in a planar development view of (B) of FIG. 36, the end edge 195A of the first electrode 195 and the end edges 196A of the second electrodes 196 face each other to be parallel to each other. In addition, the end edge 195A of the first electrode 195 and the end edges 196A of the second electrodes 196 are parallel to each other when an isosceles triangle including the nose 140A on the first surface 152 as a vertical angle (angle A) is defined, or when a basic angle B of the isosceles triangle is equal to an angle Z formed by the end edges 196A and the boundaries 155A and 155B. Thus, the distance of the planar resistance wiring 190 between the end edge 195A of the first electrode 195 and the end edges 196A of the second electrodes 196 is uniform along the end edges, and a resistance value between the electrodes becomes substantially uniform overall. Further, in the planar resistance wiring 190 present between the first electrode 195 and the second electrodes 196, cross-sectional areas S1, S2, and S3 of cross sections extending in parallel to the end edge 195A of the first electrode 195 are likely to be approximate to each other at any location. In detail, a difference between a maximum cross-sectional area and a minimum cross-sectional area may be set to be less than or equal to 30%. As a result, the currents spread all over the planar resistance wiring 190 such that the currents are likely to flow in the vicinity of the nose 140A, whereby a detection sensitivity with respect to an abnormality in the vicinity of the nose 140A (a defacement or a defect of the planar resistance wiring 190) is stabled. Further, predetermined regions F and G being parallel to each other and completely facing each other on the planar development view or in the first electrode 195 and the second electrodes 196 are in a range in which a distance therebetween is a shortest path. Thus, the distance between the predetermined regions F and G may need to be long.

Hereinafter, an example of the tip (cutting bite) 140 for cutting in which the conduction paths 92 being a sensor are formed directly will be described with reference to FIG. 37. Further, a structure the same as or similar to that of the tip 140 of FIG. 36 will be omitted, and differences therebetween will be described principally.

As shown in (A) of FIG. 37, in the present example, a shape of the second planar region 164 in the planar resistance wiring 190 is approximate to a shape of L (or a shape of V) by the boundary 155A and the boundary 155C. That is, in a contour shape of the second planar region 164, a contour of a remaining portion except for 2 edges matching the boundary 155A and the boundary 155C corresponds to a shape dent toward the nose 140A side.

As described above, a shape of the third planar region 166 in the planar resistance wiring 190 is approximate to a shape of L (or a shape of V) by the boundary 155B and the boundary 155C. That is, in a contour shape of the third planar region 166, a contour of a remaining portion except for 2 edges matching the boundary 155B and the boundary 155C corresponds to a shape dent toward the nose 140A side.

When the dent shapes are adopted, a constricted area 190A may be formed in a vicinity of the nose 140A, in the planar resistance wiring 190 present between the first electrode 195 and the second electrodes 196, as shown in a planar development view of (B) of FIG. 37. In the planar resistance wiring 190 present between the first electrode 195 and the second electrodes 196, cross-sectional areas S1, S2, and S3 of cross sections extending in parallel to the end edge 195A of the first electrode 195 are likely to be approximate to each other at any location. In detail, a difference between a maximum cross-sectional area and a minimum cross-sectional area may be set to be less than or equal to 10%.

Further, by setting an amount of constriction of the constricted area 190A more greatly, the cross-sectional area SA passing through the nose 140A may be set to be less than a cross-sectional area of the remaining portion. In doing so, currents flowing in the planar resistance wiring 190 are concentrated in the constricted area 190A of the nose 140A, and thus a resistance value of this portion increases, and as a result, an abnormality such as a defacement or a defect of the planar resistance wiring 190 in the vicinity of the nose 140A may be detected with high sensitivity.

Further, as in a tip 140 of FIG. 38, the second electrodes 196 may be disposed as close to the nose 140A as possible. In doing so, currents are likely to flow in the nose 140A or the planar resistance wiring 190 in the vicinity thereof, whereby a detection sensitivity with respect to an abnormality of the nose 140A or the vicinity thereof may increase.

Further, as in a tip 140 of FIG. 39 which is a modified example of FIG. 38, the end edge 195A of the first electrode 195 may be formed in a shape of V with an interval from the nose 140A. In doing so, a portion (a V-shaped protruding end) of the first electrode 195 is a nearest portion 195X which is locally nearest the nose 140A. Further, the end edges 196A of the second electrodes 196 are separated from the boundaries 155A and 155B as retreating from the nose 140A. Thus, a vicinity region of the nose 140A at the end edges 196A is a proximate portion 196X which is locally proximate to the nearest portion 195X of the first electrode 195. When a voltage is applied between the first electrode 195 and the second electrodes 196, currents may aggressively flow along a shortest route H of the nearest portion 195X of the first electrode 195 and the proximate portion 196X of the second electrodes 196, whereby the detection sensitivity with respect to the abnormality of the nose 140A or the vicinity thereof may increase locally.

Further, a development view of (B) of FIG. 39 illustrates an example in which the end edge 196A of the second electrode 196 disposed in the second planar region 164 and the end edge 196A of the second electrode 196 disposed in the third planar region 166 are parallel to each other (that is, in a linear shape as an integral body). However, the embodiment is not limited thereto.

For example, as in a tip 140 of FIG. 40, the end edge 196A disposed in the second planar region 164 and the end edge 196A disposed in the third planar region 166 may be non-parallel to each other. In detail, in a planar development view, by setting both the end edges 196A to be further separated from the boundaries 155A and 155B as retreating from the nose 140A, the two end edges 196A may be in a shape of inverted V. In this example, an angle Z formed by the end edges 196A and the boundaries 155A and 155B increases, with respect to a basic angle B of an isosceles triangle including the nose 140A on the first surface 152 as a vertical angle.

In doing so, the proximate portion 196X in the vicinity of the nose 140A in the second electrodes 196 may be disposed aggressively proximate to the first electrode 195, when compared with other regions. As a result, the nearest portion 195X of the first electrode 195 and the proximate portion 196X of the second electrodes 196 are proximate to each other, and currents aggressively flow along the shortest route H. Thus, the detection sensitivity with respect to the abnormality of the nose 140A or the vicinity thereof may increase locally.

Further, various shapes may be adopted for the shape of V of the first electrode 195 as shown in FIGS. 39 and 41. For example, the first electrode 195 of the tip 140 of FIG. 41 includes two-arm regions 195P and 195Q extending along the boundaries 155A and 155B with respect to the nearest portion 195X as a boundary, and the two-arm regions 195P and 195Q are curved convexly in a direction away from the same boundaries 155A and 155B. In doing so, an angle of the protruding end of the nearest portion 195X may be set to be a more acute angle. Of course, the end edge 196A disposed in the second planar region 164 and the end edge 196A disposed in the third planar region 166 may also be curved convexly in a direction away from the boundaries 155A and 155B, similarly.

Hereinafter, various modified examples of the conduction path 90 formed in the tip 140 will be described with reference to FIG. 42. Further, for ease of illustration and description, an example in which the boundaries 155A, 155B, and 155C are formed to be orthogonal to each other at the corner 150 of the tip 150 is provided. However, the embodiment is not limited thereto.

In a tip 140 of (A) of FIG. 42, the first planar region 162 is L-shaped by the boundaries 155A and 155B, the second planar region 164 is L-shaped by the boundaries 155A and 155C, and the third planar region 166 is L-shaped by the boundaries 155B and 155C.

Describing from another aspect, the planar resistance wiring 190 includes a first belt-shaped region 172, a second belt-shaped region 174, and a third belt-shaped region 176 extending in 3 directions to cover the boundaries 155A, 155B, and 155C, along the boundaries 155A, 155B, and 155C, respectively, with the nose 140A as a starting point. A first electrode 192, a second electrode 194, and a third electrode 196 are arranged at distal ends, on a side opposite to the nose 140A, in the belt-shaped regions 172, 174, and 176.

For example, when a voltage is applied between the first electrode 192 and the second electrode 194, a defacement or a defect occurring in the first belt-shaped region 172 and/or the second belt-shaped region 174 may be detected based on a change in the resistance value. Further, when a voltage is applied between the second electrode 194 and the third electrode 196, a defacement or a defect occurring in the second belt-shaped region 174 and/or the third belt-shaped region 176 may be detected based on a change in the resistance value. Further, when a voltage is applied between the third electrode 196 and the first electrode 192, a defacement or a defect occurring in the third belt-shaped region 176 and/or the first belt-shaped region 172 may be detected based on a change in the resistance value. By combining these three types of voltage application examples, it is also possible to identify a location at which a defacement or a defect occurs.

Further, (A) of FIG. 42 illustrates an example in which the planar resistance wiring 190 includes first through third belt-shaped regions 172, 174, and 176 extending in 3 directions. However, as in a tip 140 of (B) of FIG. 42, only the first belt-shaped region 172 and the second belt-shaped region 174 extending in 2 directions may be provided.

Further, in a tip 140 of (C) of FIG. 42, the first planar region 162 of the planar resistance wiring 190 is L-shaped by the boundaries 155A and 155B, the second planar region 164 is L-shaped by the boundaries 155A and 155C, and the third planar region 166 is L-shaped by the boundaries 155B and 155C.

The first electrode 192 is disposed along an L-shaped edge on a side opposite to the boundaries 155A and 155B in the first planar region 162. The second electrode 194 is disposed along an L-shaped edge on a side opposite to the boundaries 155A and 155C in the second planar region 164. The third electrode 196 is disposed along an L-shaped edge on a side opposite to the boundaries 155B and 155C in the third planar region 166.

For example, when a voltage is applied between the first electrode 192 and the second electrode 194, a defacement or a defect occurring in the first planar region 162 and/or the second planar region 164 may be detected based on a change in the resistance value. Further, when a voltage is applied between the second electrode 194 and the third electrode 196, a defacement or a defect occurring in the second planar region 164 and/or the third planar region 166 may be detected based on a change in the resistance value. Further, when a voltage is applied between the third electrode 196 and the first electrode 192, a defacement or a defect occurring in the third planar region 166 and/or the first planar region 162 may be detected based on a change in the resistance value. By combining these three types of voltage application examples, it is also possible to identify a location at which a defacement or a defect occurs.

Further, (C) of FIG. 42 illustrates an example in which all the first through third planar region 162, 164, and 166 are L-shaped. However, as in a tip 140 of (D) of FIG. 42, the second planar region 164 may be belt-shaped (I-shaped/square-shaped) only along the boundary 155A, and the third planar region 166 may be belt-shaped (I-shaped/square-shaped) along the boundary 155B.

In a tip 140 of (E) of FIG. 42, the planar resistance wiring 190 includes the first belt-shaped region 172, the second belt-shaped region 174, and the third belt-shaped region 176 extending in 3 directions to cover the boundaries 155A, 155B, and 155C, along the boundaries 155A, 155B, and 155C, respectively, with the nose 140A as a starting point. The first electrode 192, the second electrode 194, and the third electrode 196 are arranged at distal ends, on a side opposite to the nose 140A, in the belt-shaped regions 172, 174, and 176.

In particular, the belt-shaped regions 172, 174, and 176 have a width decreasing as being closer to the nose 140A. In doing so, the constricted area 190A is formed in the vicinity of the nose 140A, and thus a current density may increase, and a detection sensitivity may increase.

In a tip 140 of (F) of FIG. 42, the first planar region 162 of the planar resistance wiring 190 is belt-shaped to extend in a direction to have a distance from both the boundary 155A and the boundary 155B, in detail, on a bisector of a corner formed by the boundary 155A and the boundary 155B. Similarly, the second planar region 164 is belt-shaped to extend in a direction to have a distance from both the boundary 155A and the boundary 155C, in detail, on a bisector of a corner formed by the boundary 155A and the boundary 155C. Similarly, the third planar region 166 is belt-shaped to extend in a direction to have a distance from both the boundary 155B and the boundary 155C, in detail, on a bisector of a corner formed by the boundary 155B and the boundary 155C.

Further, the first electrode 192, the second electrode 194, and the third electrode 196 are arranged at distal ends, on a side opposite to the nose 140A, in the planar regions 162, 164, and 166.

For example, when a voltage is applied between the first electrode 192 and the second electrode 194, a defacement or a defect occurring in the first planar region 162 and/or the second planar region 164 may be detected based on a change in the resistance value. Further, when a voltage is applied between the second electrode 194 and the third electrode 196, a defacement or a defect occurring in the second planar region 164 and/or the third planar region 166 may be detected based on a change in the resistance value. Further, when a voltage is applied between the third electrode 196 and the first electrode 192, a defacement or a defect occurring in the third planar region 166 and/or the first planar region 162 may be detected based on a change in the resistance value. In the present example, a defacement or a defect particularly in the vicinity of the nose 140A may be detected intensively, and by combining these three types of voltage application examples, it is possible to identify a location of such an abnormality especially in the vicinity of the nose 140A.

Hereinafter, a scheme of forming the conduction paths 92 in the tip 140 will be described with reference to FIG. 43. First, as shown in (A) of FIG. 43, a groove 180 is formed in advance by cutting at a location at which a wiring being a good conductor is to be formed. Further, if a parent material of the tip 140 has a conductivity, insulating coating is performed after the groove 180 is formed, whereby the entire surface thereof is insulated. Then, the groove 180 is filled or coated with a good conductor material. Further, when film coating is performed by sputtering, portions other than the groove 180 are also coated at the same time, and thus a film of the good conductor attached to the portions other than the groove 180 is removed. As a result, as shown in (B) of FIG. 43, a good conductor wiring is formed only in the groove 180. This good conductor wiring corresponds to the first electrode 192, the second electrode 194, and external junctions 192B and 194B.

After that, as shown in (C) of FIG. 43, masking is performed as necessary to overlap the good conductor wiring, and the planar resistance wiring 190 is formed by coating such as sputtering. Further, the required planar resistance wiring 190 may also be formed by removing, for example, cutting unnecessary portions, rather than performing masking. As a result, the tip 140 including the conduction paths 92 for a sensor is completed.

Further, as shown in FIG. 44, to measure a change in the temperature of the tip 140, a thermocouple may be formed directly on the surface of the tip 140. For example, one end of the first partial conduction path 92X having a first resistivity value (or, a work function value) may be connected to one end of the second partial conduction path 92Y having a second resistivity value (or, a work function value), and a junction therebetween is referred to as a hot function T1. Further, the other end of the first partial conduction path 92X and the other end of the second partial conduction path 92Y are referred to as compensation junctions H2 and H2, respectively. By connecting compensation conducting wires 93X and 93Y externally to the compensation junctions H2 and H2, and connecting the compensation conducting wire 93X and 93Y to a measurer 800, the temperature of the hot junction T1 may be measured. Further, one pair of endpoints connected to the measurer 800 in the compensation conducting wires 93X and 93Y correspond to reference temperature junctions (cold junctions) T2 and T2, and the measurer 800 may measure an electromotive force between the reference temperature junctions T2 and T2 and actual temperatures of the reference temperature junctions T2 and T2, thereby calculating an absolute temperature of the hot junction T1.

The embodiments of the present invention are not limited to the described embodiments. Instead, various changes may be made to these embodiments without departing from the principles and spirit of the invention.

### Description of Reference Numerals

- 1: Cutting system
- 10: Cutting device
- 30: Cutting head
- 32: Parent material
- 40: Drill
- 40: This drill
- 42: Shank portion
- 44: Body portion
- 46: Recess
- 52: Battery
- 91: Electrically insulating layer
- 92: Conduction path
- 100: Information collection device
- 140: Chip
- 192: Sensor
- 201: Conduction circuit
- 202: Holder
- 203: Cut part
- 204: Conduction circuit
- 204: 2D-matrix conduction circuit
- 204: Conduction circuit
- 205: Conduction path

## Claims

1. A cutting head of a conduction path portion, the cutting head being a cutting tool for cutting an object or a holder for retaining the cutting tool, wherein a conduction path for measuring a change in a member of the cutting tool or the holder is formed directly or indirectly in the entirety or a portion of the member.

2. The cutting head of claim 1, wherein the member includes a recess in which the conduction path is formed.

3. The cutting head of claim 2, wherein the recess is configured to define a wiring pattern of the conduction path.

4. The cutting head of claim 1, wherein the entire series of conduction path patterns are provided in a series of groove-shaped recesses corresponding to the series of conduction path patterns.

5. The cutting head of one of claims 1 to 4, wherein the conduction path is formed to reciprocate along a predetermined direction.

6. The cutting head of one of claims 1 to 5, wherein a plurality of conduction paths is formed independently.

7. The cutting head of one of claims 1 to 6, comprising:
a first conduction path formed to reciprocate in a first direction, and
a second conduction path formed to reciprocate in a second direction perpendicular to the first direction.

8. The cutting head of claim 7, wherein the first conduction path and the second conduction path are arranged in parallel.

9. The cutting head of one of claims 1 to 8, wherein a plurality of conduction paths is formed in a shape of matrices.

10. The cutting head of one of claims 1 to 9, wherein the conduction path is configured to include at least two conductive portions with different electric resistance values and/or electric resistivity values.

11. The cutting head of claim 10, wherein one of the conductive portions of the conduction path is an electrically good conductor, and the other one of the conductive portions is an electrical resistor.

12. The cutting head of one of claims 1 to 11, wherein the conduction path is configured to include a first conductive material portion and a second conductive material portion formed of different materials.

13. The cutting head of one of claims 1 to 12, wherein the conduction path is configured by providing a series of portions of different electric resistivity values and/or conductive material portions.

14. The cutting head of one of claims 1 to 13, wherein a plurality of conduction paths is stacked.

15. The cutting head of one of claims 1 to 14, wherein the conduction path comprises:
a planar resistance wiring formed in a shape of a plane, and
at least one pair of electrodes connected to the planar resistance wiring.

16. The cutting head of claim 15, wherein the conduction path comprises:
a plurality of conductive portions disposed with intervals therebetween in a surface direction of the planar resistance wiring.

17. The cutting head of one of claims 1 to 16, wherein the member has a columnar or cylindrical surface,
wherein the conduction path is formed on the surface.

18. The cutting head of one of claims 1 to 17, wherein the conduction path is formed in an axial direction and/or a circumferential direction of the surface.

19. The cutting head of one of claims 1 to 18, wherein the cutting tool or the holder is formed of metal,
wherein the conduction path is formed through an electrically insulating layer on a surface of the cutting tool or the holder.

20. The cutting head of one of claims 1 to 19, wherein the conduction path is electrically connected to a near field communication (NFC) tag.

21. The cutting head of one of claims 1 to 20, wherein the conduction path is electrically connected to an NFC tag and a feeder.

22. The cutting head of one of claims 1 to 21, wherein the conduction path is deformed together with the cutting tool or the holder to output a change in a stress of the cutting tool or the holder.

23. The cutting head of one of claims 1 to 22, wherein the conduction path is deformed together with the cutting tool or the holder to detect at least one of a vibration, a travel distance, an acceleration, and a temperature of the cutting tool or the holder.

24. The cutting head of one of claims 1 to 23, wherein the conduction path is formed on a surface and/or a rear surface of the cutting tool or the holder.

25. The cutting head of one of claims 1 to 24, wherein the conduction path is formed on a circumferential surface of the cutting tool or the holder.

26. The cutting head of one of claims 1 to 25, wherein a plurality of conduction paths is connected to each other in a shape of matrices.

27. A cutting system, comprising:
the cutting head of the conduction path portion of one of claims 1 to 26, and
a driver configured to relatively move the object and the cutting tool.

28. The cutting system of claim 27, further comprising:
a calculator configured to receive a detected signal of the conduction path.

29. The cutting system of claim 28, wherein the calculator is configured to control the driver based on the detected signal.

30. The cutting system of claim 28 or 29, wherein the calculator comprises:
a replacement determiner configured to determine whether a replacement of the cutting tool is necessary or unnecessary based on the detected signal.

31. The cutting system of claim 30, wherein the calculator comprises:
an order instructor configured to generate order information of the cutting tool, when the replacement determiner determines that a replacement is necessary.

32. The cutting system of claim 31, wherein the calculator comprises:
a tool identifier configured to receive identification information of the cutting tool,
wherein the order instructor is configured to incorporate the identification information received by the tool identifier into the order information.

33. The cutting system of one of claims 28 to 32, wherein the calculator comprises:
a usage determiner configured to determine whether a usage circumstance of the cutting tool is adequate/inadequate based on the detected signal.

34. A cutting system, comprising:
a cutting tool configured to cut an object,
a tool holder configured to retain the cutting tool,
a driver configured to relatively move the object and the cutting tool, and
a state detector disposed in the cutting tool or the tool holder, the state detector configured to detect at least one of a vibration, a torsion, a movement, an acceleration, and a temperature.

35. A cutting system, comprising:
a cutting tool configured to cut an object,
a driver configured to relatively move the object and the cutting tool, and
a state detector disposed in the cutting tool, the state detector configured to detect at least one of a vibration, a torsion, a movement, an acceleration, and a temperature.

36. The cutting system of claim 34 or 35, further comprising:
a calculator configured to receive a detected signal of the state detector.

37. The cutting system of claim 36, wherein the calculator is configured to control the driver based on the detected signal.

38. The cutting system of claim 36 or 37, wherein the calculator comprises:
a replacement determiner configured to determine whether a replacement of the cutting tool is necessary or unnecessary based on the detected signal.

39. The cutting system of claim 38, wherein the calculator comprises:
an order instructor configured to generate order information of the cutting tool when the replacement determiner determines that a replacement is necessary.

40. The cutting system of claim 39, wherein the calculator comprises:
a tool identifier configured to receive identification information of the cutting tool,
wherein the order instructor is configured to incorporate the identification information received by the tool identifier into the order information.

41. The cutting system of one of claims 36 to 40, wherein the calculator comprises:
a usage determiner configured to determine whether a usage circumstance of the cutting tool is adequate/inadequate based on the detected signal.

42. A cutting bite of a conduction path portion, the cutting bite being a cutting bite for cutting an object, the cutting bite in which a conduction path for measuring a change in a nose of the cutting bite and/or a peripheral portion of the nose is formed directly in a range including the nose,
wherein the conduction path comprises:
a planar resistance wiring formed in a shape of a plane, and
first and second electrodes arranged with intervals therebetween with respect to the planar resistance wiring.

43. The cutting bite of claim 42, wherein the nose is formed at a vertex of a corner provided in a triangular pyramidal shape, and
the planar resistance wiring is formed to cover three planes constituting the corner.

44. The cutting bite of claim 42 or 43, wherein the planar resistance wiring comprises:
a first planar region configured to cover a first surface forming the triangular pyramidal shape of the corner,
a second planar region configured to cover a second surface forming the triangular pyramidal shape of the corner, and
a third planar region configured to cover a third surface forming the triangular pyramidal shape of the corner,
wherein the first electrode is disposed in the first planar region, and
the second electrode is disposed in the second planar region and/or the third planar region.

45. The cutting bite of claim 44, wherein the second electrode is disposed in both of the second planar region and the third planar region.

46. The cutting bite of claim 44 or 45, wherein the first electrode disposed in the first planar region has a linear end edge facing the second electrode, and
the end edge has an angle with respect to both a boundary of the first surface and the second surface and a boundary of the first surface and the third surface.

47. The cutting bite of one of claims 44 to 46, wherein the second electrode disposed in the second planar region has a linear end edge facing the first electrode, and
the end edge of the second electrode disposed in the second planar region has an angle with respect to both a boundary of the second surface and the first surface and a boundary between the second surface and the third surface.

48. The cutting bite of claim 47, wherein the end edge of the second electrode disposed in the second planar region is configured to retreat from the boundary of the second surface and the first surface when retreating from the nose.

49. The cutting bite of one of claims 44 to 48, wherein the second electrode disposed in the third planar region has a linear end edge facing the first electrode, and
the end edge of the second electrode disposed in the third planar region has an angle with respect to both a boundary between the third surface and the first surface and a boundary between the third surface and the second surface.

50. The cutting bite of claim 49, wherein the end edge of the second electrode disposed in the second planar region is configured to retreat from the boundary of the third surface and the first surface when retreating from the nose.

51. The cutting bite of claim 44 or 45, wherein the first electrode disposed in the first planar region has a linear end edge facing the second electrode, and
the end edge is substantially parallel to a boundary of the first surface and the second surface and/or a boundary of the first surface and the third surface.

52. The cutting bite of one of claims 44, 45, and 51, wherein the second electrode disposed in the second planar region has a linear end edge facing the first electrode, and
the end edge of the second electrode disposed in the second planar region is substantially parallel to a boundary of the second surface and the first surface.

53. The cutting bite of one of claims 44, 45, 51, and 52, wherein the second electrode disposed in the third planar region has a linear end edge facing the first electrode, and
the end edge of the second electrode disposed in the third planar region is substantially parallel to a boundary of the third surface and the first surface.

54. The cutting bite of one of claims 43 to 53, wherein when assuming a planarly unfolded state of a surface of the corner of the triangular pyramidal shape, the first electrode and the second electrode respectively include linear end edges facing each other, and the end edge of the first electrode and the end edge of the second electrode are substantially parallel.

55. The cutting bite of claim 54, wherein the end edge of the first electrode and the end edge of the second electrode have substantially the same length.

56. The cutting bite of one of claims 43 to 55, wherein when assuming a planarly unfolded state of a surface of the corner of the triangular pyramidal shape, the first electrode and the second electrode respectively include linear end edges facing each other, and
a width of the planar resistance wiring present between the end edge of the first electrode and the end edge of the second electrode is set to be less than or equal to a length of the end edge of the first electrode and/or a length of the end edge of the second electrode.
